# EUROPEAN PATENT APPLICATION

(11) **EP 4 768 553 A1**
(43) Date of publication of application: **01.07.2026**
(21) Application number: 24855638.3
(22) Date of filing: 12.08.2024
(51) Int. Cl.: C09K 19/44, G02F 1/1333

(54) **CHOLESTERIC LIQUID CRYSTAL COMPOSITION, AND LIQUID CRYSTAL DISPLAY DEVICE COMPRISING SAME AND USE THEREOF**

(30) Priority: 24.08.2023 CN 202311080360
(71) Applicant: Jiangsu Hecheng Display Technology Co., Ltd., Nanjing, Jiangsu 210000 (CN)
(72) Inventor: YANG, Yafei, Nanjing, Jiangsu 210000 (CN); DING, Wenquan, Nanjing, Jiangsu 210000 (CN); WANG, Panpan, Nanjing, Jiangsu 210000 (CN); ZHOU, Zhenting, Nanjing, Jiangsu 210000 (CN); MIN, Xiaoxue, Nanjing, Jiangsu 210000 (CN); WANG, Lina, Nanjing, Jiangsu 210000 (CN); HE, Di, Nanjing, Jiangsu 210000 (CN); JIANG, Li, Nanjing, Jiangsu 210000 (CN)
(74) Representative: Serjeants LLP
(86) International application number: PCT/CN2024/111423
(87) International publication number: WO 2025/039912

(57) **Abstract**

A cholesteric liquid crystal composition, and a liquid crystal display device comprising the same and the use thereof. The cholesteric liquid crystal composition comprises at least one liquid crystal composition A, at least one chiral agent and at least one dye, wherein the liquid crystal composition A comprises at least one compound of general formula I and at least one compound of general formula II. The cholesteric liquid crystal composition has a higher clearing point, a better contrast and a smaller Δλmax while maintaining a lower P-state voltage. That is, the cholesteric liquid crystal composition has a smaller change in the side viewing angle (45°) reflection wavelength.

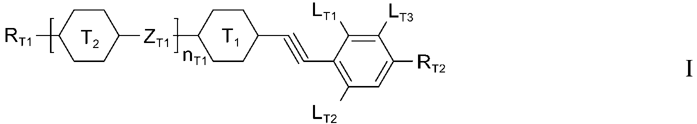

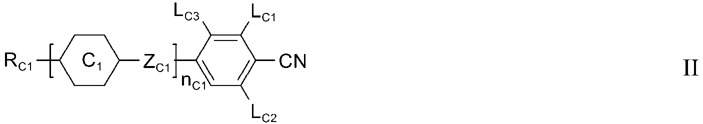

## Description

### TECHNICAL FIELD

The present invention relates to a liquid crystal composition, specifically to a cholesteric liquid crystal composition, and a liquid crystal display device comprising the liquid crystal composition.

### BACKGROUND ART

With the advancement of display technology, lightweight, energy-efficient and environmentally friendly display devices have become mainstream, with bistable liquid crystal display devices drawing particular attention. Among them, cholesteric liquid crystal display (ChLCD) stands out due to its advantages such as high brightness, high contrast, power efficiency, excellent memory retention, wide viewing angles, and flicker-free operation, as well as its ability to maintain two distinct states (*i.e.,* bright state and dark state) when an electric field is removed. Therefore, cholesteric liquid crystal display (ChLCD) becomes a development focus of bistable displays, and is widely used in applications requiring low power consumption, such as e-readers, electronic tags, display panels, and privacy screens.

Cholesteric liquid crystal is a type of liquid crystal molecule with Bragg reflection and bistable characteristics. It can reflect incident light having a wavelength comparable to its helical pitch and the same optical rotation. Under the influence of an electric field, it can switch to either the planar state (P-state) or the focal conic state (Fc-state). Both the P-state and Fc-state can be maintained even after the voltage is removed. Therefore, the bistable stability is also referred to as memory effect. In a cholesteric liquid crystal display device, when the cholesteric liquid crystal is in the planar state, it reflects light with a specific wavelength (typically the specific wavelength corresponding to the highest reflectance in the reflection spectrum, *i.e.,* λmax), resulting in a bright state display on the screen. When the cholesteric liquid crystal is in the focal conic state, it scatters light, which is then absorbed by the display's back panel, leading to a dark state display on the screen.

Cholesteric liquid crystal display devices exhibit specific selectivity dependent on the chiral pitch for reflection wavelengths when the cholesteric phase is perpendicular to the substrate. The reflection wavelength (λ) is determined by the product of the average refractive index (n) of the liquid crystal composition and the chiral pitch (P). Therefore, under conditions where the refractive index of the liquid crystal composition remains constant, the desired selective reflection wavelength can be achieved by adjusting the concentration of chiral compounds and modifying the chiral pitch. In this scenario, the half-value width (Δλ) of the selected reflected light is proportional to the product of the liquid crystal's refractive index anisotropy (Δn = ne - no) and the chiral pitch. However, in order to achieve bright display performance, a certain level of half-value width is required, necessitating the use of liquid crystal compositions with a high Δn. In such cases, the average refractive index of the liquid crystal composition also increases, so further addition of chiral agents is needed to shorten the chiral pitch and achieve the desired λ. However, excessive addition of chiral compounds can lead to issues such as deterioration of the liquid crystal temperature range and increased viscosity of the host liquid crystal. Thus, for the design of cholesteric liquid crystals, a chiral compound having a high liquid crystal torsional force that induces chiral pitch while having minimal impact on the host liquid crystal is required. Additionally, the host liquid crystal composition is required to exhibit excellent compatibility with such chiral compounds and high Δn. Furthermore, the liquid crystal display element is required to possess sufficiently large dielectric anisotropy (Δε) for low-voltage operation and maintain good storage stability, such as nonoccurrence of precipitation at low temperatures.

The chiral pitch length of cholesteric liquid crystal depends on the type or concentration of chiral compound, and can be represented by P=1/(HTP×c). Here, c is the concentration of chiral compound in the cholesteric liquid crystal composition, and HTP is the force exerted by the chiral compound to twist the liquid crystal composition, known as Helical Twisting Power (HTP).

The existing cholesteric liquid crystals exhibit a significant viewing angle effect at the planar reflection wavelength, where the side viewing view reflection wavelength is significantly smaller than the positive viewing view reflection wavelength, which is manifested as a significant difference in the color of the side viewing view reflection compared to the positive viewing view, leading to a noticeable viewing angle color cast in the reflective devices made with cholesteric liquid crystals.

At the same time, the contrast of the existing cholesteric liquid crystal display devices is relatively low (CR = R_{planar state}/R_{focal conic state}). In the focal conic state, due to the high refractive index of the liquid crystal, the focal conic state liquid crystal display device appears foggy, resulting in a relatively high reflectivity of the focal conic state, significantly reducing the contrast of the cholesteric liquid crystal display devices.

How to solve the above problems is an urgent issue for the person skilled in the art.

### INVENTION SUMMRY

**Inventive objective:** the objective of the present invention is to provide a cholesteric liquid crystal composition. The cholesteric liquid crystal composition of the present invention has a high clearing point, a good contrast, and a smaller Δλ max, while maintaining a small P-state voltage. That is, the cholesteric liquid crystal composition of the present invention has a smaller change in the side viewing angle (45°) reflection wavelength.

**Technical solutions:** in order to achieve the above invention objective, the present invention provides a cholesteric liquid crystal composition, comprising at least one liquid crystal composition A, at least one chiral agent and at least one dye, wherein, the liquid crystal composition A comprises at least one compound of general formula I, and at least one compound of general formula II: 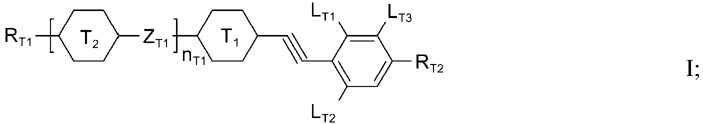 and 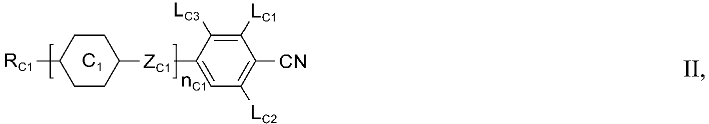 wherein,
R_{T1} and R_{T2} each independently represents -H, C₁₋₁₂ (for example, C₁, C₂, C₃, C₄, C₅, C₆, C₇, C₈, C₉, C₁₀, C₁₁ or C₁₂) linear alkyl, C₃₋₁₂ (for example, C₃, C₄, C₅, C₆, C₇, C₈, C₉, C₁₀, C₁₁ or C₁₂) branched alkyl, 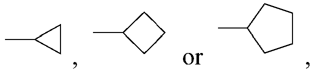 one or more than two nonadjacent -CH₂- in the C₁₋₁₂ linear alkyl and C₃₋₁₂ branched alkyl can each be independently replaced by -CH=CH-, -C≡C-, - O-, -CO-, -CO-O- or -O-CO-;
R_{C1} represents -H, C₁₋₁₂ (for example, C₁, C₂, C₃, C₄, C₅, C₆, C₇, C₈, C₉, C₁₀, C₁₁ or C₁₂) linear alkyl, C₃₋₁₂ (for example, C₃, C₄, C₅, C₆, C₇, C₈, C₉, C₁₀, C₁₁ or C₁₂) branched alkyl, 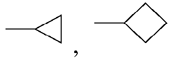 or 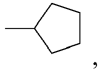 one or more than two nonadjacent -CH₂- in the C₁₋₁₂ linear alkyl and C₃₋₁₂ branched alkyl can each be independently replaced by -CH=CH-, -C=C-, -O-, -CO-, -CO-O- or -O-CO-, and one or more -H in the C₁₋₁₂ linear alkyl and C₃₋₁₂ branched alkyl can each be independently substituted by -F or -Cl;
ring 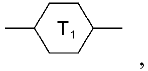 ring 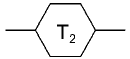 and ring 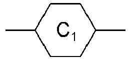 each independently represents 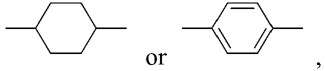 wherein one or more -CH₂- in 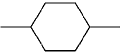 can be replaced by - O-, one or at most two single bonds can be replaced by double bond, wherein one or more -H in 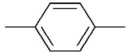 can each be independently substituted by -F, -Cl or C₁₋₃ (for example, C₁, C₂ or C₃) halogenated or unhalogenated alkyl or alkoxy, one or more -CH= in the rings can be replaced by - N=;
Z_{T1} and Z_{C1} each independently represents single bond, -CO-O-, -O-CO-, -CH₂O-, -OCH₂-, - CH=CH-, -C≡C-, -CH₂CH₂-, -CF₂CF₂-, -(CH₂)₄-, -CF₂O- or -OCF₂-;
L_{T1}, L_{T2}, L_{C1} and L_{C2} each independently represents -H, halo, C₁₋₃ (for example, C₁, C₂ or C₃) halogenated alkyl or halogenated alkoxy;
L_{T3} and L_{C3} each independently represents -H, C₁₋₃ (for example, C₁, C₂ or C₃) alkyl or alkoxy;
n_{T1} represents 0, 1 or 2, when n_{T1} = 2, ring 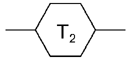 can be the same or different, Z_{T1} can be the same or different; and
n_{C1} represents 0, 1, 2 or 3, when n_{C1} = 2 or 3, ring 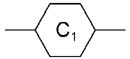 can be the same or different, Z_{C1} can be the same or different.

In some embodiments of the present invention, ring 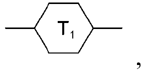 ring 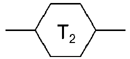 and ring 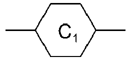 each independently represents

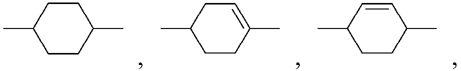

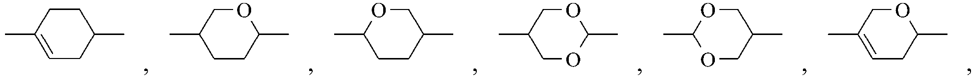

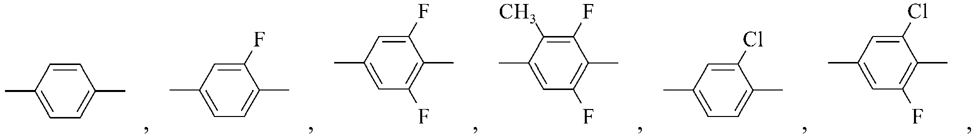

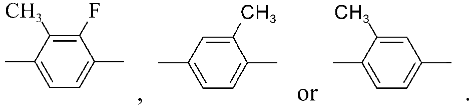

In some embodiments of the present invention, preferably, R_{T1} and R_{T2} each independently represents C₁₋₈ linear alkyl, C₁₋₈ linear alkoxy or C₂₋₈ linear alkenyl; further preferably, each independently represents C₁₋₅ linear alkyl, C₁₋₅ linear alkoxy or C₂₋₅ linear alkenyl.

In some embodiments of the present invention, the compound of general formula I is selected from a group consisting of the following compounds: 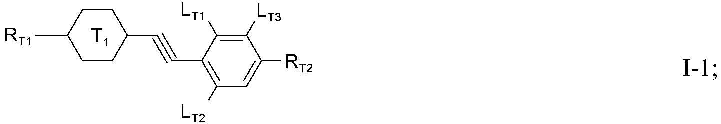 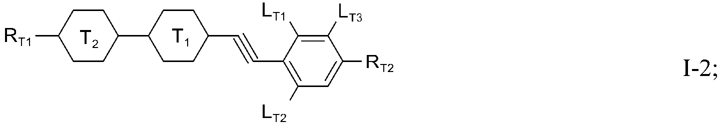 and 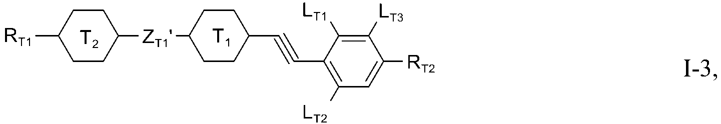 wherein,
Z_{T1}' represents -CO-O-, -O-CO-, -CH₂O-, -OCH₂-, -CH=CH-, -C=C-, -CH₂CH₂-, -CF₂CF₂- or - (CH₂)₄-;
L₁₁ and L_{T2} each independently represents -H, -F, -Cl, -CF₃ or -OCF₃; and
L_{T3} represents -H, -CH₃, -OCH₃, -CH₂CH₃ or -OCH₂CH₃.

In some embodiments of the present invention, Z₁₁' represents -CO-O-, -CH=CH- or -C≡C-.

In some embodiments of the present invention, the compound of general formula I is selected from a group consisting of the following compounds: 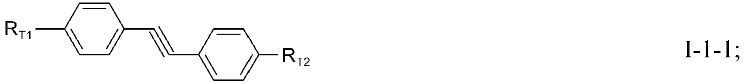 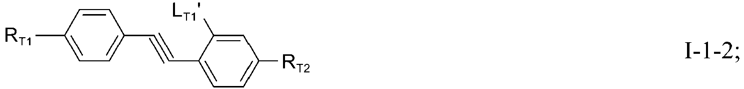 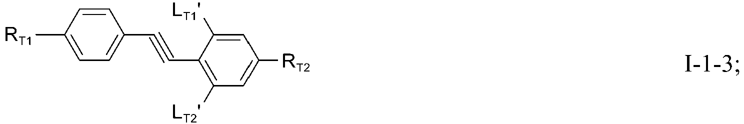 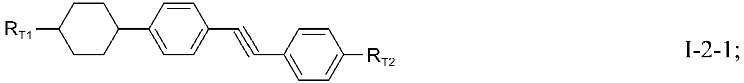 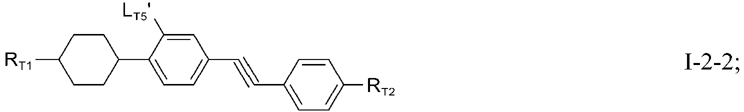 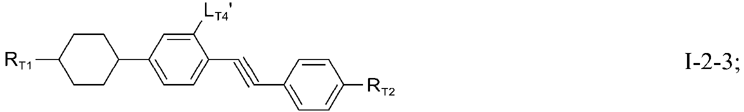 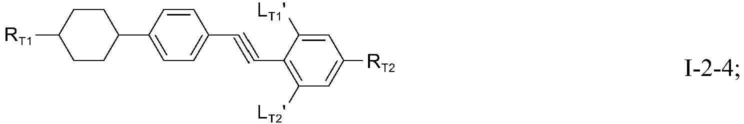 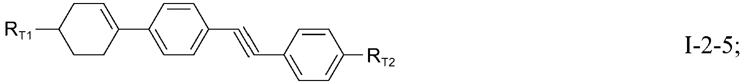 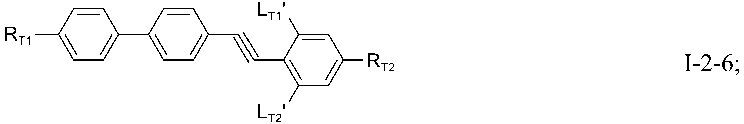 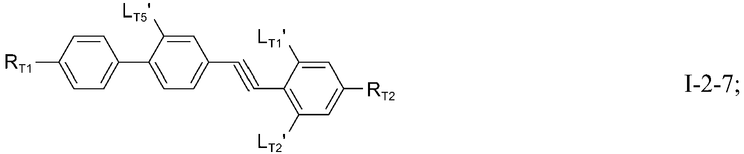 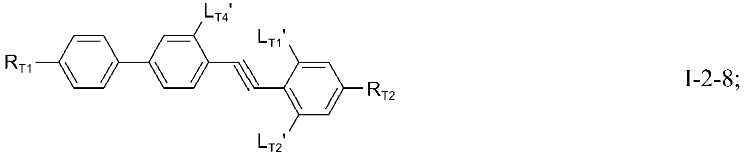 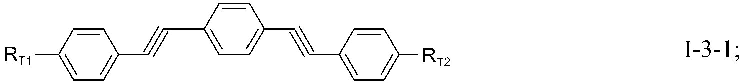 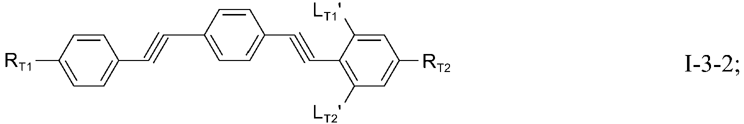 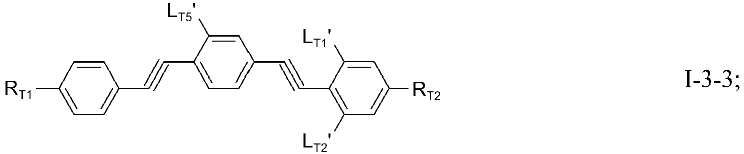 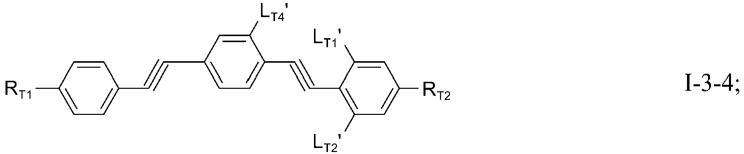 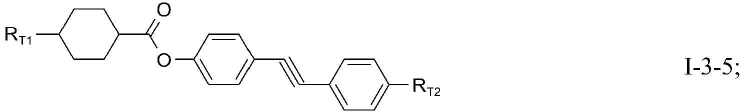 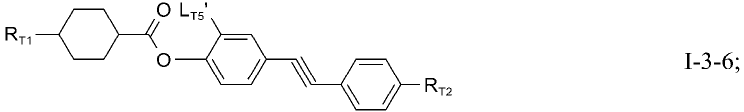 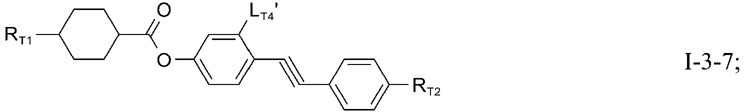 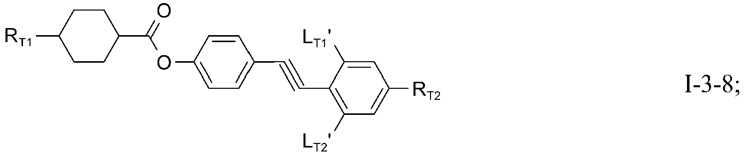 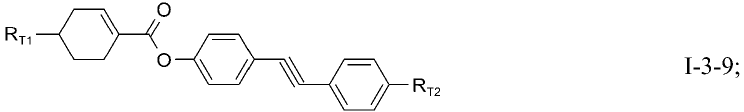 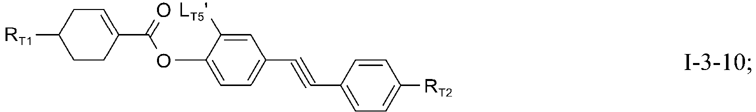 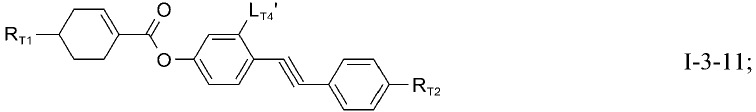 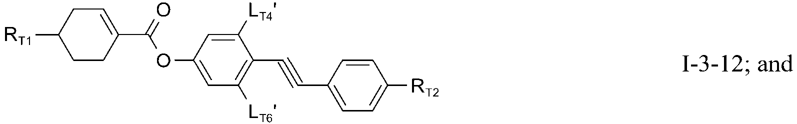 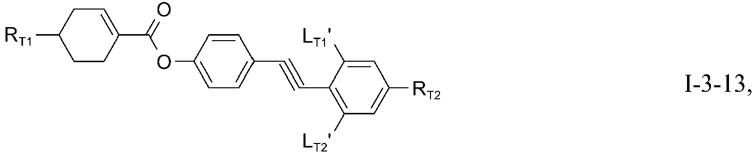 wherein,
L_{T1}' and L_{T2}' each independently represents -F, -Cl, -CF₃ or -OCF₃; and
L_{T4}', L_{T5}' and L_{T6}' each independently represents -F, -Cl, -CH₃ or -OCH₃.

In some embodiments of the present invention, in order to achieve a higher clearing point, a better contrast and a smaller △λmax, the compound of general formula I includes at least one (for example, two, three, four, five, or six, etc) compound selected from a group consisting of the compound of general formula 1-1-1, the compound of general formula 1-2-1 and the compound of general formula 1-3-1.

In some embodiments of the present invention, in order to achieve a higher clearing point, a better contrast and a smaller △λmax, the compound of general formula I preferably includes at least one (for example, two, three, four, five, or six, etc) compound selected from a group consisting of the compound of general formula 1-1-1-1, the compound of general formula 1-1-1-2, the compound of general formula 1-1-1-3, the compound of general formula 1-1-1-4, the compound of general formula 1-1-1-5, the compound of general formula 1-2-1-1, the compound of general formula 1-2-1-2, the compound of general formula 1-3-3-1, the compound of general formula I-3-3-2 and the compound of general formula 1-3-5: 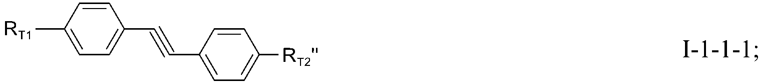 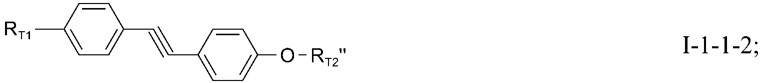 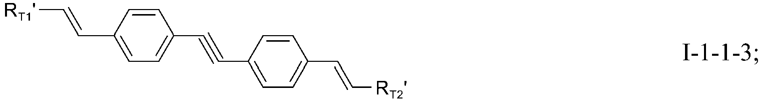 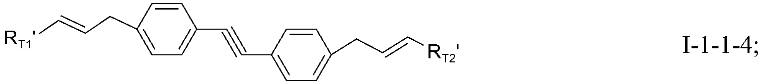 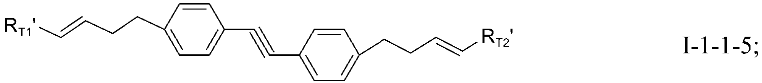 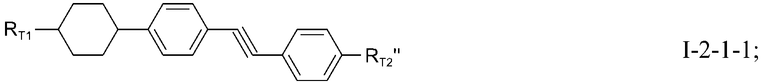 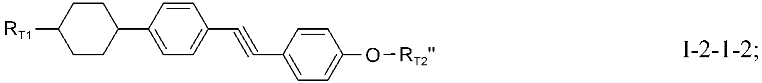 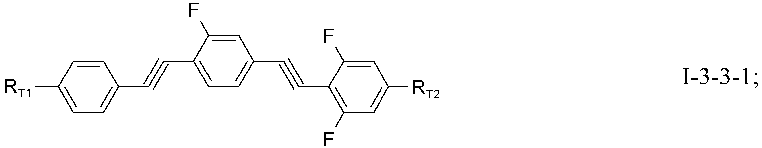 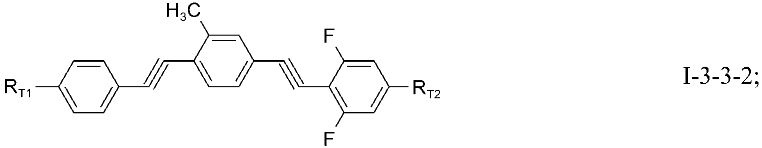 and 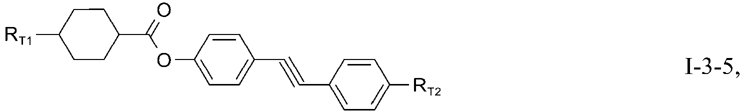 wherein,
R_{T1}' and R_{T2}' each independently represents -H or C₁₋₆ linear alkyl; and
R_{T2}" represents C₁₋₆ linear alkyl.

In the present invention, it is preferred to adjust the content of the compound of general formula I, such that the liquid crystal composition comprising the same has a higher clearing point, a better contrast and a smaller △λmax.

In some embodiments of the present invention, the compound of general formula I provides (in percentage by weight) 0.1%-70% (including any of the numerical values or sub-ranges therebetween) of the liquid crystal composition A, for example, 0.1%, 1%, 2%, 4%, 6%, 8%, 10%, 11%, 12%, 13%, 14%, 15%, 16%, 17%, 18%, 20%, 22%, 24%, 25%, 26%, 28%, 30%, 32%, 34%, 35%, 36%, 38%, 40%, 42%, 44%, 46%, 48%, 50%, 52%, 54%, 56%, 58%, 60%, 62%, 64%, 66%, 68%, 70%, or a range between any two numerical values therein; preferably, the compound of general formula I provides (in percentage by weight) 30%-60% of the liquid crystal composition A.

In some embodiments of the present invention, R_{C1} is preferably C₁₋₈ linear alkyl, C₁₋₈ linear alkoxy or C₂₋₈ linear alkenyl; further preferably C₁₋₅ linear alkyl, C₁₋₅ linear alkoxy or C₂₋₅ linear alkenyl.

In some embodiments of the present invention, the compound of general formula II is selected from a group consisting of the following compounds: 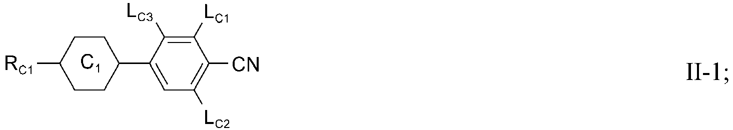 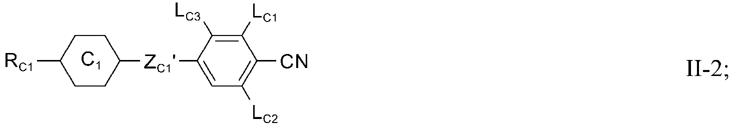 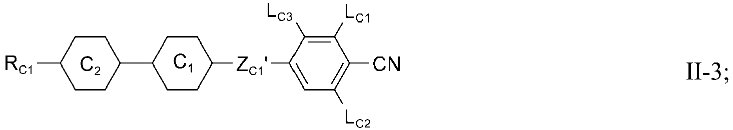 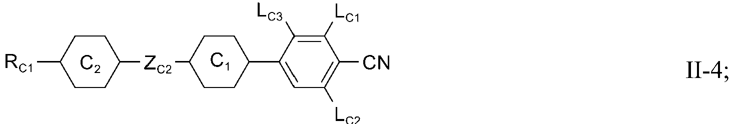 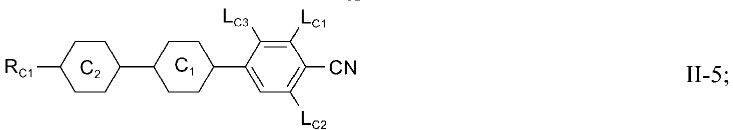 and 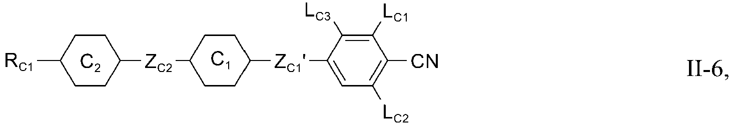 wherein,
Z_{C1}' and Z_{C2} each independently represents -CO-O-, -O-CO-, -CH₂O-, -OCH₂-, -CH=CH-, -C≡C-, -CH₂CH₂-, -CF₂CF₂- or -(CH₂)₄-;
L_{C1} and L_{C2} each independently represents -H, -F, -Cl, -CF₃ or -OCF₃;
L_{C3} represents -H, -CH₃, -OCH₃, -CH₂CH₃ or -OCH₂CH₃; and
ring 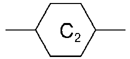 represents 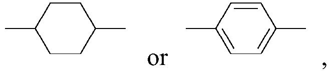 wherein one or more -CH₂- in 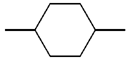 can be replaced by -O-, one or at most two single bonds in the rings can be replaced by double bond, wherein one or more -H in 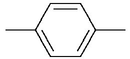 can each be independently substituted by -F, -Cl or C₁₋₃ halogenated or unhalogenated alkyl or alkoxy, one or more -CH= in the rings can be replaced by -N=.

In some embodiments of the present invention, the compound of general formula II is selected from a group consisting of the following compounds: 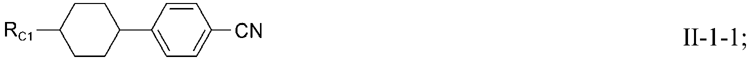 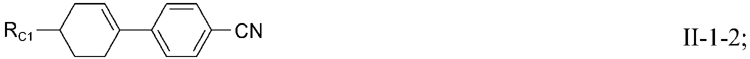 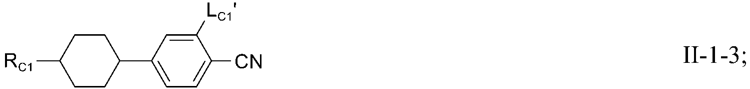 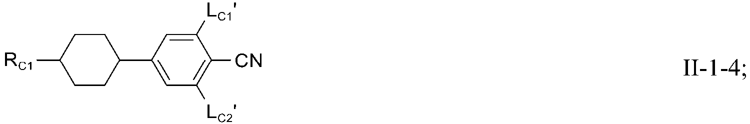 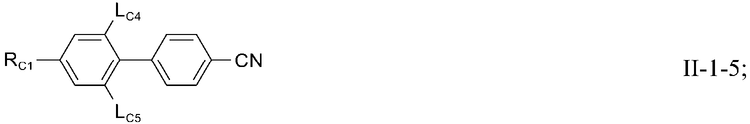 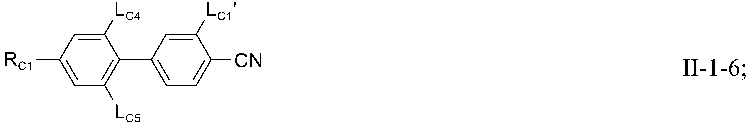 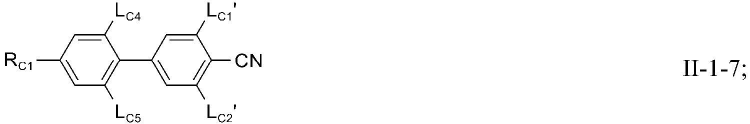 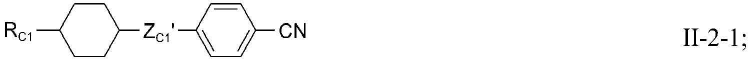 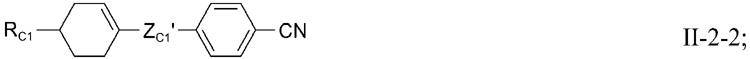 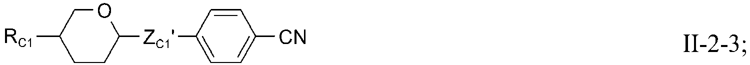 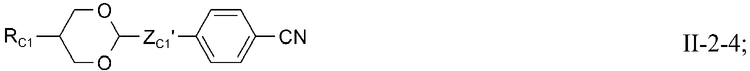 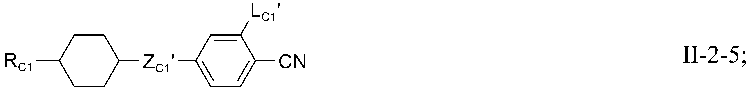 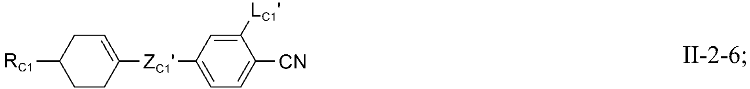 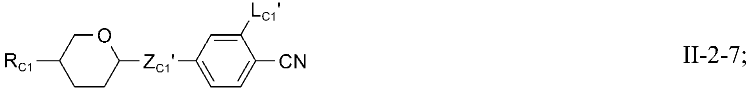 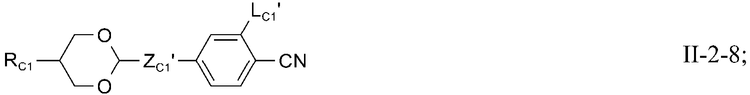 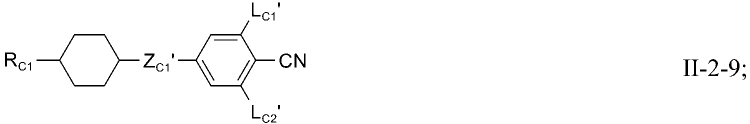 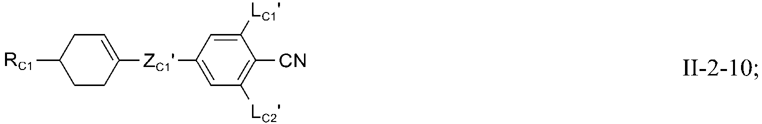 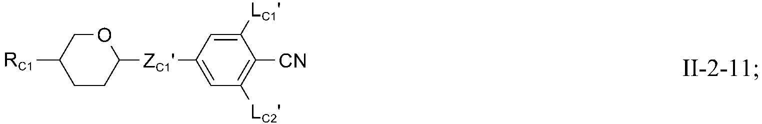 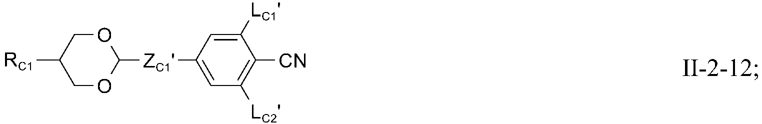 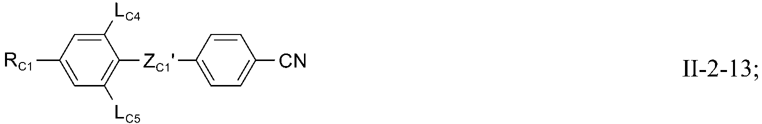 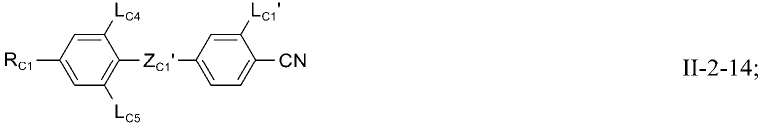 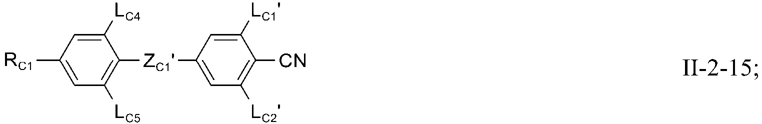 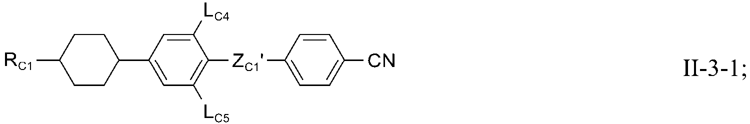 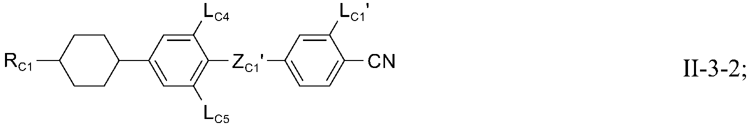 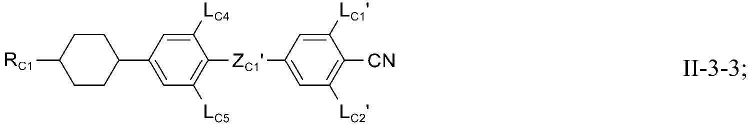 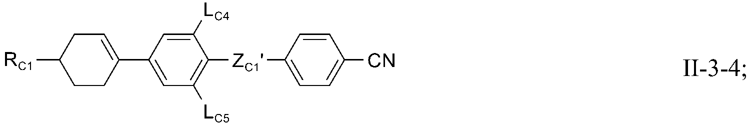 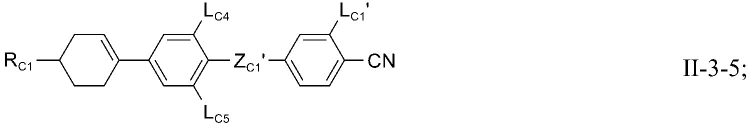 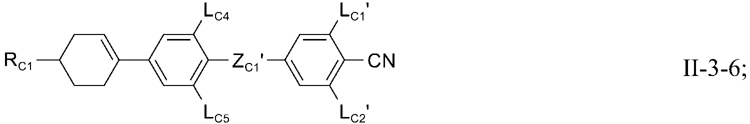 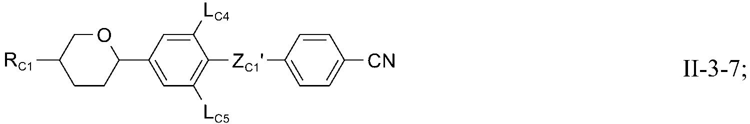 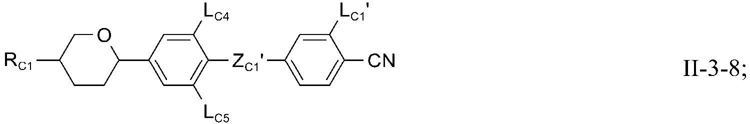 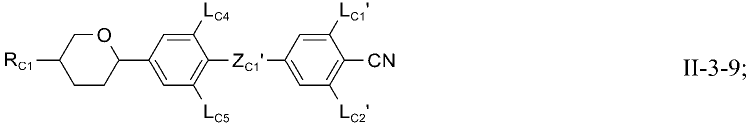 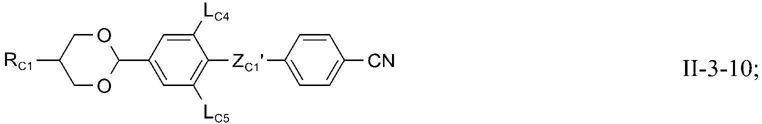 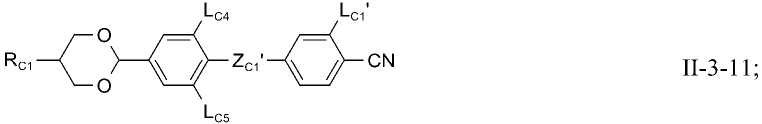 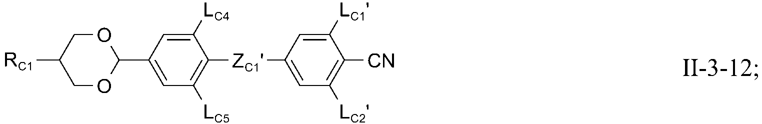 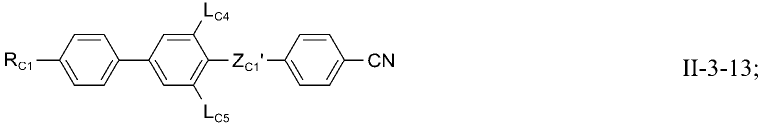 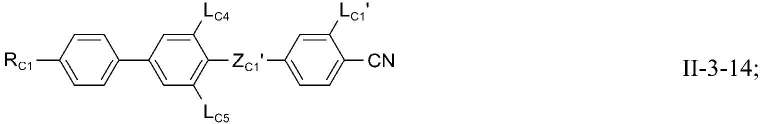 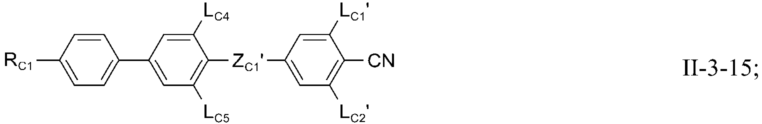 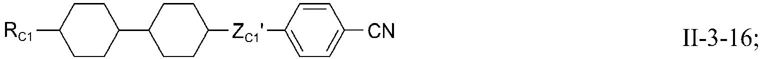 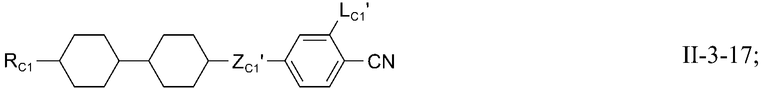 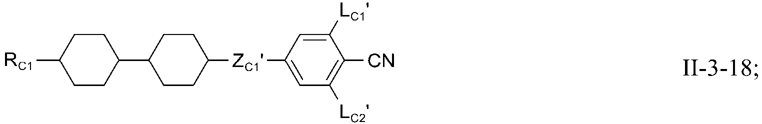 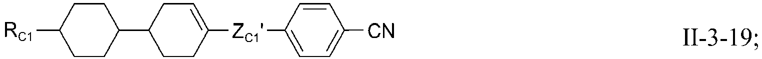 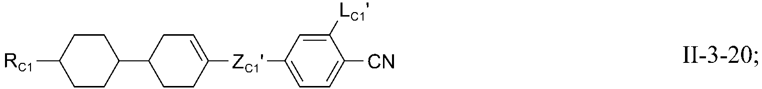 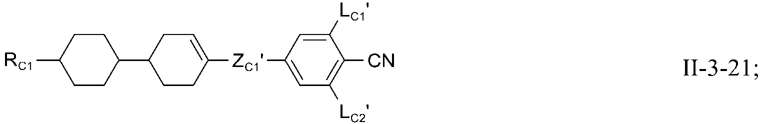 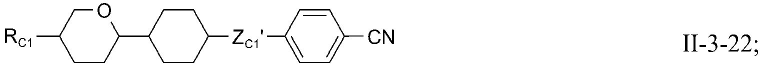 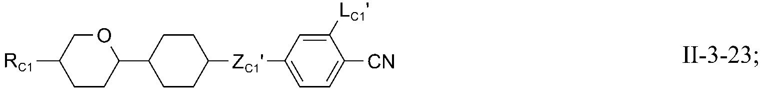 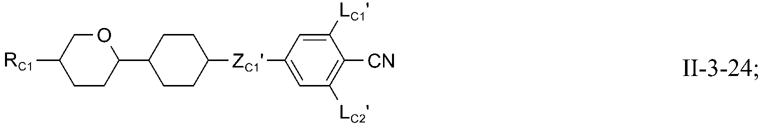 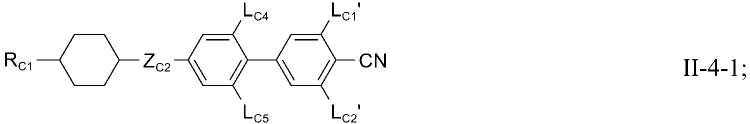 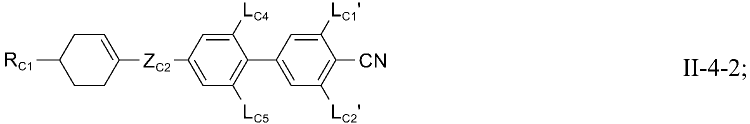 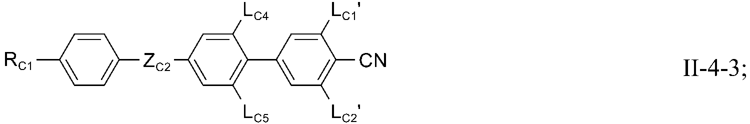 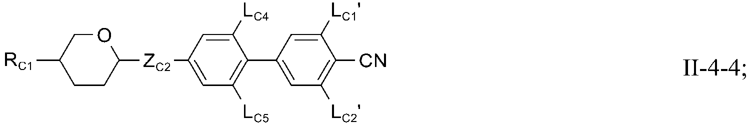 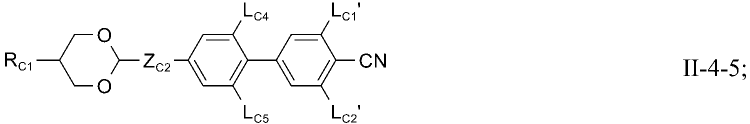 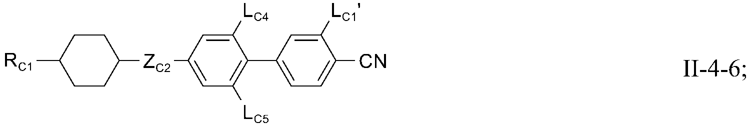 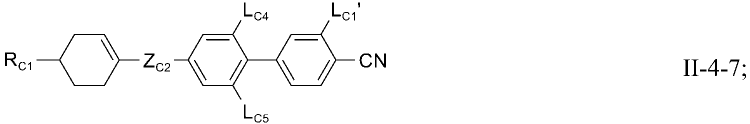 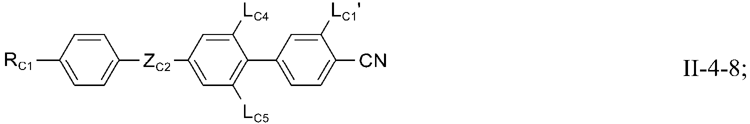 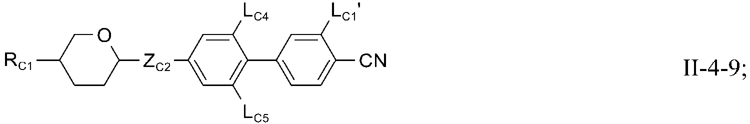 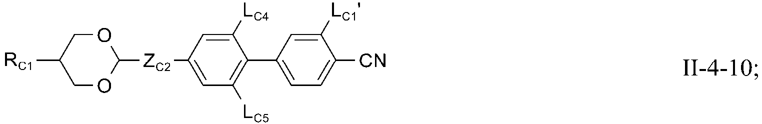 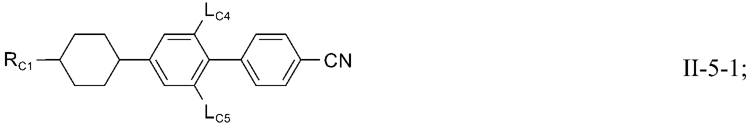 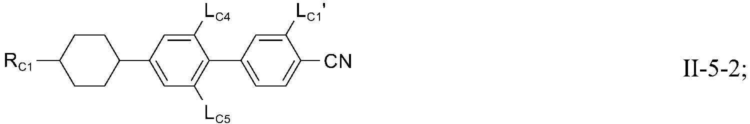 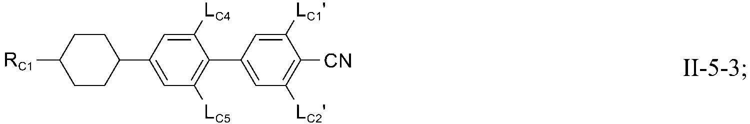 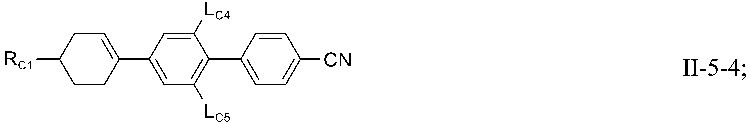 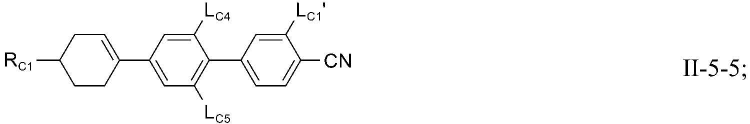 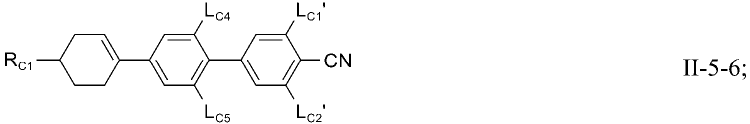 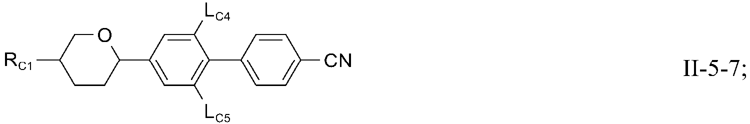 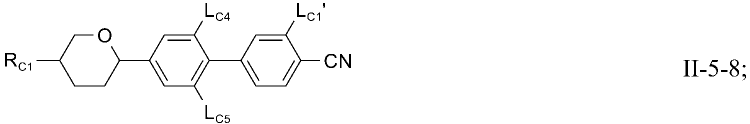 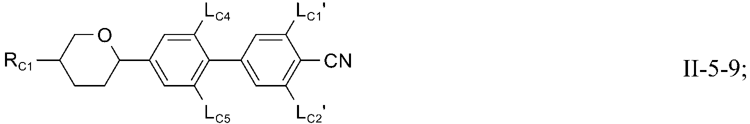 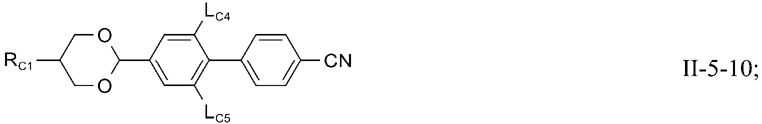 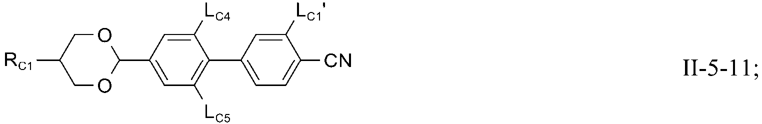 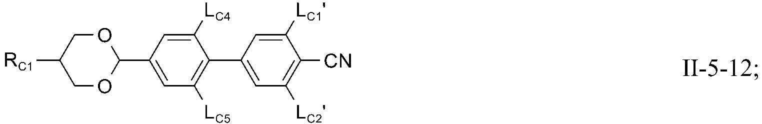 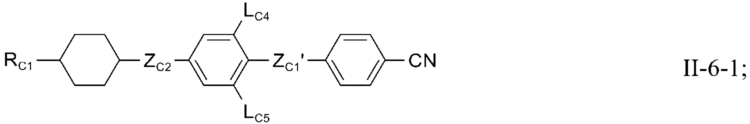 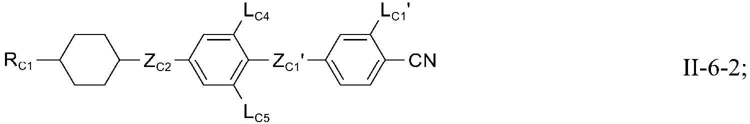 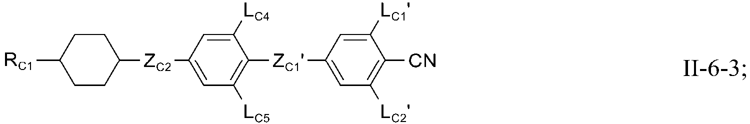 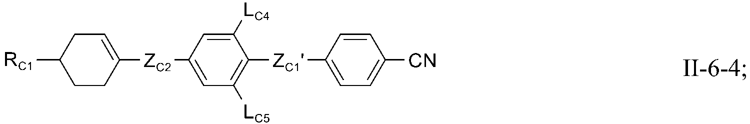 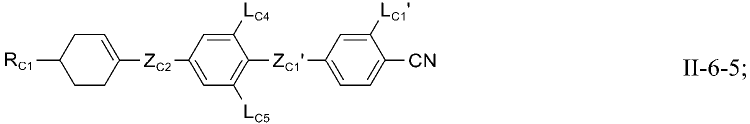 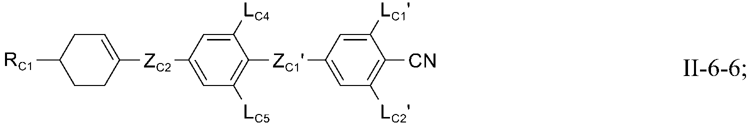 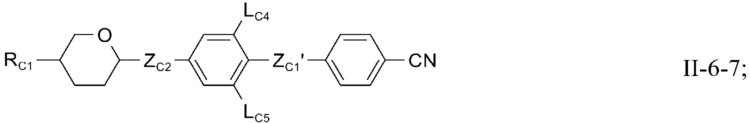 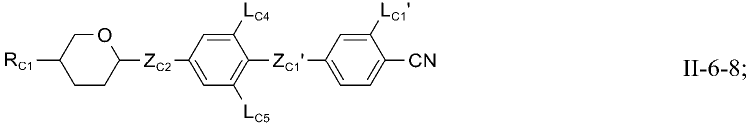 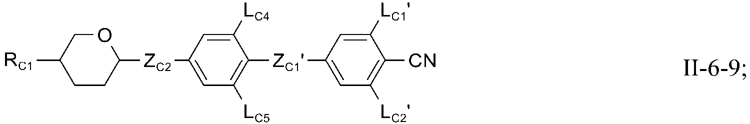 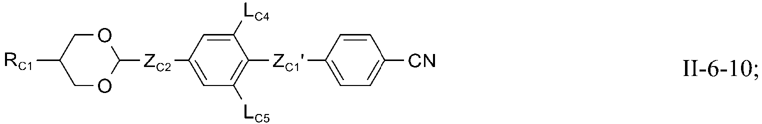 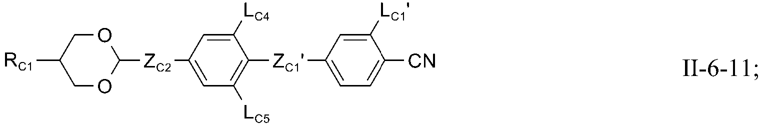 and 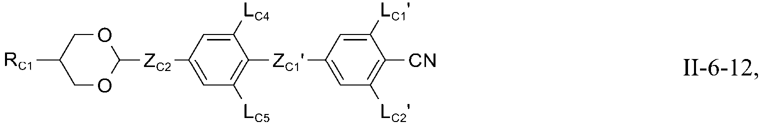 wherein,
L_{C1}' and L_{C2}' each independently represents -F, -Cl, -CF₃ or -OCF₃; and
L_{C4} and L_{C5} each independently represents -H, -F, -Cl, -CF₃ or -OCF₃.

In some embodiments of the present invention, Z_{C1}' represents -CO-O- or -O-CO-.

In some embodiments of the present invention, Z_{C2} represents -CO-O- or -O-CO-.

In some embodiments of the present invention, in order to achieve a higher clearing point, a better contrast and a smaller △λmax, the compound of general formula II includes at least one (for example, two, three, four, five, or six, etc) compound selected from a group consisting of the compound of general formula 11-1-1, the compound of general formula II-2-14, the compound of general formula II-2-15, the compound of general formula II-3-2, the compound of general formula II-3-3, the compound of general formula 11-5-1, and the compound of general formula II-5-2.

In some embodiments of the present invention, in order to achieve a higher clearing point, a better contrast and a smaller △λmax, the compound of general formula II preferably includes at least one (for example, two, three, or four, etc) compound selected from a group consisting of the compound of general formula 11-1-1, the compound of general formula 11-1-5-1, the compound of general formula 11-1-5-2, the compound of general formula 11-1-5-3, the compound of general formula 11-2-14-1, the compound of general formula 11-2-14-2, the compound of general formula 11-2-14-3, the compound of general formula II-2-15-1, the compound of general formula 11-2-15-2, the compound of general formula 11-2-15-3, the compound of general formula 11-2-15-4, the compound of general formula II-2-15-5, the compound of general formula II-2-15-6, the compound of general formula II-3-2-1, the compound of general formula II-3-3-1, the compound of general formula II-5-1-1 and the compound of general formula II-5-2-1: 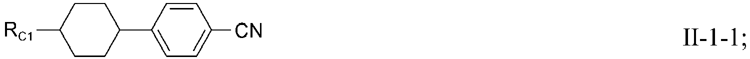 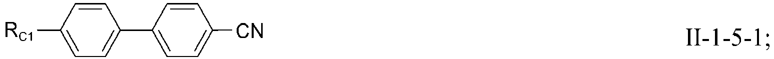 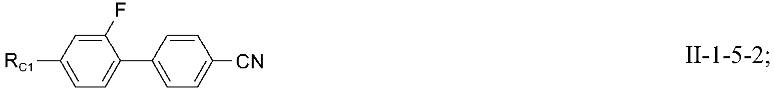 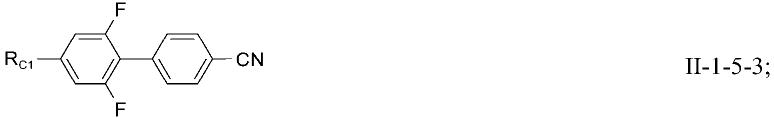 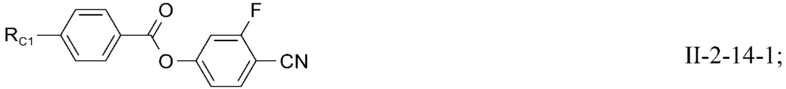 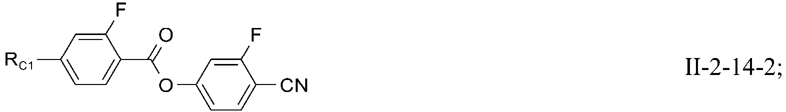 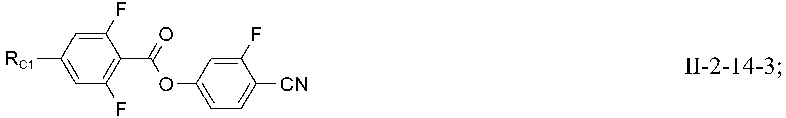 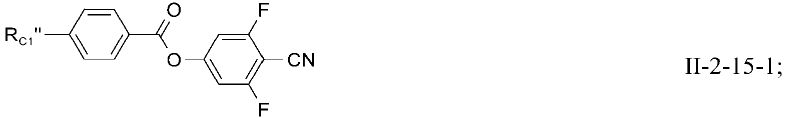 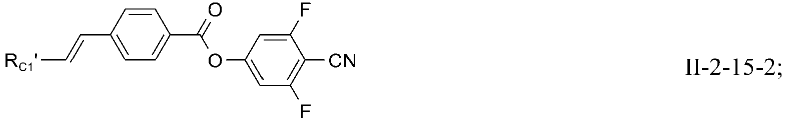 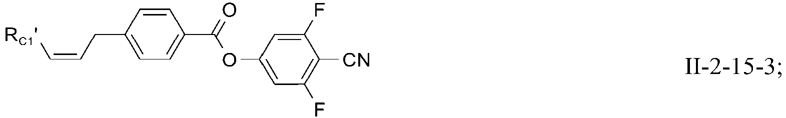 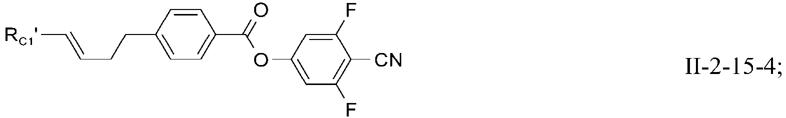 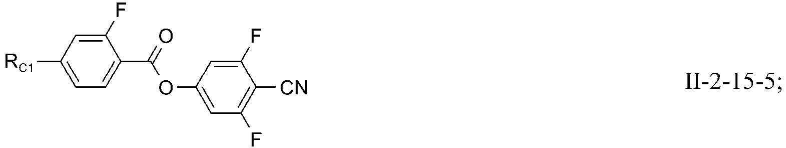 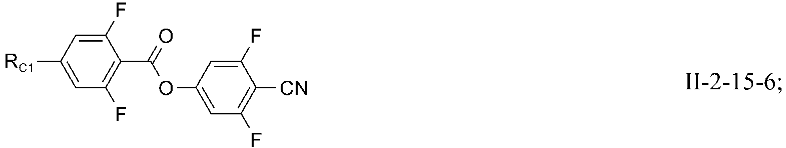 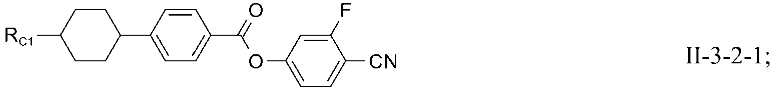 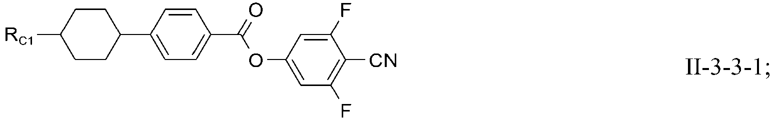 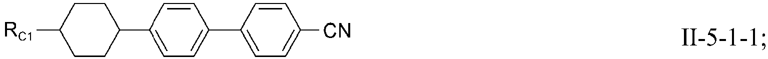 and 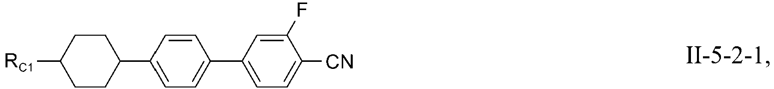 wherein,
R_{C1}' represents -H or C₁₋₆ linear alkyl; and
R_{C1}" represents C₁₋₆ linear alkyl.

In the present invention, it is preferred to adjust the content of the compound of general formula II, such that the liquid crystal composition comprising the same has a higher clearing point, a better contrast and a smaller △λmax.

In some embodiments of the present invention, the compound of general formula II provides (in percentage by weight) 0.1 %-80% (including any of the numerical values or sub-ranges therebetween) of the liquid crystal composition A, for example, 0.1%, 1%, 2%, 4%, 6%, 8%, 10%, 11%, 12%, 13%, 14%, 15%, 16%, 17%, 18%, 20%, 22%, 24%, 25%, 26%, 28%, 30%, 32%, 34%, 35%, 36%, 38%, 40%, 42%, 44%, 46%, 48%, 50%, 52%, 54%, 56%, 58%, 60%, 62%, 64%, 66%, 68%, 70%, 72%, 74%, 76%, 78%, 80%, or a range between any two numerical values therein; preferably, the compound of general formula II provides (in percentage by weight) 20%-70% of the liquid crystal composition A.

In some embodiments of the present invention, the chiral agent of the present invention may be any one or a combination of at least two of the following compounds: 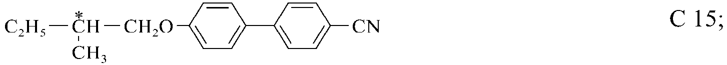 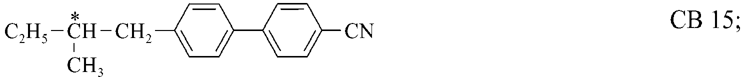 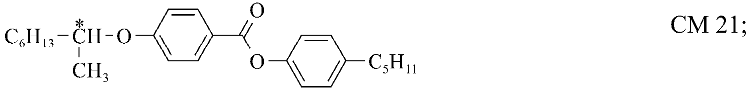 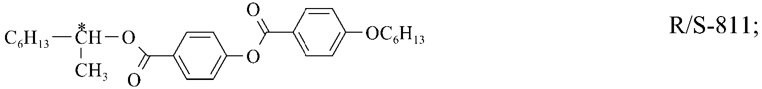 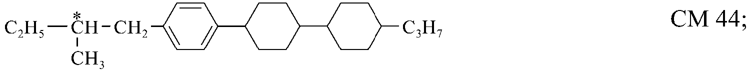 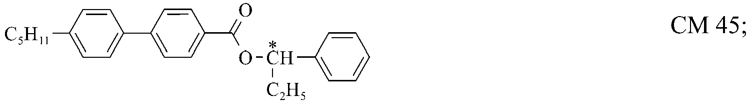 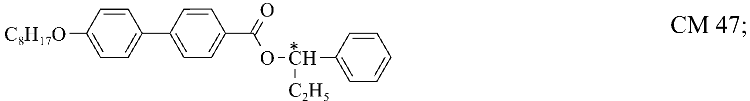 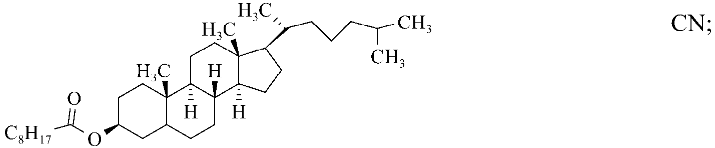 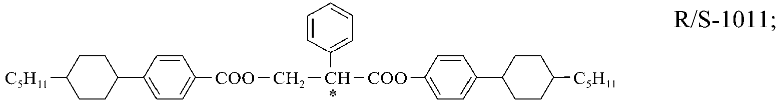 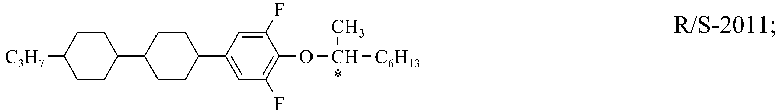 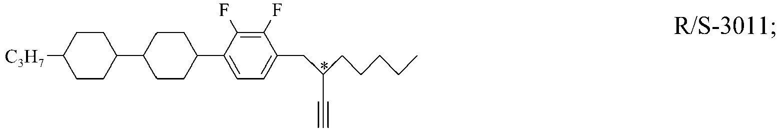 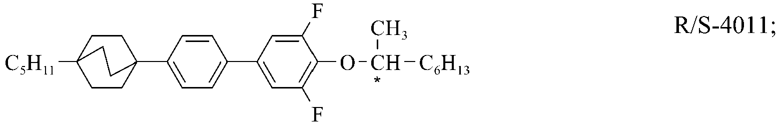 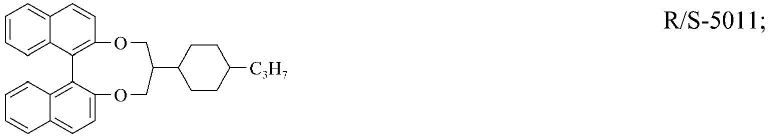 and 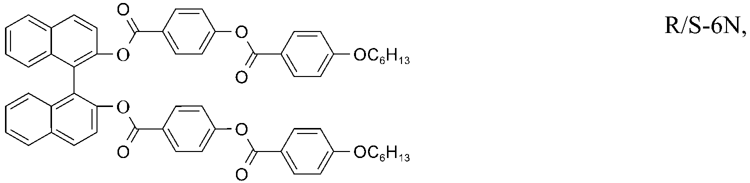 wherein, * represents chiral site.

In some embodiments of the present invention, in order to achieve a higher clearing point, a better contrast and a smaller △λmax, the chiral agent of the present invention includes at least one chiral agent selected from a group consisting of R/S-5011, CB 15, R/S-811, R/S-2011 and R/S-6N.

In some embodiments of the present invention, chiral agent provides (in percentage by weight) 0.1%-50% (including any of the numerical values or sub-ranges therebetween) of the cholesteric liquid crystal composition, for example, 0.1%, 0.2%, 0.5%, 0.8%, 1%, 2%, 3%, 4%, 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50%, or a range between any two numerical values therein.

In some embodiments of the present invention, when the chiral agent is R/S-5011, it provides (in percentage by weight) 1%-10% (including any of the numerical values or sub-ranges therebetween) of the cholesteric liquid crystal composition, for example, 1%, 2%, 3%, 4%, 5%, 6%, 7%, 8%, 9%, 10%, or a range between any two numerical values therein.

In some embodiments of the present invention, when the chiral agent is CB 15, it provides (in percentage by weight) 30%-40% (including any of the numerical values or sub-ranges therebetween) of the cholesteric liquid crystal composition, for example, 30%, 31%, 32%, 33%, 34%, 35%, 36%, 37%, 38%, 39%, 40%, or a range between any two numerical values therein.

In some embodiments of the present invention, when the chiral agent is R/S-811, it provides (in percentage by weight) 20%-30% (including any of the numerical values or sub-ranges therebetween) of the cholesteric liquid crystal composition, for example, 20%, 21%, 22%, 23%, 24%, 25%, 26%, 27%, 28%, 29%, 30%, or a range between any two numerical values therein.

In some embodiments of the present invention, when the chiral agent is R/S-2011, it provides (in percentage by weight) 20%-30% (including any of the numerical values or sub-ranges therebetween) of the cholesteric liquid crystal composition, for example, 20%, 21%, 22%, 23%, 24%, 25%, 26%, 27%, 28%, 29%, 30%, or a range between any two numerical values therein.

In some embodiments of the present invention, when the chiral agent is R/S-6N, it provides (in percentage by weight) 1%-10% (including any of the numerical values or sub-ranges therebetween) of the cholesteric liquid crystal composition, for example, 1%, 2%, 3%, 4%, 5%, 6%, 7%, 8%, 9%, 10%, or a range between any two numerical values therein.

In the present invention, the problem of side viewing angle color cast of the reflective devices in the prior art is creatively solved by adding dyes to the cholesteric liquid crystal composition, and the resulting device can have a good contrast and achieve good display effects.

In some embodiments of the present invention, the dye is one or more dyes selected from a group consisting of azos, anthraquinones, phthalocyanines, cyanines, indigos, arylmethanes, nitros, and nitrosos.

In some embodiments of the present invention, the dye is selected from a group consisting of azos and anthraquinones.

In some embodiments of the present invention, the dye is selected from one or a combination of at least two (for example, three, four, or five) of the following compounds:

| Dye Number | Molecular Structure | λmax (nm) | Color |
|---|---|---|---|
| 1 | 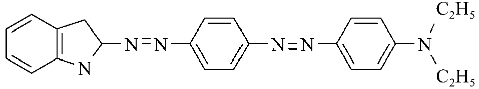 | 574 | Violet |
| 2 | 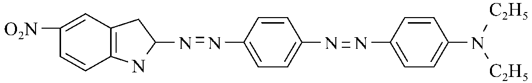 | 610 | Blue-green |
| 3 | 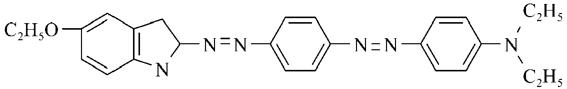 | 570 | Violet |
| 4 | 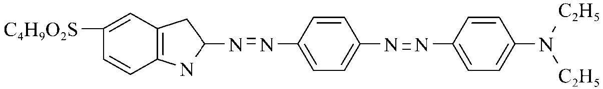 | 595 | Blue-green |
| 5 | 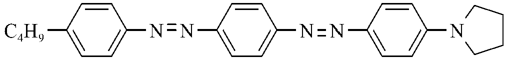 | 507 | Purple |
| 6 | 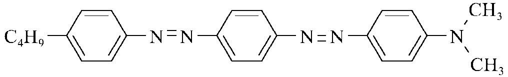 | 526-533 | Purple |
| 7 | 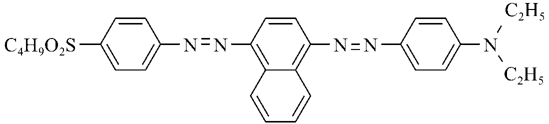 | 573 | Violet |
| 8 | 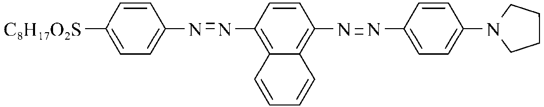 | 574 | Violet |
| 9 | 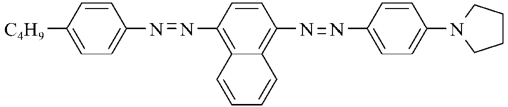 | 533-542 | Purple |
| 10 | 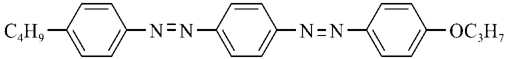 | 390-398 | Yellow |
| 11 | 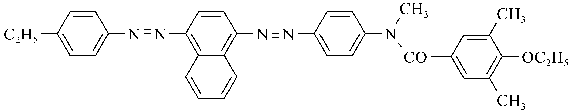 | 402 | Yellow |
| 12 | 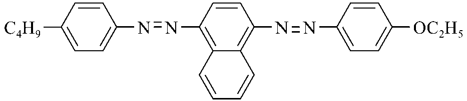 | 439-446 | Orange-yellow |
| 13 | 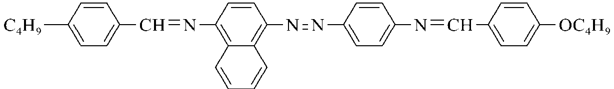 | 443-450 | Orange-yellow |
| 14 | 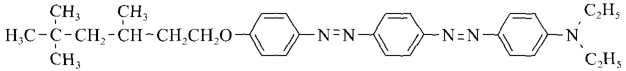 | 511 | Red |
| 15 | 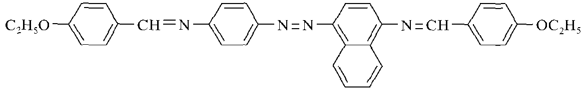 | 447 | Orange-yellow |
| 16 | 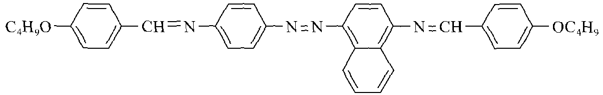 | 450 | Orange-yellow |
| 17 | 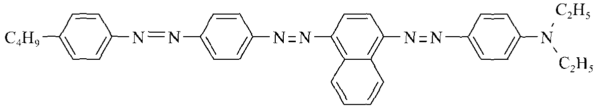 | 563-573 | Blue-violet |
| 18 | 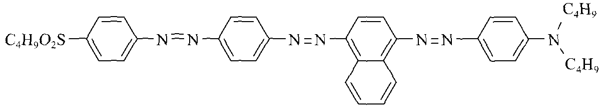 | 580-589 | Blue-green |
| 19 | 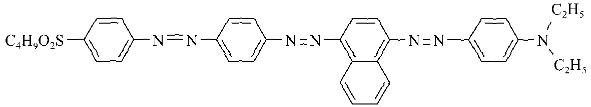 | 591-599 | Blue-green |
| 20 | 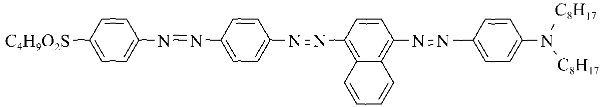 | 592-600 | Blue-green |
| 21 | 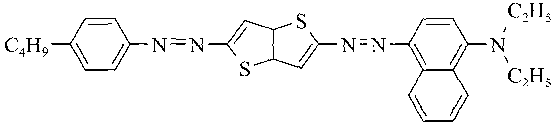 | 621-660 | Blue |
| 22 | 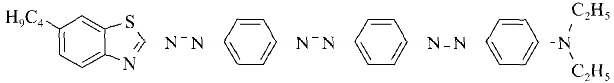 | 591-606 | Blue-green |
| 23 | 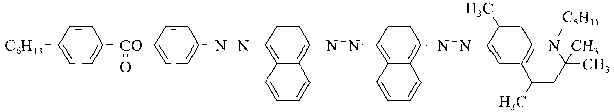 | 634-643 | Blue |
| 24 | 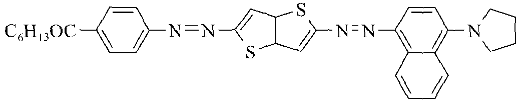 | 674 | Blue |
| 25 | 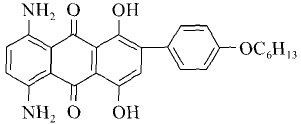 | 640 | Blue |
| 26 | 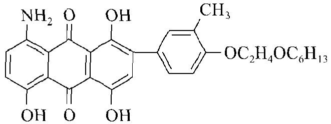 | 645 | Blue |
| 27 | 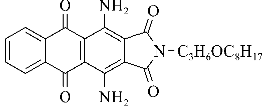 | 680 | Blue |
| 28 | 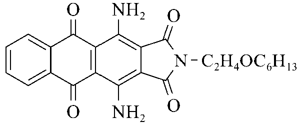 | 760 | Blue |
| 29 | 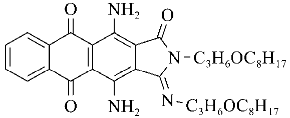 | 670 | Blue |
| 30 | 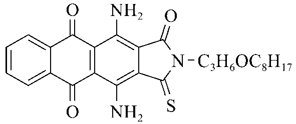 | 760 | Blue |
| 31 | 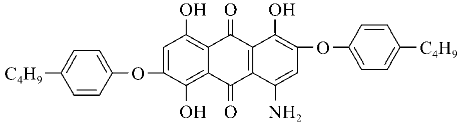 | 595 | Blue-green |
| 32 | 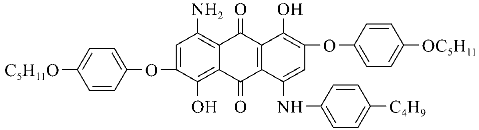 | 630 | Blue |
| 33 | 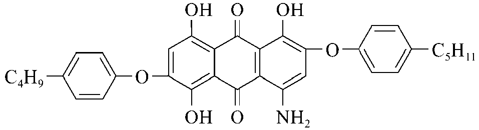 | 595 | Blue-green |
| 34 | 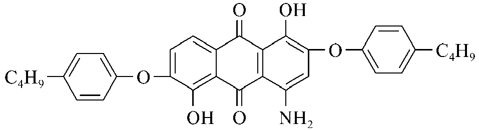 | 535 | Purple |
| 35 | 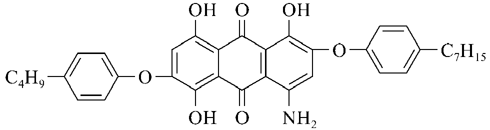 | 595 | Blue-green |

In some embodiments of the present invention, in order to achieve a higher clearing point, a better contrast and a smaller △λmax, the dye is preferably selectred from a group consisting of dyes with the Dye Numbers 1, 5, 12, 13, 14, 21 and 34.

In some embodiments of the present invention, the additive amount of dye provides (in percentage by weight) 0.01%-10% (including any of the numerical values or sub-ranges therebetween) of the additive amount of the cholesteric liquid crystal composition, for example, 0.01%, 0.05%, 0.1%, 0.5%, 1%, 1.2%, 1.5%, 1.8%, 2%, 2.2%, 2.5%, 2.8%, 3%, 3.2%, 3.5%, 3.8%, 4%, 4.2%, 4.5%, 4.8%, 5%, 5.2%, 5.5%, 5.8%, 6%, 6.2%, 6.5%, 6.8%, 7%, 7.2%, 7.5%, 7.8%, 8%, 8.2%, 8.5%, 8.8%, 9%, 9.2%, 9.5%, 9.8%, 10% or a range between any two numerical values therein; preferably 0.2%-6%, further preferably 0.2%-4%.

In some embodiments of the present invention, the liquid crystal composition A of the present invention further comprises at least one compound of general formula III: 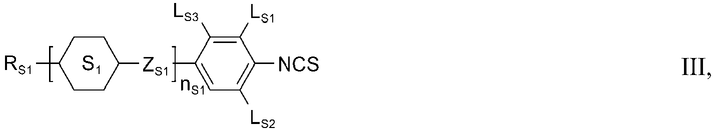 wherein,
R_{S1} represents C₁₋₁₂ (for example, C₁, C₂, C₃, C₄, C₅, C₆, C₇, C₈, C₉, C₁₀, C₁₁ or C₁₂) linear alkyl, C₃₋₁₂ (for example, C₃, C₄, C₅, C₆, C₇, C₈, C₉, C₁₀, C₁₁ or C₁₂) branched alkyl, 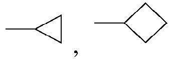 or 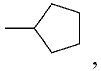 one or more than two nonadjacent -CH₂- in the C₁₋₁₂ linear alkyl and C₃₋₁₂ branched alkyl can each be independently replaced by -CH=CH-, -C=C-, -O-, -CO-, -CO-O- or -O-CO-, and one or more -H in the C₁₋₁₂ linear alkyl and C₃₋₁₂ branched alkyl can each be independently substituted by -F or -Cl;
ring 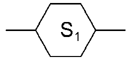 represents 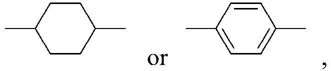 wherein one or more -CH₂- in 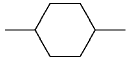 can be replaced by -O-, one or at most two single bonds in the rings can be replaced by double bond, wherein one or more -H in 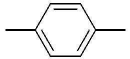 can each be independently substituted by -F, -Cl or C₁₋₃ (for example, C₁, C₂ or C₃) halogenated or unhalogenated alkyl or alkoxy, one or more -CH= in the rings can be replaced by -N=;
Z_{S1} represents single bond, -CO-O-, -O-CO-, -CH₂O-, -OCH₂-, -CH=CH-, -C≡C-, -CH₂CH₂-, - CF₂CF₂-, -(CH₂)₄-, -CF₂O- or -OCF₂-;
L_{S1} and L_{S2} each independently represents -H, halo, C₁₋₃ (for example, C₁, C₂ or C₃) halogenated alkyl or halogenated alkoxy;
L_{S3} represents -H, C₁₋₃ (for example, C₁, C₂ or C₃) alkyl or alkoxy; and
n_{S1} represents 0, 1, 2 or 3, when n_{S1} = 2 or 3, ring 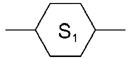 can be the same or different, Z_{S1} can be the same or different.

In some embodiments of the present invention, the compound of general formula III is selected from a group consisting of the following compounds: 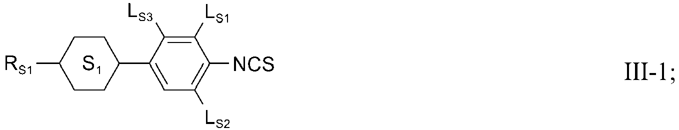 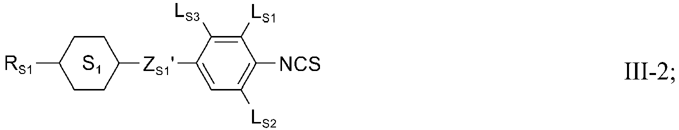 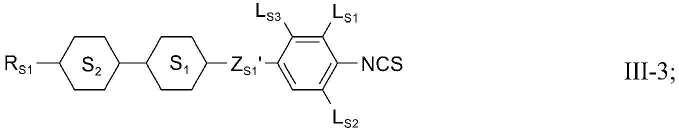 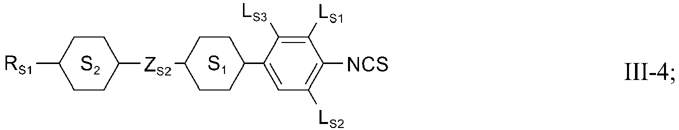 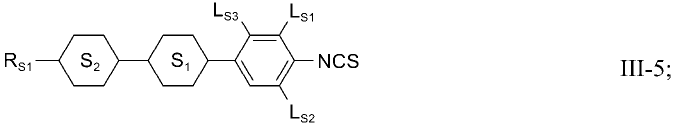 and 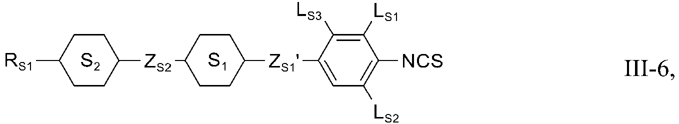 wherein,
L_{S1} and L_{S2} each independently represents -H, -F, -Cl, -CF₃ or -OCF₃;
Z_{S2} and Z_{S1}' each independently represents -CO-O-, -O-CO-, -CH₂O-, -OCH₂-, -CH=CH-, -C≡C-, -CH₂CH₂-, -CF₂CF₂-, -(CH₂)₄-, -CF₂O- or -OCF₂-; and
ring 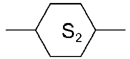 represents 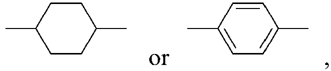 wherein one or more -CH₂- in 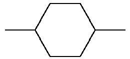 can be replaced by -O-, one or at most two single bonds in the rings can be replaced by double bond, wherein one or more -H in 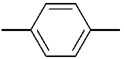 can each be independently substituted by -F, -Cl or C₁₋₃ (for example, C₁, C₂ or C₃) halogenated or unhalogenated alkyl or alkoxy, one or more -CH= in the rings can be replaced by -N=.

In some embodiments of the present invention, the compound of general formula III is selected from a group consisting of the following compounds: 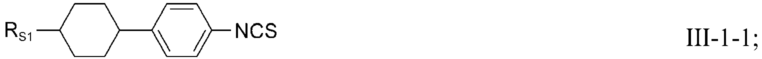 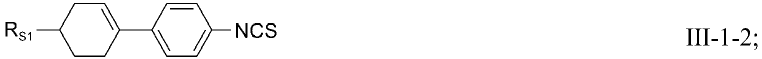 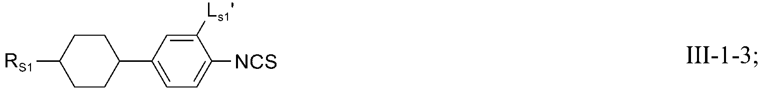 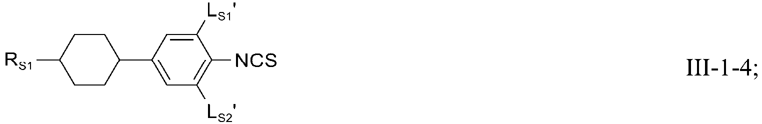 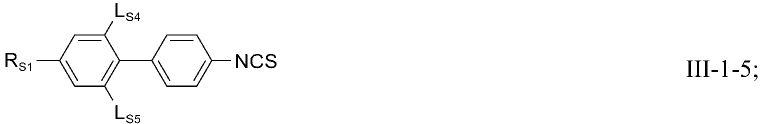 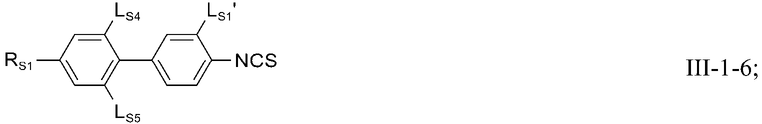 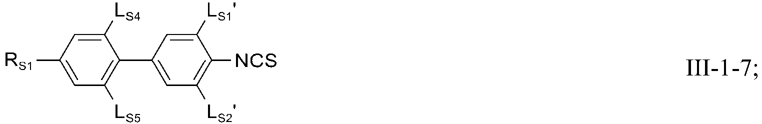 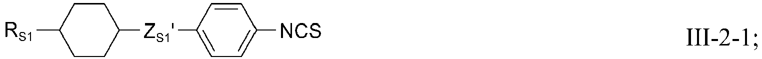 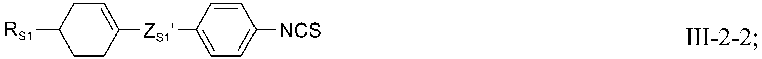 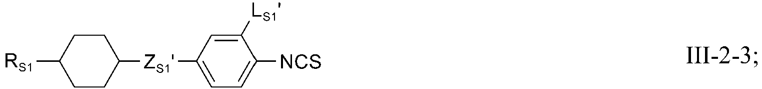 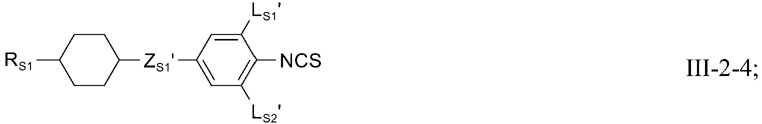 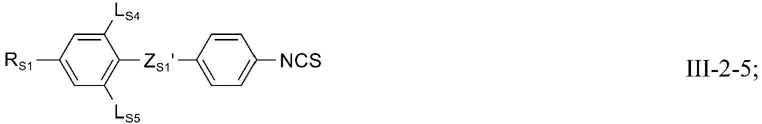 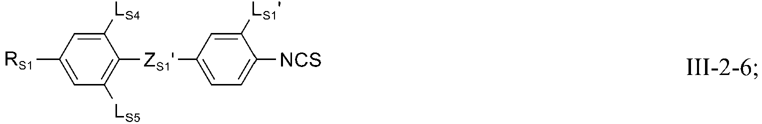 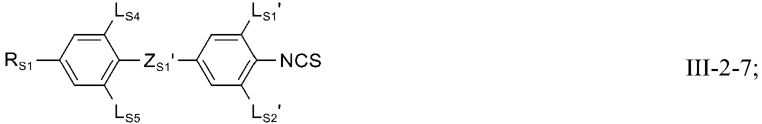 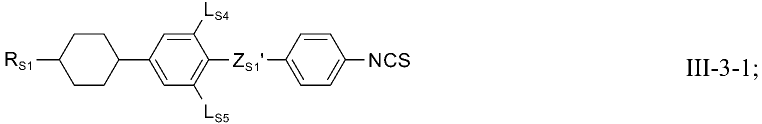 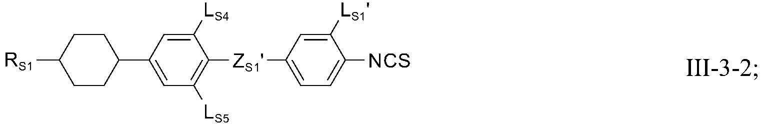 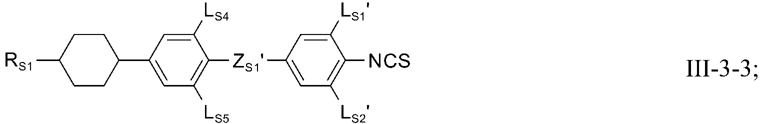 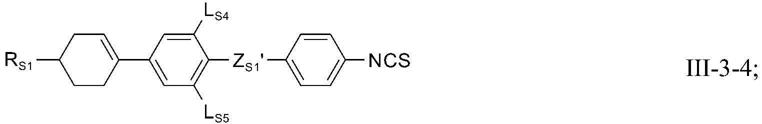 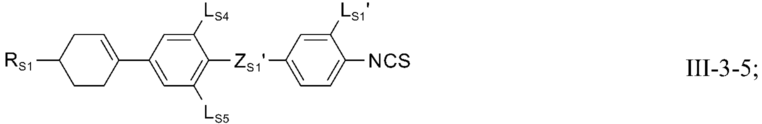 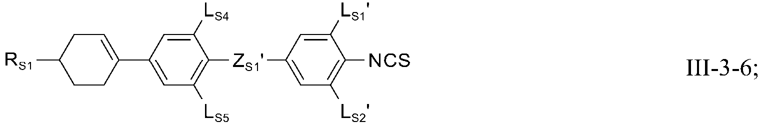 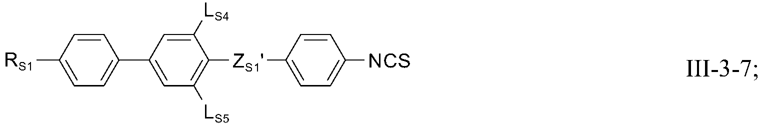 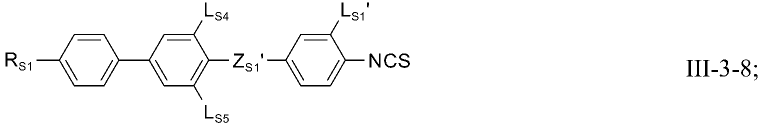 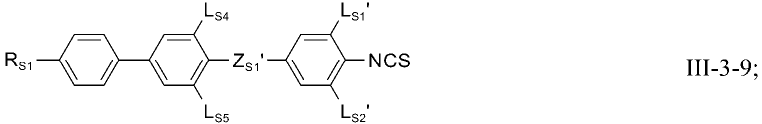 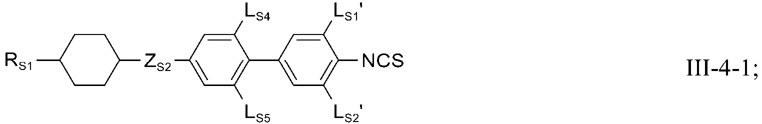 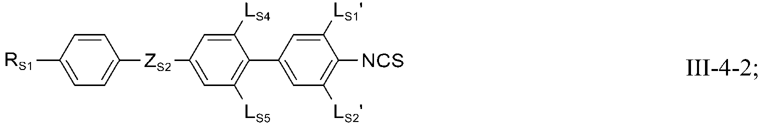 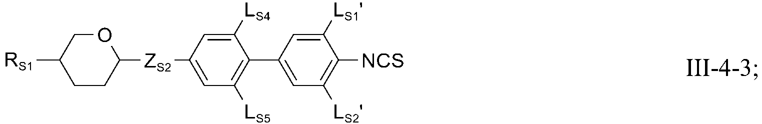 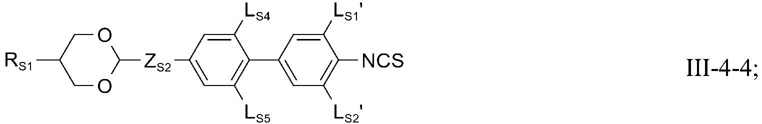 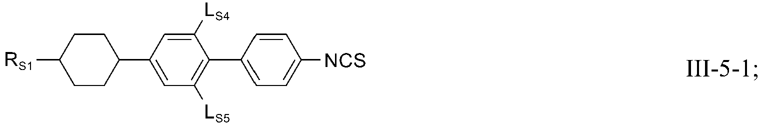 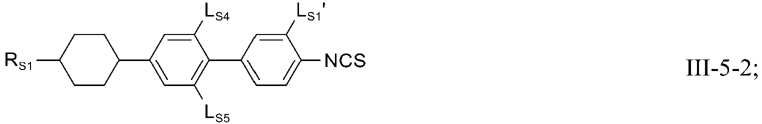 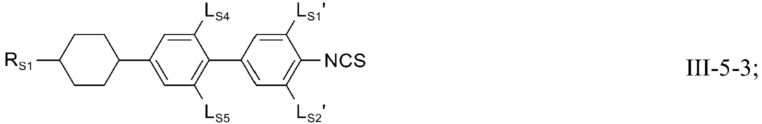 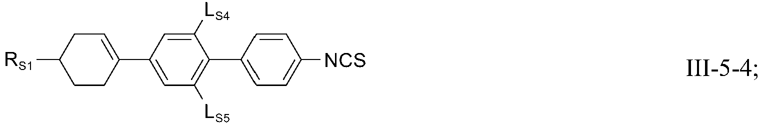 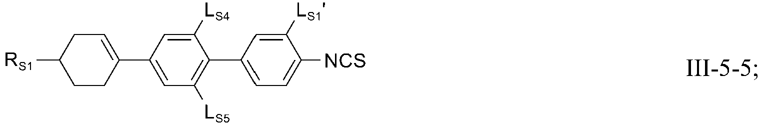 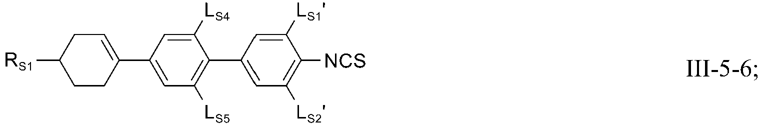 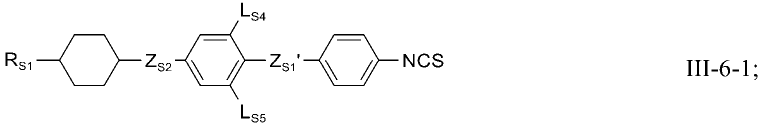 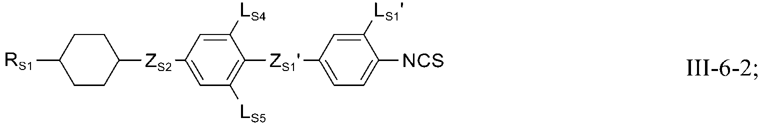 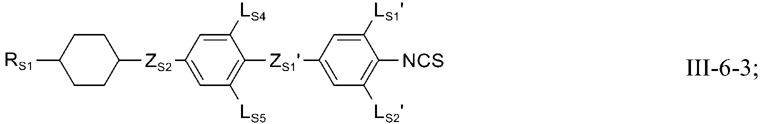 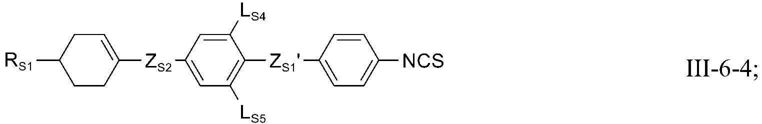 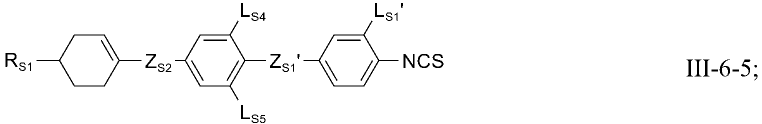 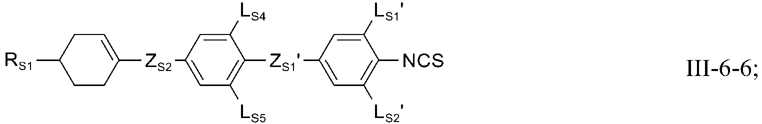 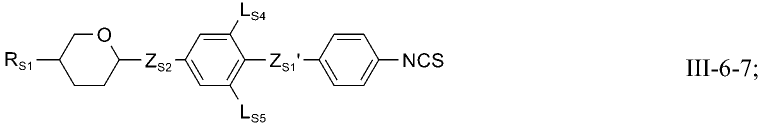 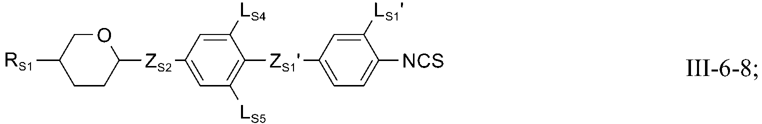 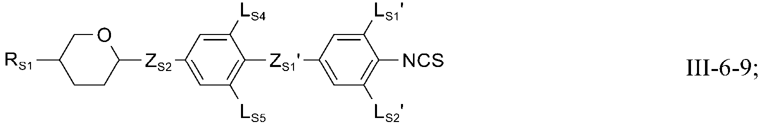 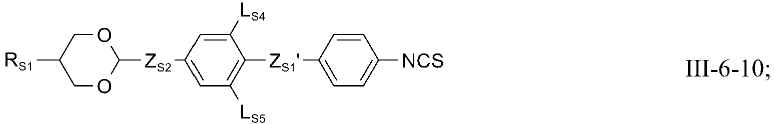 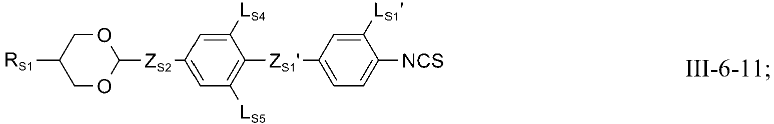 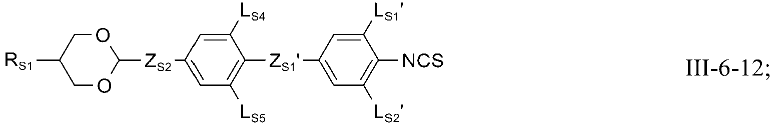 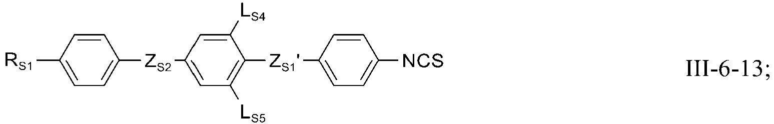 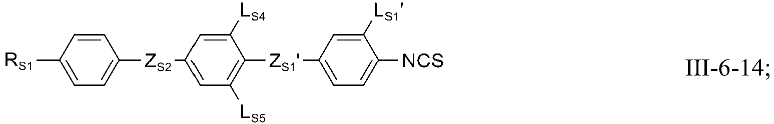 and 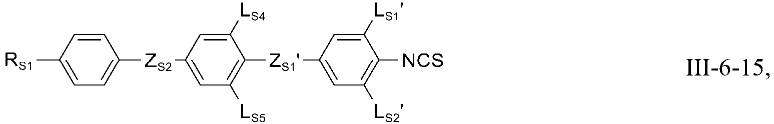 wherein,
L_{S1}' and L_{S2}' each independently represents -F, -Cl, -CF₃ or -OCF₃; and
L_{S4} and L_{S5} each independently represents -H, -F, -Cl, -CF₃ or -OCF₃.

In some embodiments of the present invention, the liquid crystal composition A of the present invention comprises at least one compound of general formula III-1-6 and at least one compound of general formula III-1-7.

In some embodiments of the present invention, the compound of general formula III provides (in percentage by weight) 0.1%-20% (including any of the numerical values or sub-ranges therebetween) of the liquid crystal composition A, for example, 0.1%, 1%, 2%, 4%, 6%, 8%, 10%, 11%, 12%, 13%, 14%, 15%, 16%, 17%, 18%, 20%, or a range between any two numerical values therein; preferably, the compound of general formula III provides (in percentage by weight) 1%-10% of the liquid crystal composition A.

In some embodiments of the present invention, halo each independently represents -F, -Cl or -Br.

In some embodiments of the present invention, the liquid crystal composition A of the present invention further comprises at least one compound of general formula M: 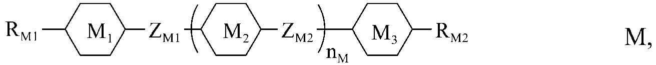 wherein,
R_{M1} and R_{M2} each independently represents C₁₋₁₂ (for example, C₁, C₂, C₃, C₄, C₅, C₆, C₇, C₈, C₉, C₁₀, C₁₁ or C₁₂) linear alkyl, C₃₋₁₂ (for example, C₃, C₄, C₅, C₆, C₇, C₈, C₉, C₁₀, C₁₁ or C₁₂) branched alkyl, 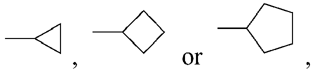 one or more than two nonadjacent -CH₂- in the C₁₋₁₂ linear alkyl and C₃₋₁₂ branched alkyl can each be independently replaced by -CH=CH-, -C≡C-, -O-, -CO-, -CO-O- or -O-CO-;
ring 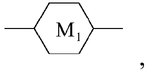 ring 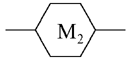 and ring 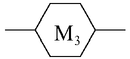 each independently represents 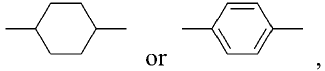 wherein one or more -CH₂- in 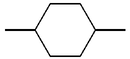 can be replaced by - O-, and one or at most two single bonds in the rings can be replaced by double bond, and at most one -H in 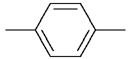 can be substituted by halo;
Z_{M1} and Z_{M2} each independently represents single bond, -CO-O-, -O-CO-, -CH₂O-, -OCH₂-, - CH=CH-, -CH₂CH₂- or -(CH₂)₄-; and
n_{M} represents 0, 1 or 2, wherein when n_{M} = 2, ring 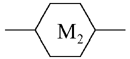 can be the same or different, Z_{M2} can be the same or different.

In some embodiments of the present invention, the compound of general formula M is selected from a group consisting of the following compounds: 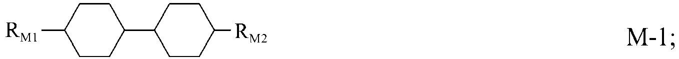 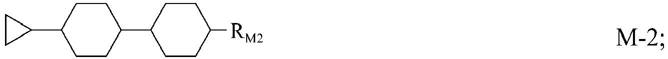 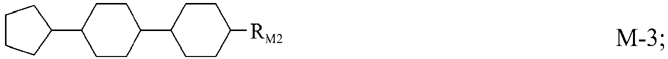 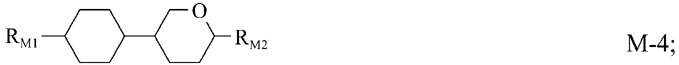 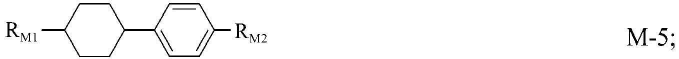 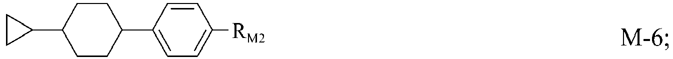 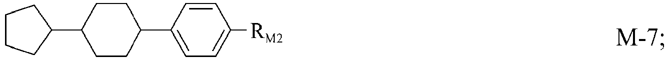 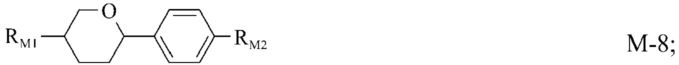 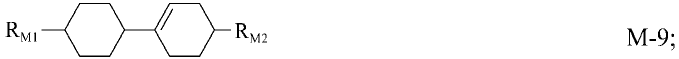 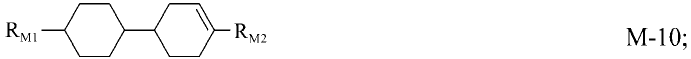 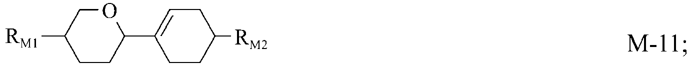 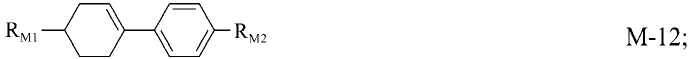 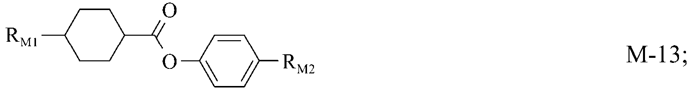 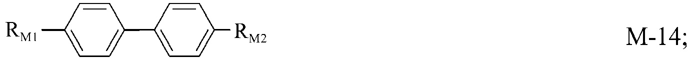 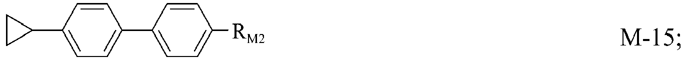 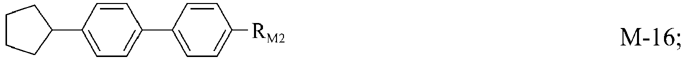 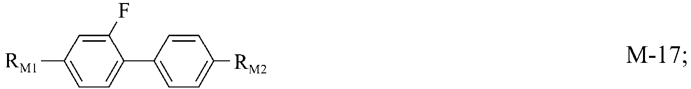 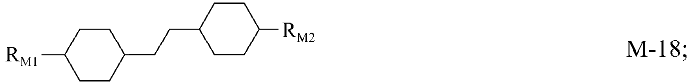 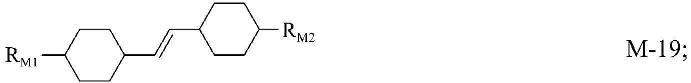 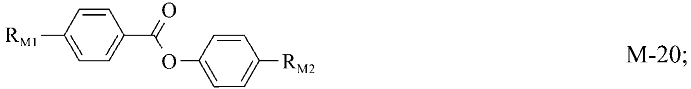 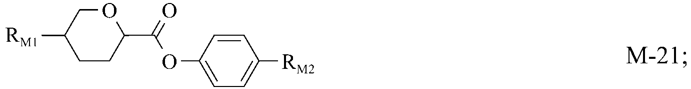 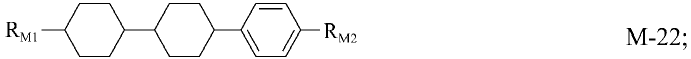 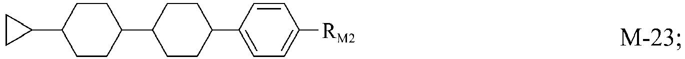 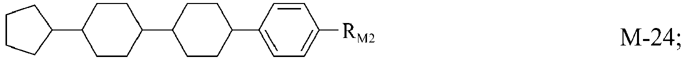 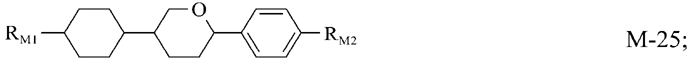 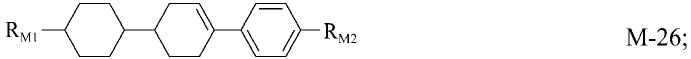 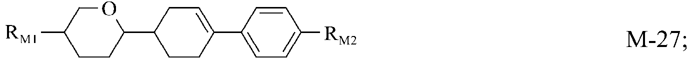 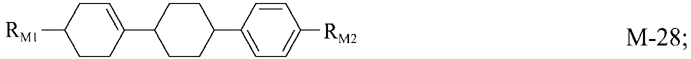 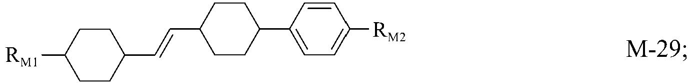 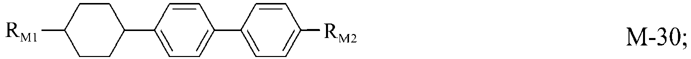 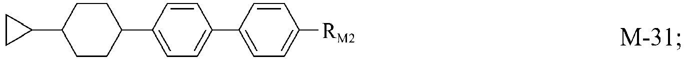 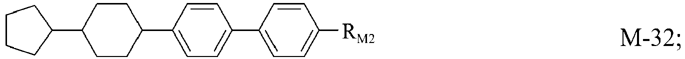 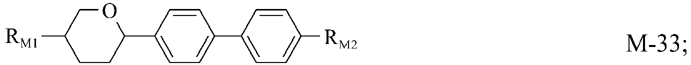 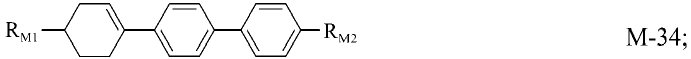 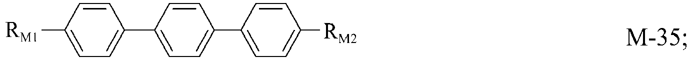 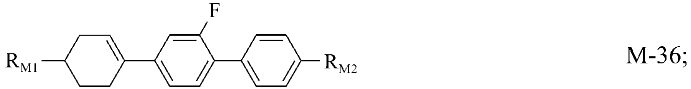 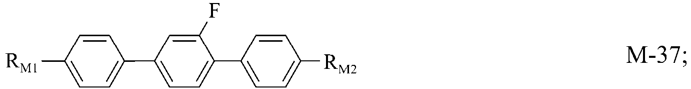 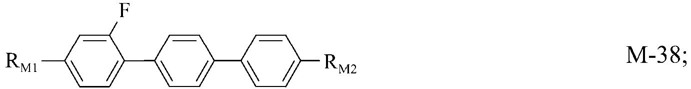 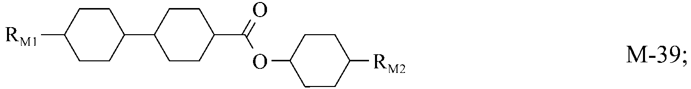 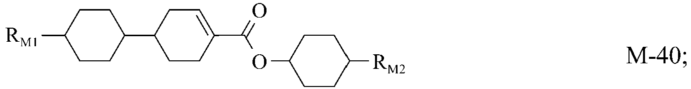 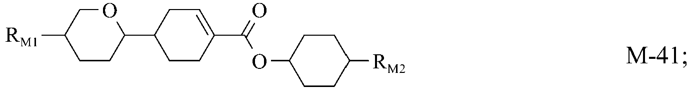 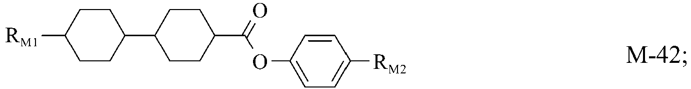 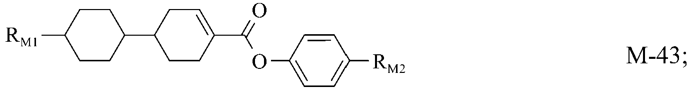 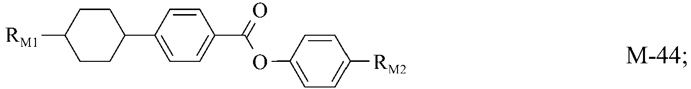 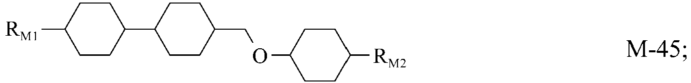 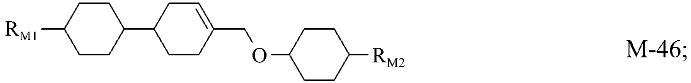 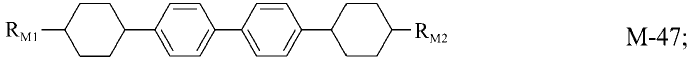 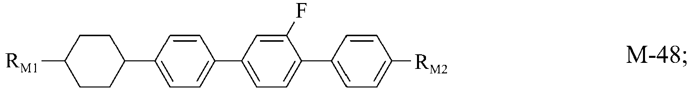 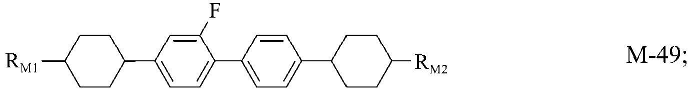 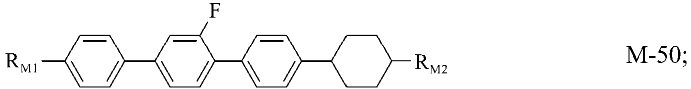 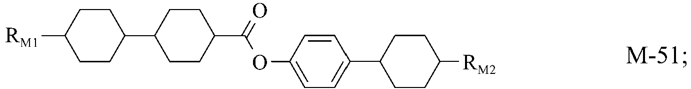 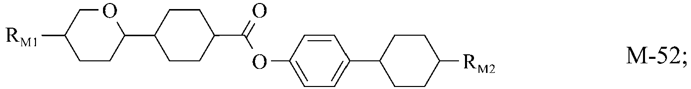 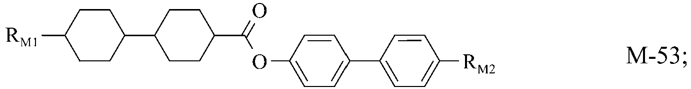 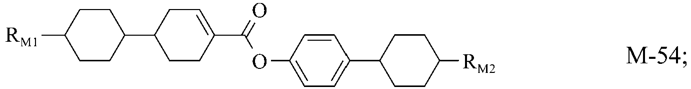 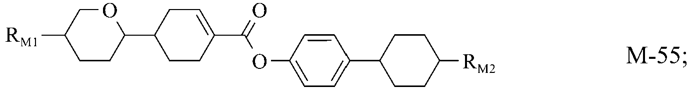 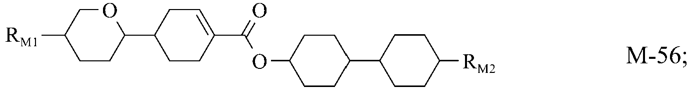 and 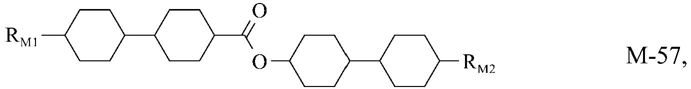 wherein, R_{M1} and R_{M2} each independently represents C₁₋₁₂ linear alkyl, C₃₋₁₂ branched alkyl, one or more than two nonadjacent -CH₂- in the C₁₋₁₂ linear alkyl and C₃₋₁₂ branched alkyl can each be independently replaced by -CH=CH-, -C≡C-, -O-, -CO-, -CO-O- or -O-CO-.

In some embodiments of the present invention, the compound of general formula M provides (in percentage by weight) 0.1%-20% (including any of the numerical values or sub-ranges therebetween) of the liquid crystal composition A, for example, 0.1%, 1%, 2%, 4%, 6%, 8%, 10%, 11%, 12%, 13%, 14%, 15%, 16%, 17%, 18%, 20%, or a range between any two numerical values therein.

In some embodiments of the present invention, preferably, R_{M1} and R_{M2} each independently represents C₁₋₈ linear alkyl, C₁₋₈ linear alkoxy or C₂₋₈ linear alkenyl; further preferably, each independently represents C₁₋₅ linear alkyl, C₁₋₅ linear alkoxy or C₂₋₅ linear alkenyl.

In some embodiments of the present invention, one of R_{M1} and R_{M2} is C₂₋₅ linear alkenyl, and the other is C₁₋₅ linear alkyl.

In some embodiments of the present invention, the liquid crystal composition A of the present invention further comprises at least one compound of general formula A-1 and/or general formula A-2: 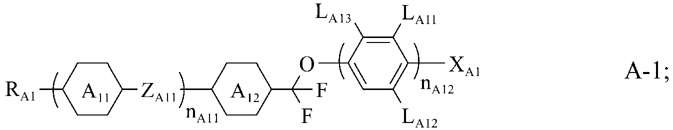 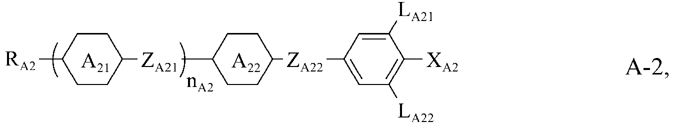 wherein,
R_{A1} and R_{A2} each independently represents C₁₋₁₂ (for example, C₁, C₂, C₃, C₄, C₅, C₆, C₇, C₈, C₉, C₁₀, C₁₁ or C₁₂) linear alkyl, C₃₋₁₂ (for example, C₃, C₄, C₅, C₆, C₇, C₈, C₉, C₁₀, C₁₁ or C₁₂) branched alkyl, 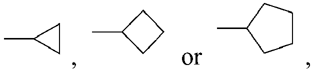 one or more than two nonadjacent -CH₂- in the C₁₋₁₂ linear alkyl and C₃₋₁₂ branched alkyl can each be independently replaced by -CH=CH-, -C=C-, -O-, -CO-, -CO-O- or -O-CO-, and one or more -H in the C₁₋₁₂ linear alkyl and C₃₋₁₂ branched alkyl can each be independently substituted by -F or -Cl;
ring 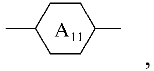 ring 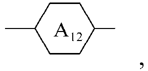 ring 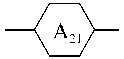 and ring 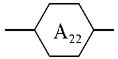 each independently represents 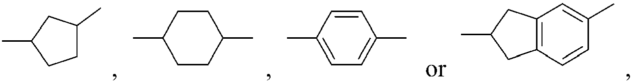 wherein one or more -CH₂- in 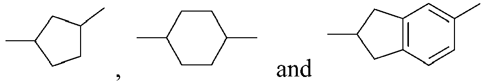 can be replaced by -O-, one or at most two single bonds in the rings can be replaced by double bond, wherein one or more -H in 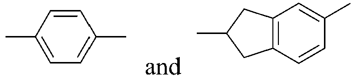 can each be independently substituted by -F, -Cl or -CN, one or more -CH= in the rings can be replaed by -N=;
Z_{A11}, Z_{A21} and Z_{A22} each independently represents single bond, -CH₂CH₂-, -CF₂CF₂-, -CO-O-, -O-CO-, -O-CO-O-, -CH=CH-, -CF=CF-, -CH₂O- or -OCH₂-;
L_{A11}, L_{A12}, L_{A13}, L_{A21} and L_{A22} each independently represents -H, C₁₋₃ alkyl or halo;
X_{A1} and X_{A2} each independently represents halo, C₁₋₅ halogenated alkyl or halogenated alkoxy, C₂₋₅ halogenated alkenyl or halogenated alkenoxy;
n_{A11} represents 0, 1, 2 or 3, when n_{A11} = 2 or 3, ring 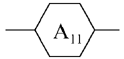 can be the same or different, Z_{A11} can be the same or different;
n_{A12} represents 1 or 2, wherein when n_{A12} = 2, ring 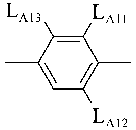 can be the same or different; and
n_{A2} represents 0, 1, 2 or 3, wherein when n_{A2} = 2 or 3, ring 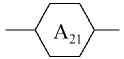 can be the same or different, Z_{A21} can be the same or different.

In some embodiments of the present invention, at least one compound of general formula A-1 and/or general formula A-2 provides (in percentage by weight) 0.1%-60% (including any of the numerical values or sub-ranges therebetween) of the liquid crystal composition A, for example, 0.1%, 1%, 2%, 4%, 6%, 8%, 10%, 11%, 12%, 13%, 14%, 15%, 16%, 17%, 18%, 20%, 22%, 24%, 25%, 26%, 28%, 30%, 32%, 34%, 35%, 36%, 38%, 40%, 42%, 44%, 46%, 48%, 50%, 52%, 54%, 56%, 58%, 60%, or a range between any two numerical values therein.

In some embodiments of the present invention, the compound of general formula A-1 is selected from a group consisting of the following compounds: 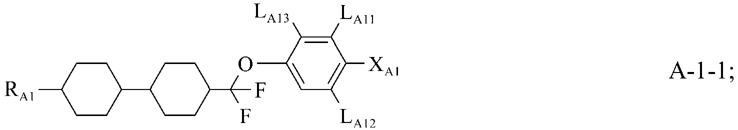 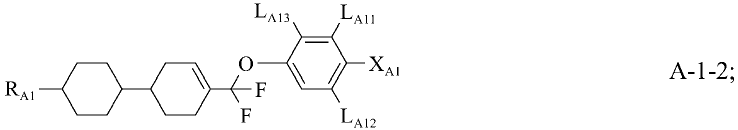 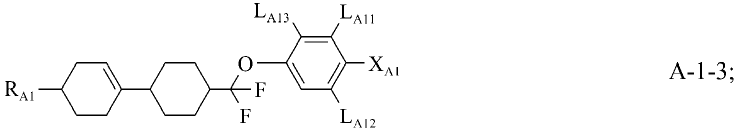 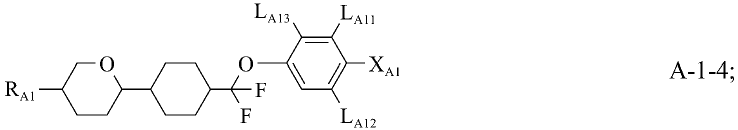 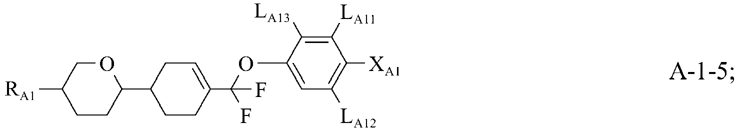 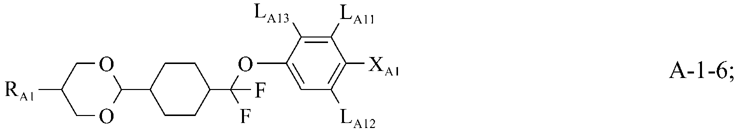 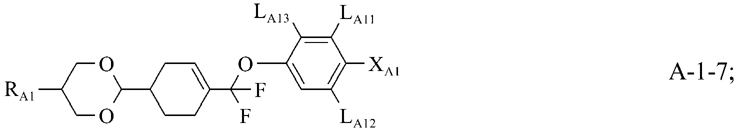 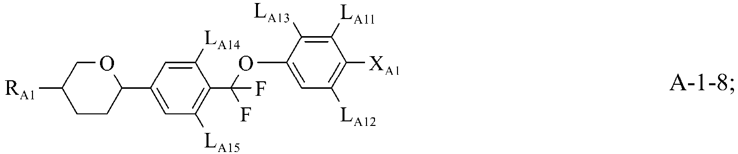 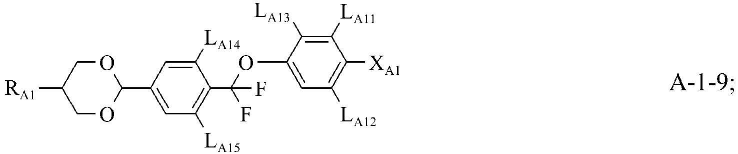 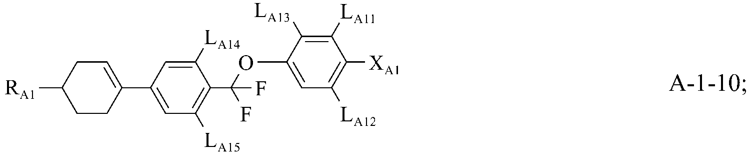 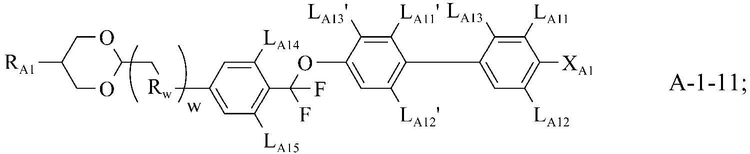 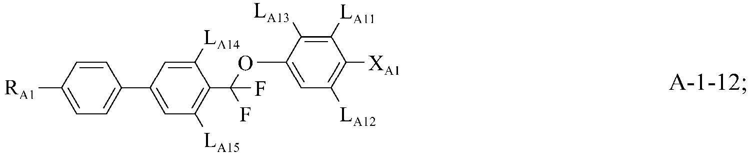 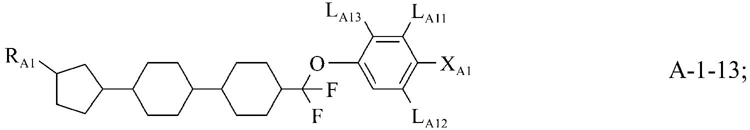 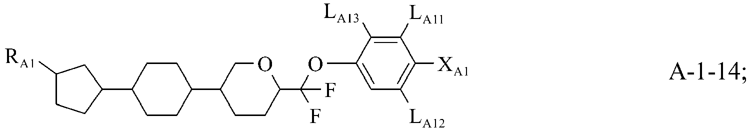 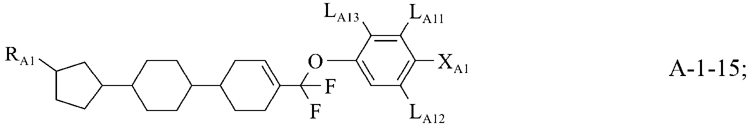 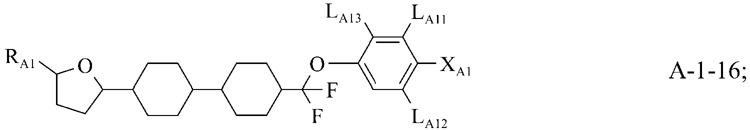 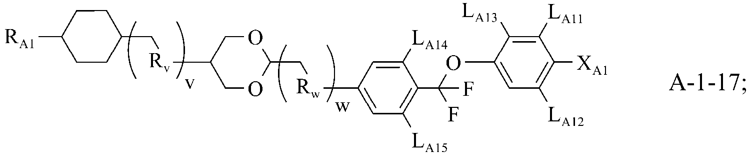 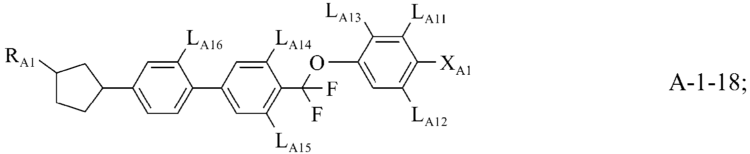 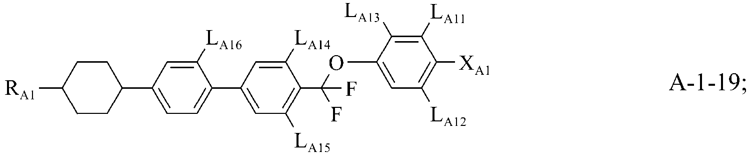 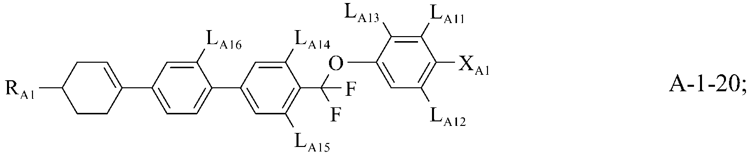 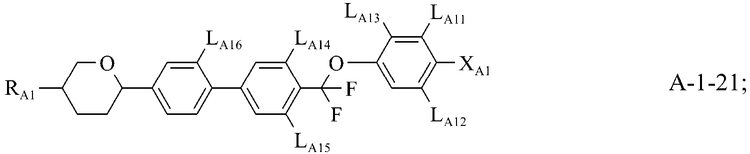 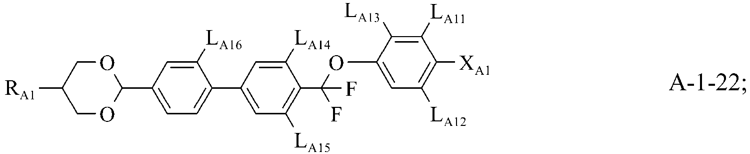 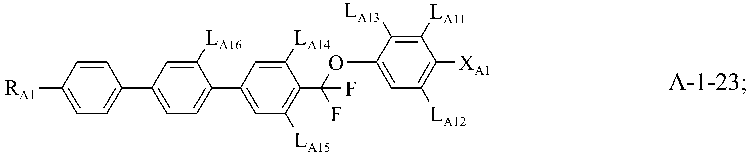 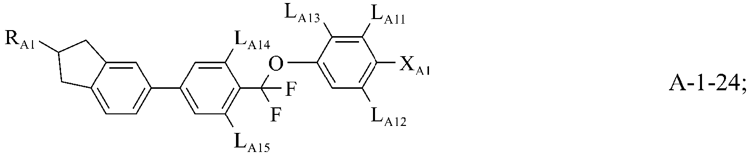 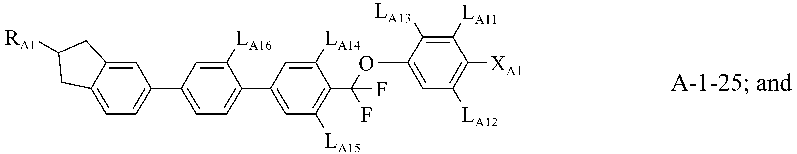 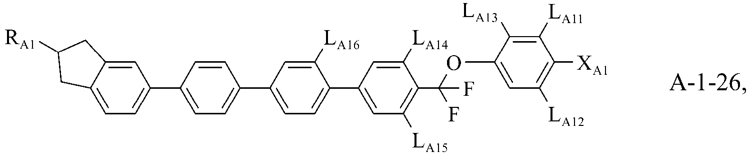 wherein,
Rᵥ and R_{w} each independently represents -CH₂- or -O-;
L_{A11}, L_{A12}, L_{A11}', L_{A12}', L_{A14}, L_{A15} and L_{A16} each independently represents -H or -F;
L_{A13} and L_{A13}' each independently represents -H or -CH₃;
X_{A1} represents -F, -CF₃ or -OCF₃; and
v and w each independently represents 0 or 1.

In some embodiments of the present invention, the compound of general formula A-1 provides (in percentage by weight) 0.1%-30% (including any of the numerical values or sub-ranges therebetween) of the liquid crystal composition A, for example, 0.1%, 1%, 2%, 4%, 6%, 8%, 10%, 11%, 12%, 13%, 14%, 15%, 16%, 17%, 18%, 20%, 22%, 24%, 25%, 26%, 28%, 30%, or a range between any two numerical values therein.

In some embodiments of the present invention, the compound of general formula A-2 is selected from a group consisting of the following compounds: 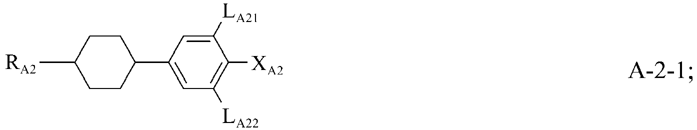 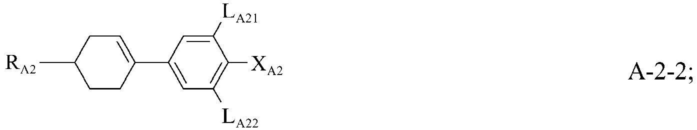 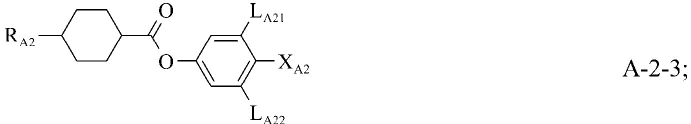 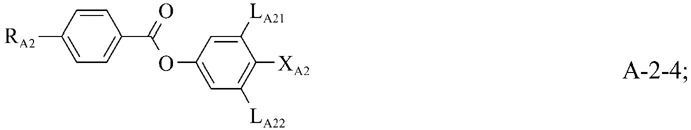 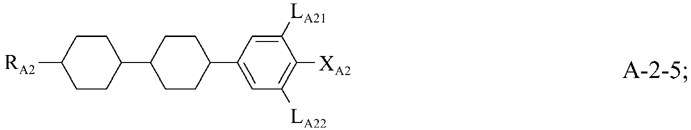 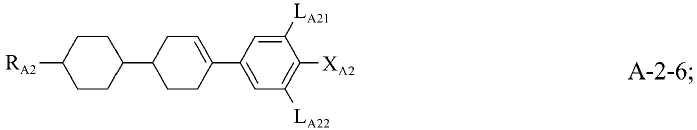 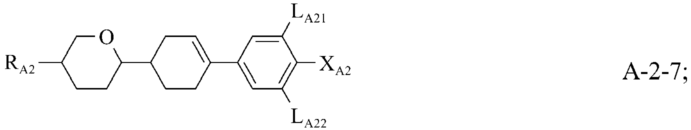 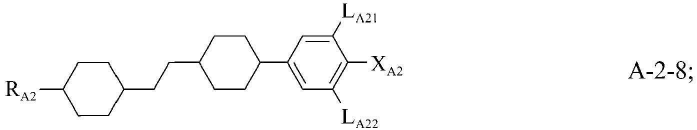 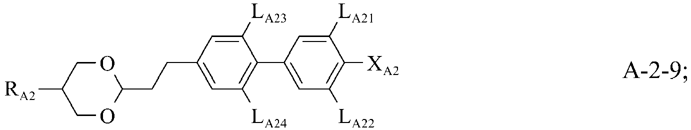 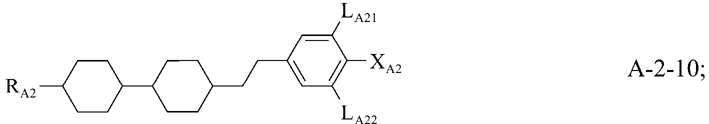 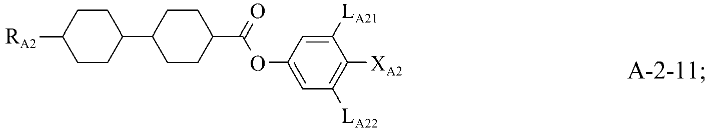 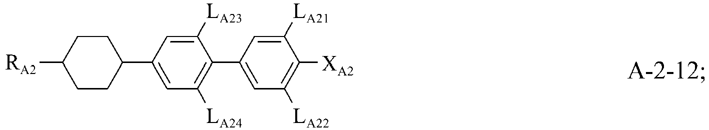 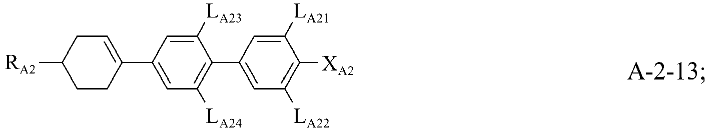 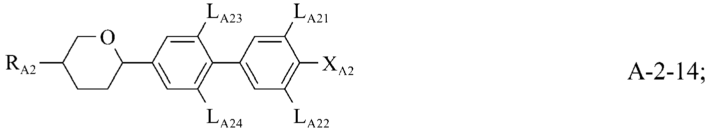 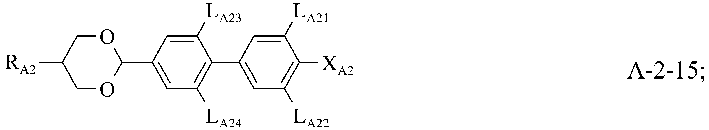 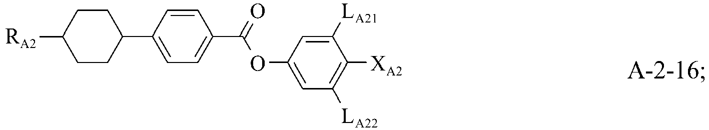 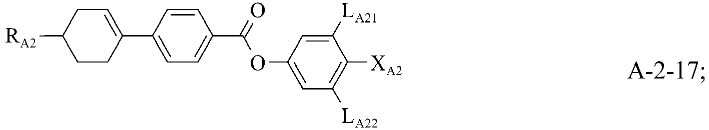 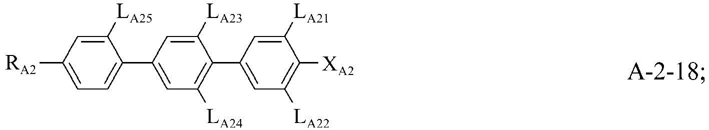 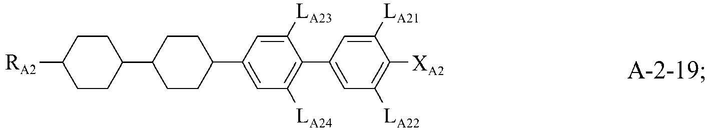 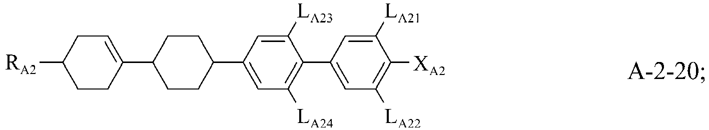 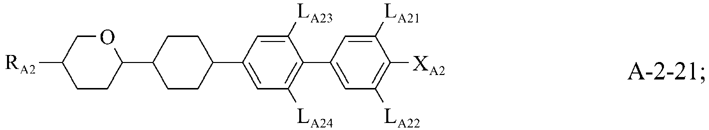 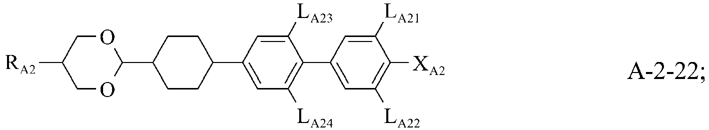 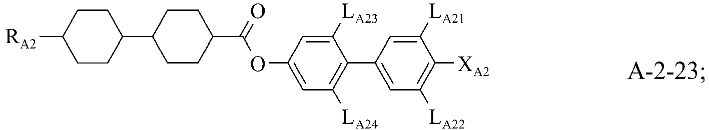 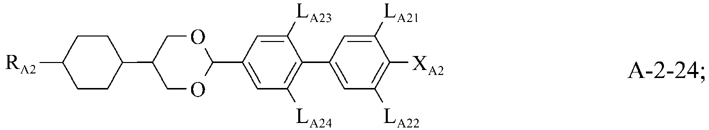 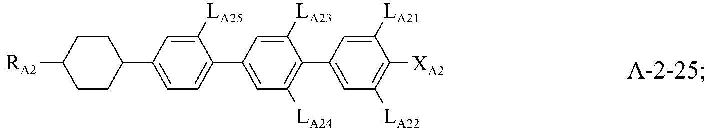 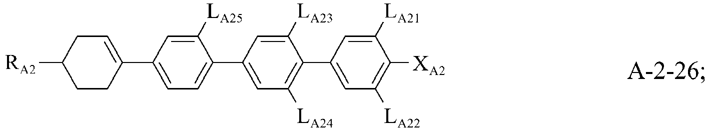 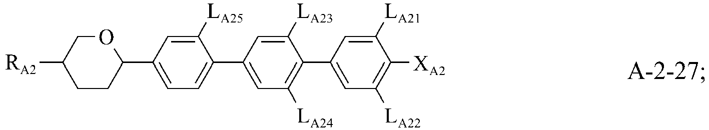 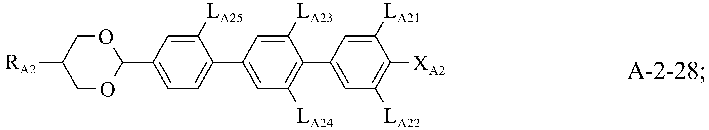 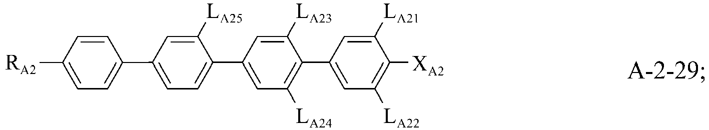 and 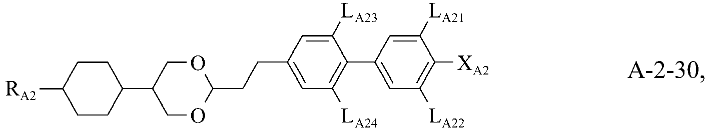 wherein,
L_{A21}, L_{A22}, L_{A23}, L_{A24} and L_{A25} each independently represents -H or -F; and
X_{A2} represents -F, -CF₃, -OCF₃ or -CH₂CH₂CH=CF₂.

In some embodiments of the present invention, the compound of general formula A-2 provides (in percentage by weight) 0.1%-50% (including any of the numerical values or sub-ranges therebetween) of the liquid crystal composition A, for example, 0.1%, 1%, 2%, 4%, 6%, 8%, 10%, 11%, 12%, 13%, 14%, 15%, 16%, 17%, 18%, 20%, 22%, 24%, 25%, 26%, 28%, 30%, 32%, 34%, 35%, 36%, 38%, 40%, 42%, 44%, 46%, 48%, 50%, or a range between any two numerical values therein.

In some embodiments of the present invention, at leat one compound of general formula A-1 and/or general formula A-2 provides (in percentage by weight) 0.1%-30% (including any of the numerical values or sub-ranges therebetween) of the liquid crystal composition, for example, 0.1%, 1%, 2%, 4%, 6%, 8%, 10%, 11%, 12%, 13%, 14%, 15%, 16%, 17%, 18%, 20%, 22%, 24%, 25%, 26%, 28%, 30% or a range between any two numerical values therein.

In addition to the above-mentioned compounds, the liquid crystal composition of the present invention may also contain conventional antioxidants, ultraviolet absorbers, infrared absorbers, photoinitiators, polymerizable monomers, or light stabilizers.

Further, additives (such as antioxidants, light stabilizers, and the like) used in the liquid crystal composition of the present invention are preferably to be the following substances: 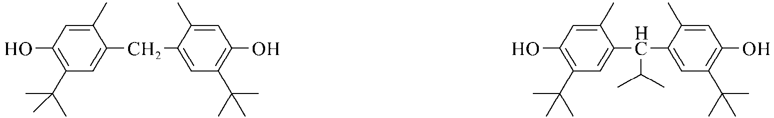 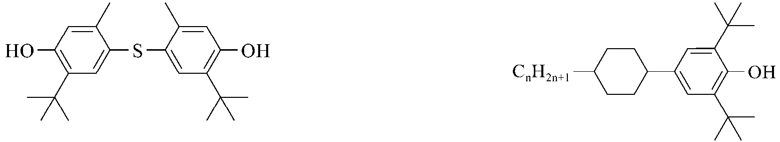 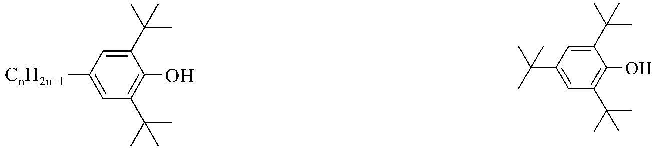 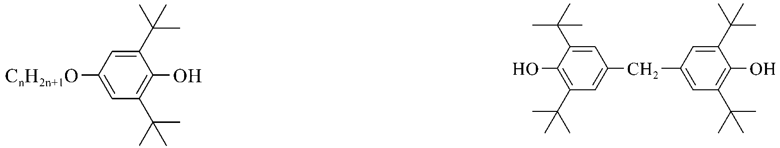 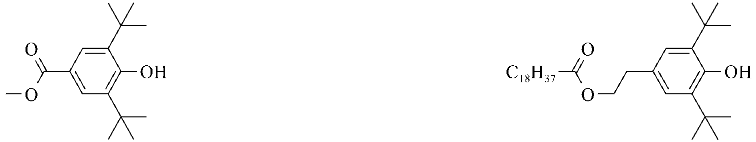 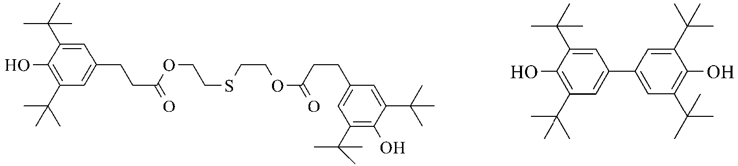 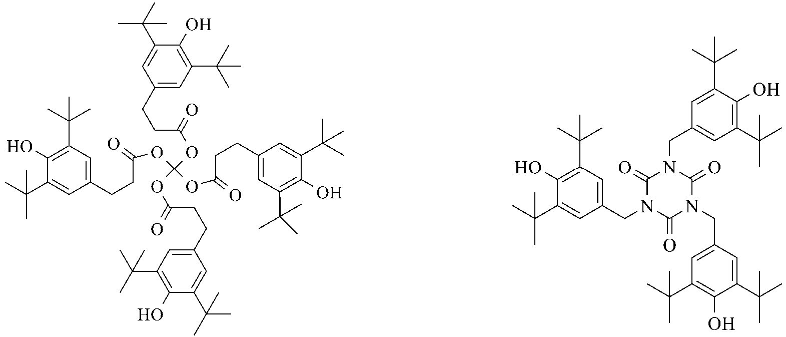 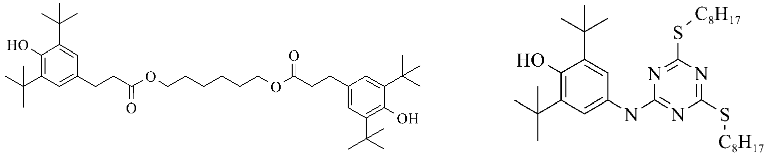 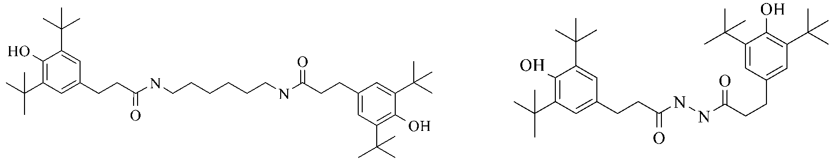 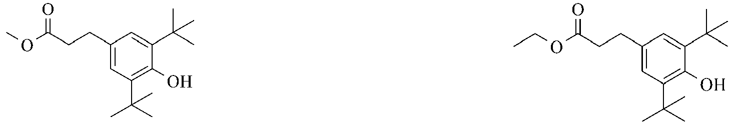 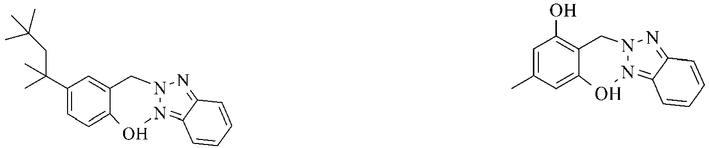 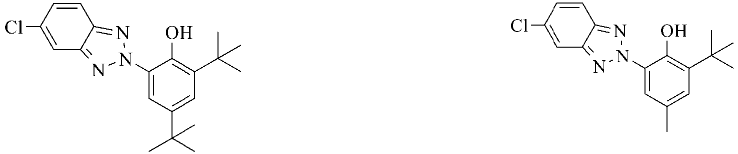 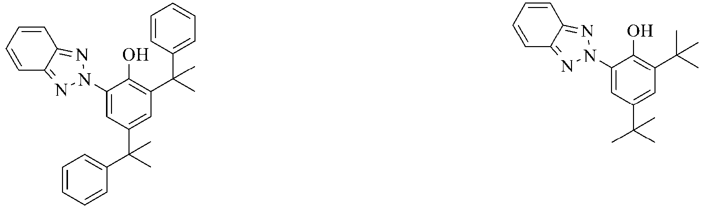 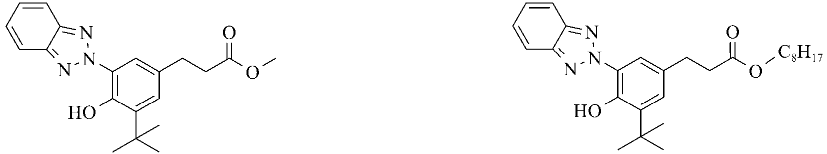 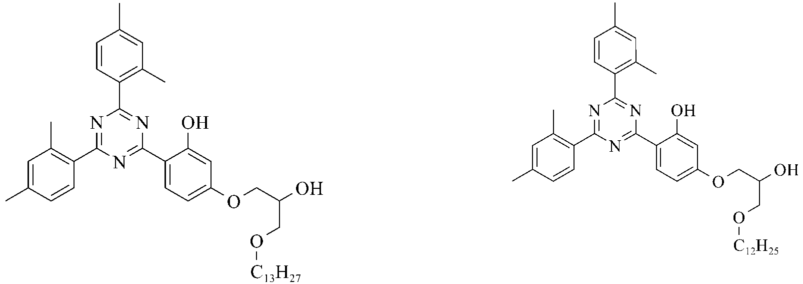 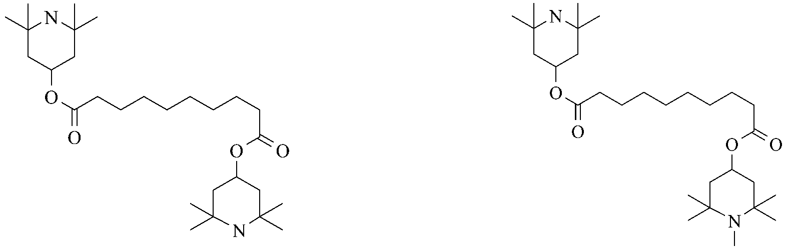 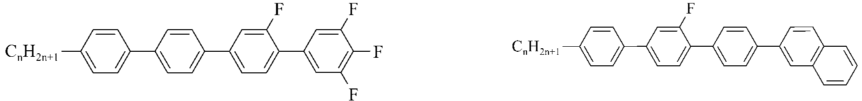 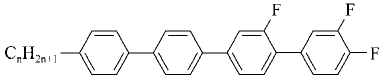 wherein, n represents a positive integer of 1-12.

Preferably, the antioxidant is selected from the photostabilizer as shown below:

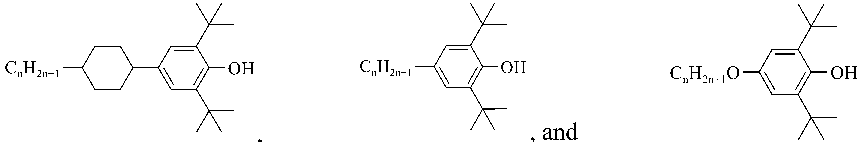

In some embodiments of the present invention, the additive provides (in percentage by weight) 0%-5% of the liquid crystal composition; preferably, the additive provides (in percentage by weight) 0.01%-1% of the liquid crystal composition.

In some embodiments of the present invention, liquid crystal composition A provides (in percentage by weight) 60%-99% (including any of the numerical values or sub-ranges therebetween) of the cholesteric liquid crystal composition, for example, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98%, 99%, or a range between any two numerical values therein.

The present invention further provides a liquid crystal display device comprising the above cholesteric liquid crystal composition.

In some embodiments of the present invention, the above liquid crystal composition is particularly suitable for VA, IPS or FFS type display element.

The present invention also provides the use of the above-mentioned cholesteric liquid crystal composition in the liquid crystal display panels, particularly in e-readers, electronic tags, display panels, privacy screens and the like.

**Beneficial effects:** as compared with the prior art, the cholesteric liquid crystal composition of the present invention has a higher clearing point, a better contrast and a smaller △λmax, while maintaining a smaller P-state voltage. That is, the cholesteric liquid crystal composition of the present invention has a smaller change in the side viewing angle (45°) reflection wavelength.

### DETAILED DESCRIPTION OF EMBODIMENTS

The present invention will be illustrated through the detailed embodiments below. It should be noted that, the following examples are exemplary embodiments of the present invention, which are only used to illustrate the present invention, not to limit it. Other combinations and various modifications within the conception of the present invention are possible without departing from the subject matter or scope of the present invention.

Unless otherwise specified, the performance parameters in the Examples and Comparative Examples of the present invention are tested at room temperature.

For the convenience of the expression, the group structures of each compound in the following Examples are represented by the codes listed in Table 1:

**Table 1. Codes of the group structures of the compounds**

| Unit structure of group | Code | Name of group | Unit structure of group | Code | Name of group |
|---|---|---|---|---|---|
| 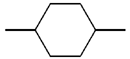 | C | 1,4-cyclohexylidene | -CN | N | cyano |
| 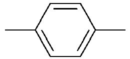 | P | 1,4-phenylene | -NCS | NCS | thiocyanato |
| 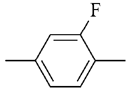 | G | 2-fluoro-1,4-phenylene | -CH₂CH₂- | 2 | ethyl bridge bond |
| 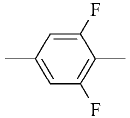 | U | 2,5-difluoro-1,4-phenylene | -CₙH₂ₙ₊₁ or -CₙH₂ₙ- | n (n represents an integer of 1-12) | alkyl or alkylene |
| -F | F | fluorine substituent | -CH₂O- | 1O | methyleneoxy |
| -O- | O | oxygen bridge group | 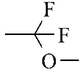 | Q | difluoromethoxy |
| -COO- | E | ester bridge bond | -C≡C- | T | acetenyl |
| -CH=CH- or -CH=CH₂ | V | vinylidene or vinyl | 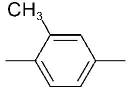 | P(1)' | 3-methyl-1,4-phenylene |
| 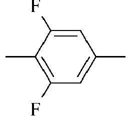 | U' | 3,5-difluoro-1,4-phenylene | 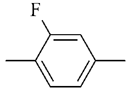 | G' | 3-fluoro-1,4-phenylene |

Take the compound with the following structural formula as an example: 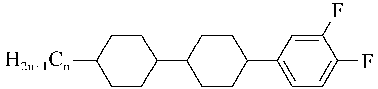 Represented by the codes listed in Table 1, this structural formula can be expressed as nCCGF, in which, n in the code represents the number of the carbon atoms of the alkyl on the left, for example, n is "3", meaning that the alkyl is -C₃H₇; C in the code represents 1,4-cyclohexylidene, G represents 2-fluoro-1,4-phenylene, and F represents fluoro.

The abbreviated codes of the test items in the following Examples are as follows:

| | |
|---|---|
| Cp¹ | clearing point of liquid crystal composition A (nematic-isotropy phases transition temperature, °C) |
| Cp² | clearing point of cholesteric liquid crystal composition (nematic-isotropy phases transition temperature, °C) |
| Δn | optical anisotropy (589 nm, 25°C) |
| nₒ | refractive index of ordinary light (589 nm, 25°C) |
| nₑ | refractive index of extraordinary light (589 nm, 25°C) |
| Δε | dielectric anisotropy (1 KHz, 25°C) |
| λmax | The wavelength with the highest reflectivity in the reflection spectrum (25°C) |
| λmax (45°) | the wavelength with the highest reflectivity in the reflection spectrum (25 °C), the reflectance spectrum is tested at 45° viewing angle in the |
| | P state |
| Δλmax | wavelength variation (25°C) |
| P-state voltage | the minimum voltage required to drive to the P state (V, 25°C) |
| R_{planar state} | the positive viewing angle reflectivity driven to the planar state |
| R_{focal conic state} | the positive viewing angle reflectivity driven to the focal conic state |
| CR | contrast (R_{planar state}/R_{focal conic state}) |

wherein,
Cp¹: measured with melting point apparatus.
Cp²: measured with melting point apparatus.
Δn: Δn = nₑ-nₒ, tested using an Abbe Refractometer under a sodium lamp (589 nm) light source at 25°C.
Δε: Δε = ε_{∥} - ε_{⊥}, in which, ε_{∥} is the dielectric constant parallel to the molecular axis; ε_{⊥} is the dielectric constant perpendicular to the molecular axis, test conditions: 25°C, 1 KHz, VA-type test cell with a cell gap of 6 µm.
λmax: filling the cholesteric liquid crystal into the test cell (cell gap: 4 µm; no PI alignment layer), using a DMS 505 photoelectric comprehensive tester to test the reflection spectrum of the P-state positive viewing angle, and identifying the wavelength with the highest reflectivity in the reflection spectrum.
λmax (45°): filling the cholesteric liquid crystal into the test cell (cell gap: 4 µm; no PI alignment layer), using a DMS 505 photoelectric comprehensive tester to test the reflection spectrum of the P state 45° viewing angle, and identifying the wavelength with the highest reflectivity in the reflection spectrum.
△λmax: λmax - λmax (45°).
P-state voltage: filling the cholesteric liquid crystal into the test cell (cell gap: 4 µm; no PI alignment layer), and identifying the minimum voltage required to drive to the P state.
R_{planar state}: filling the cholesteric liquid crystal into the test cell (cell gap: 4 µm; no PI alignment layer), and using a DMS 505 photoelectric comprehensive tester to test the positive viewing angle reflectivity driven to the planar state.
R_{focal conic state}: filling the cholesteric liquid crystal into the test cell (cell gap: 4 µm; no PI alignment layer), and using a DMS 505 photoelectric comprehensive tester to test the positive viewing angle reflectivity driven to the focal conic state.

The components used in the following Examples can either be synthesized by methods known in the art or be obtained commercially. The synthetic techniques are conventional, and each of the obtained liquid crystal compounds is tested and meets the standards of electronic compound.

The liquid crystal compositions are prepared in accordance with the ratios of each of the liquid crystal compounds specified in the following Examples. The preparation of the liquid crystal compositions is carried out according to the conventional methods in the art, such as mixed and prepared according to the ratios via means of heating, ultrasonic processing, suspending and so forth.

### LC1

The liquid crystal composition LC1 is prepared according to each compound and weight percentage listed in Table 2 and is tested by filling the same between two substrates of a liquid crystal display device.

**Table 2. Formulation and test results for performance parameters of liquid crystal composition LC1**

| Component code | Weight percentage | General formula code | Test results for performance parameters | |
|---|---|---|---|---|
| 2PEGN | 8 | II-2-14 | Cp¹ | 98 |
| 3PEGN | 8 | II-2-14 | Δn | 0.253 |
| 4PEGN | 12 | II-2-14 | nₒ | 1.514 |
| 5PEGN | 12 | II-2-14 | nₑ | 1.767 |
| 3PPTU'2 | 26 | I-2-6 | Δε | 37 |
| 3PPTU'4 | 31 | I-2-6 | | |
| 3CPN | 3 | II-1-1 | | |
| Total | 100 | | | |

### LC2

The liquid crystal composition LC2 is prepared according to each compound and weight percentage listed in Table 3 and is tested by filling the same between two substrates of a liquid crystal display device.

**Table 3. Formulation and test results for performance parameters of liquid crystal composition LC2**

| Component code | Weight percentage | General formula code | Test results for performance parameters | |
|---|---|---|---|---|
| 2PEGN | 5 | II-2-14 | Cp¹ | 103 |
| 3PEGN | 6 | II-2-14 | Δn | 0.241 |
| 4PEGN | 10 | II-2-14 | nₒ | 1.504 |
| 2CPEGN | 4 | II-3-2 | nₑ | 1.745 |
| 3CPEGN | 4 | II-3-2 | Δε | 49 |
| 4CPEGN | 4 | II-3-2 | | |
| 5CPEGN | 2 | II-3-2 | | |
| 3CPEUN | 2 | II-3-3 | | |
| 5PEUN | 10 | II-2-15 | | |
| 3PPTU'2 | 12 | I-2-6 | | |
| 4PPTU'2 | 10 | I-2-6 | | |
| 2PPTU'3 | 10 | I-2-6 | | |
| 4PPTU'3 | 11 | I-2-6 | | |
| 3CPO2 | 5 | M-5 | | |
| 5CCV | 5 | M-1 | | |
| Total | 100 | | | |

### LC3

The liquid crystal composition LC3 is prepared according to each compound and weight percentage listed in Table 4 and is tested by filling the same between two substrates of a liquid crystal display device.

**Table 4. Formulation and test results for performance parameters of liquid crystal composition LC3**

| Component code | Weight percentage | General formula code | Test results for performance parameters | |
|---|---|---|---|---|
| 3PEGN | 1 | II-2-14 | Cp¹ | 106 |
| 3CPEGN | 5 | II-3-2 | Δn | 0.251 |
| 4CPEGN | 4 | II-3-2 | nₒ | 1.51 |
| 5CPEGN | 5 | II-3-2 | nₑ | 1.761 |
| 3CPEUN | 2.5 | II-3-3 | Δε | 57 |
| 3UEUN | 5.5 | II-2-15 | | |
| 4PEUN | 5 | II-2-15 | | |
| 5PEUN | 5 | II-2-15 | | |
| 3UEGN | 5 | II-2-14 | | |
| 3PTPO2 | 3 | I-1-1-2 | | |
| 3CPTPO2 | 2 | I-2-1-2 | | |
| 3PPTU'2 | 18 | I-2-6 | | |
| 2PPTU'3 | 4 | I-2-6 | | |
| 4PPTU'3 | 4 | I-2-6 | | |
| 3PPTU'4 | 18 | I-2-6 | | |
| 3CPO2 | 5 | M-5 | | |
| V2PEUN | 8 | II-2-15 | | |
| Total | 100 | | | |

### LC4

The liquid crystal composition LC4 is prepared according to each compound and weight percentage listed in Table 5 and is tested by filling the same between two substrates of a liquid crystal display device.

**Table 5. Formulation and test results for performance parameters of liquid crystal composition LC4**

| Component code | Weight percentage | General formula code | Test results for performance parameters | |
|---|---|---|---|---|
| 3PEGN | 10 | II-2-14 | Cp¹ | 97 |
| 4PEGN | 15 | II-2-14 | Δn | 0.301 |
| 5PEGN | 10 | II-2-14 | nₒ | 1.519 |
| 2PTG'TU'3 | 4 | I-3-3-1 | nₑ | 1.82 |
| 3PPTU'2 | 10 | I-2-6 | Δε | 29 |
| 2PPTU'3 | 7 | I-2-6 | | |
| 3PPTU'4 | 10 | I-2-6 | | |
| 5PTG'TU'4 | 6 | I-3-3-1 | | |
| 5PTG'TU'3 | 6 | I-3-3-1 | | |
| 2PTP(1)'TU'3 | 4 | I-3-3-2 | | |
| 2PTP(1)'TU'4 | 6 | I-3-3-2 | | |
| 3PTP(1)'TU'4 | 6 | I-3-3-2 | | |
| 7PGNCS | 6 | III-1-6 | | |
| Total | 100 | | | |

### LC5

The liquid crystal composition LC5 is prepared according to each compound and weight percentage listed in Table 6 and is tested by filling the same between two substrates of a liquid crystal display device.

**Table 6. Formulation and test results for performance parameters of liquid crystal composition LC5**

| Component code | Weight percentage | General formula code | Test results for performance parameters | |
|---|---|---|---|---|
| 2PEGN | 3 | II-2-14 | Cp¹ | 92 |
| 3PEGN | 3 | II-2-14 | Δn | 0.213 |
| 3UEUN | 6 | II-2-15 | nₒ | 1.509 |
| 3CPEGN | 6 | II-3-2 | nₑ | 1.722 |
| 1PTPO2 | 4 | I-1-1-2 | Δε | 28 |
| 2PTPO1 | 5 | I-1-1-2 | | |
| 5PTPO1 | 3.8 | I-1-1-2 | | |
| 3PTPO2 | 5 | I-1-1-2 | | |
| 4PTPO2 | 5 | I-1-1-2 | | |
| 3CPTP2 | 3.5 | I-2-1-1 | | |
| 3CPTPO1 | 4 | I-2-1-2 | | |
| 5CPTPO1 | 3 | I-2-1-2 | | |
| 2CPTPO2 | 4 | I-2-1-2 | | |
| 3CPTPO2 | 4 | I-2-1-2 | | |
| V2PTP2V | 7.4 | I-1-1-5 | | |
| 3CPEUN | 5.5 | II-3-3 | | |
| 3CCV | 4.3 | M-1 | | |
| 4CPEUN | 3.5 | II-3-3 | | |
| 3PUQUF | 10 | A-1-12 | | |
| 3PGUQUF | 5 | A-1-23 | | |
| 4PGUQUF | 5 | A-1-23 | | |
| Total | 100 | | | |

### LC6

The liquid crystal composition LC6 is prepared according to each compound and weight percentage listed in Table 7 and is tested by filling the same between two substrates of a liquid crystal display device.

**Table 7. Formulation and test results for performance parameters of liquid crystal composition LC6**

| Component code | Weight percentage | General formula code | Test results for performance parameters | |
|---|---|---|---|---|
| 2PEGN | 4 | II-2-14 | Cp¹ | 106 |
| 3PEGN | 4 | II-2-14 | Δn | 0.218 |
| 4PEGN | 12 | II-2-14 | nₒ | 1.506 |
| 2CPEGN | 5 | II-3-2 | nₑ | 1.724 |
| 3CPEGN | 5 | II-3-2 | Δε | 43 |
| 4CPEGN | 4 | II-3-2 | | |
| 5CPEGN | 5 | II-3-2 | | |
| 5PEUN | 10 | II-2-15 | | |
| 5PTPO1 | 5 | I-1-1-2 | | |
| 3CPTP2 | 12 | I-2-1-1 | | |
| 3CEPTP1 | 5 | I-3-5 | | |
| 3CEPTP5 | 4 | I-3-5 | | |
| 5CPPN | 5 | II-5-1 | | |
| 5CPGN | 5 | II-5-2 | | |
| 2PPN | 5 | II-1-5 | | |
| 5PPN | 5 | II-1-5 | | |
| V2PTP2V | 5 | I-1-1-5 | | |
| Total | 100 | | | |

### DLC1

The liquid crystal composition DLC1 is prepared according to each compound and weight percentage listed in Table 8 and is tested by filling the same between two substrates of a liquid crystal display device.

**Table 8. Formulation and test results for performance parameters of liquid crystal composition DLC1**

| Component code | Weight percentage | General formula code | Test results for performance parameters | |
|---|---|---|---|---|
| 5CCEPC3 | 3 | M-51 | Cp¹ | 95 |
| 3CCEPC5 | 2 | M-51 | Δn | 0.100 |
| 2PEGN | 3 | II-2-14 | nₒ | 1.489 |
| 3PEGN | 4 | II-2-14 | nₑ | 1.589 |
| 4PEGN | 5 | II-2-14 | Δε | 16.2 |
| 5PEGN | 5 | II-2-14 | | |
| 3CCEGN | 4 | II-3-18 | | |
| 3CCEGF | 3 | A-2-11 | | |
| 3CCEUF | 3 | A-2-11 | | |
| 5CCEUF | 3 | A-2-11 | | |
| 3CUN | 6 | II-1-4 | | |
| 5CPF | 3 | A-2-1 | | |
| VCCGF | 13 | A-2-5 | | |
| V2CCP1 | 6 | M-22 | | |
| V2CCGF | 9 | A-2-5 | | |
| 5CCV | 15 | M-1 | | |
| VCCP1 | 13 | M-22 | | |
| Total | 100 | | | |

### DLC2

The liquid crystal composition DLC2 is prepared according to each compound and weight percentage listed in Table 9 and is tested by filling the same between two substrates of a liquid crystal display device.

**Table 9. Formulation and test results for performance parameters of liquid crystal composition DLC2**

| Component code | Weight percentage | General formula code | Test results for performance parameters | |
|---|---|---|---|---|
| 1PTPO2 | 5 | I-1-1-2 | Cp¹ | 101 |
| 3PTPO2 | 5 | I-1-1-2 | Δn | 0.244 |
| 3CPTPO2 | 3.5 | I-2-1-2 | nₒ | 1.509 |
| 3PPTU'2 | 13 | I-2-6 | nₑ | 1.753 |
| 2PPTU'3 | 12.5 | I-2-6 | Δε | 9 |
| 3GGPF | 1.5 | A-2-18 | | |
| 3CPO1 | 5.5 | M-5 | | |
| 3CPO2 | 6.5 | M-5 | | |
| 3CGPC3 | 3 | M-37 | | |
| 3CCV | 5 | M-1 | | |
| 3PGPF | 2 | A-2-18 | | |
| 3PUQUF | 16.5 | A-1-12 | | |
| 3PGUQUF | 3 | A-1-23 | | |
| 4PGUQUF | 3 | A-1-23 | | |
| 5PGUQUF | 3 | A-1-23 | | |
| 1PGP2V | 4 | M-37 | | |
| 2PGP2V | 4 | M-37 | | |
| 3PGP2V | 4 | M-37 | | |
| Total | 100 | | | |

### Comparative Examples 1-3 and Examples 1-3

The cholesteric liquid crystal compositions are prepared according to each compound and weight percentage listed in Table 10 and are tested by filling the same between two substrates of a liquid crystal display device (without PI alignment layer).

**Table 10. Formulations and test results for performance parameters of cholesteric liquid crystal compositions**

| Formulations of cholesteric liquid crystal composition | | | | | | |
|---|---|---|---|---|---|---|
| | Comp. Exp. 1 | Comp. Exp. 2 | Comp. Exp. 3 | Exp. 1 | Exp. 2 | Exp. 3 |
| DLC1 | 98.02 | | | | | |
| DLC2 | | 97.97 | | | | |
| LC1 | | | 97.93 | 97.93 | 97.93 | 97.93 |
| R/S-5011 | 1.98 | 2.03 | 2.07 | 2.07 | 2.07 | 2.07 |
| Dye 14 | 0 | 0 | 0 | 0.5 | 1.0 | 1.5 |

| Test results for performance parameters | | | | | | |
|---|---|---|---|---|---|---|
| Cp² | 93 | 98.8 | 95.9 | 96.2 | 96.3 | 96.6 |
| R_{planar state} | 12.4 | 16.5 | 17.1 | 16.7 | 16.5 | 16.1 |
| R_{focal conic state} | 2.78 | 3.48 | 3.64 | 2.47 | 2.41 | 2.35 |
| CR | 4.5 | 4.7 | 4.7 | 6.8 | 6.8 | 6.9 |
| λmax | 652 | 651 | 651 | 648 | 647 | 645 |
| λmax (45°) | 608 | 596 | 603 | 622 | 626 | 629 |
| Δλmax | 44 | 55 | 48 | 26 | 21 | 16 |
| P-state voltage | 24 | 29 | 17 | 17 | 17 | 17 |

wherein, Dye 14 in Table 10 refers to the dye corresponding to Dye Number 14.

From the comparisons between Comparative Examples 1-2 and Examples 1-3, it can be seen that the cholesteric liquid crystal composition using the liquid crystal composition A of the present invention as the host liquid crystal has a higher clearing point, a better contrast, a smaller P-state voltage, and a smaller Δλmax than other liquid crystal compositions. That is, the cholesteric liquid crystal composition of the present invention has a smaller change in the side viewing angle (45°) reflection wavelength, can effectively improve the side viewing angle color cast, and can switch to P-state when driven by a lower voltage, which is more energy-efficient.

From the comparisons between Comparative Example 3 and Examples 1-3, it can be seen that through the synergistic coordination of the components, the cholesteric liquid crystal composition of the present invention exhibits a higher clearing point, a better contrast, and a smaller △λmax, while maintaining a lower P-state voltage. That is, the cholesteric liquid crystal composition of the present invention has a smaller change in the side viewing angle (45°) reflection wavelength.

### Comparative Examples 4-8 and Examples 4-8

The cholesteric liquid crystal compositions are prepared according to each compound and weight percentage listed in Table 11 and are tested by filling the same between two substrates of a liquid crystal display device (without PI alignment layer).

**Table 11. Formulations and test results for performance parameters of cholesteric liquid crystal compositions**

| Formulations of cholesteric liquid crystal composition | | | | | | | | | | |
|---|---|---|---|---|---|---|---|---|---|---|
| | Comp. Exp. 4 | Exp. 4 | Comp. Exp. 5 | Exp. 5 | Comp. Exp. 6 | Exp. 6 | Comp. Exp. 7 | Exp. 7 | Comp. Exp. 8 | Exp. 8 |
| LC2 | 97.02 | 97.02 | | | | | | | | |
| LC3 | | | 97.15 | 97.15 | | | | | | |
| LC4 | | | | | 95.65 | 95.65 | | | | |
| LC5 | | | | | | | 72.80 | 72.80 | | |
| LC6 | | | | | | | | | 76.90 | 76.90 |
| R/S-5011 | 2.98 | 2.98 | 2.85 | 2.85 | | | | | | |
| R/S-6N | | | | | 4.35 | 4.35 | | | | |
| R/S-2011 | | | | | | | 27.20 | 27.20 | | |
| R/S-811 | | | | | | | | | 23.10 | 23.10 |
| Dye 1 | | 0.3 | | | | | | | | |
| Dye 9 | | 0.8 | | | | | | | | |
| Dye 12 | | | | 0.4 | | | | | | |
| Dye 21 | | | | 0.6 | | | | | | |
| Dye 13 | | | | | | 0.7 | | | | |
| Dye 5 | | | | | | | | 1 | | |
| Dye 34 | | | | | | | | | | 0.8 |

| Test results for performance parameters | | | | | | | | | | |
|---|---|---|---|---|---|---|---|---|---|---|
| Cp² | 99.2 | 99.6 | 103 | 103.2 | 98 | 98.4 | 87.6 | 88.1 | 91.7 | 92.1 |
| R_{planar state} | 13.2 | 13 | 17.5 | 17.1 | 24.5 | 24.1 | 27.4 | 26.9 | 19.5 | 19.2 |
| R_{focal conic state} | 3.48 | 2.16 | 3.58 | 2.08 | 3.81 | 2.31 | 3.84 | 2.28 | 3.63 | 2.35 |
| CR | 3.8 | 6.0 | 4.9 | 8.2 | 6.4 | 10.4 | 7.1 | 11.8 | 5.4 | 8.2 |
| λmax | 460 | 459 | 496 | 494 | 531 | 529 | 583 | 580 | 622 | 621 |
| λmax (45°) | 415 | 437 | 452 | 471 | 486 | 508 | 542 | 557 | 576 | 598 |
| Δλmax | 45 | 22 | 44 | 23 | 45 | 21 | 41 | 23 | 46 | 23 |
| P-state voltage | 16 | 16 | 15 | 15 | 19 | 19 | 19 | 19 | 17 | 17 |

wherein, Dye 1, Dye 9, Dye 12, Dye 21, Dye 13, Dye 5, and Dye 34 in Table 11 refer to the dyes corresponding to Dye Numbers 1, 9, 12, 21, 13, 5, and 34, respectively.

From the comparisons between the data of each Example and Comparative Example in Table 11, it can be seen that, through the synergistic coordination of the components, the cholesteric liquid crystal composition of the present invention exhibits a higher clearing point, a better contrast, and a smaller Δλmax while maintaining a lower P-state voltage. That is, the cholesteric liquid crystal composition of the present invention has a smaller change in the side viewing angle (45°) reflection wavelength.

### Examples 9-13

The cholesteric liquid crystal compositions are prepared according to each compound and weight percentage listed in Table 12 and are tested by filling the same between two substrates of a liquid crystal display device (without PI alignment layer).

**Table 12. Formulations and test results for performance parameters of cholesteric liquid crystal compositions**

| Formulations of cholesteric liquid crystal composition | | | | | |
|---|---|---|---|---|---|
| | Exp. 9 | Exp. 10 | Exp. 11 | Exp. 12 | Exp. 13 |
| LC1 | 66.30 | 77.10 | 76.00 | 96.64 | 97.81 |
| CB 15 | 33.70 | | | | |
| R/S-811 | | 22.90 | | | |
| R/S-2011 | | | 24.00 | | |
| R/S-6N | | | | 3.36 | |
| R/S-5011 | | | | | 2.19 |
| Dye 14 | 1 | 1 | 1 | 1 | 1 |

| Test results for performance parameters | | | | | |
|---|---|---|---|---|---|
| Cp² | 68.1 | 86.2 | 92.9 | 98.4 | 96.5 |
| λmax | 633 | 634 | 635 | 633 | 634 |
| R_{planar state} | 17.4 | 17.7 | 18.2 | 18.8 | 18.9 |
| R_{focal conic state} | 2.28 | 2.3 | 2.31 | 2.31 | 2.3 |
| CR | 7.6 | 7.7 | 7.9 | 8.1 | 8.2 |
| λmax (45°) | 604 | 608 | 610 | 612 | 614 |
| Δλmax | 29 | 26 | 25 | 21 | 20 |
| P-state voltage | 17 | 17 | 17 | 17 | 17 |

wherein, Dye 14 in Table 12 refers to the dye corresponding to Dye Number 14.

From the comparisons between the data in Table 12, it can be seen that through the synergistic coordination of the components, the cholesteric liquid crystal composition of the present invention has a higher clearing point, a better contrast, and a smaller Δλmax, while maintaining a lower P-state voltage. That is, the cholesteric liquid crystal composition of the present invention has a smaller change in the side viewing angle (45°) reflection wavelength. When the chiral agent is R/S-2011, R/S-5011, or R/S-6N, the cholesteric liquid crystal composition containing the same has a further higher clearing point, a further better contrast, and a further smaller Δλmax.

In summary, through the synergistic coordination of the components, the cholestatic liquid crystal composition of the present invention exhibits a higher clearing point, a better contrast, and a smaller Δλmax while maintaining a lower P-state voltage. That is, the cholestatic liquid crystal composition of the present invention has a smaller change in the side viewing angle (45°) reflection wavelength.

The above embodiments are only intended to illustrate the technical concepts and the features of the present invention, the purpose thereof is to enable those skilled in the art to understand and implement the content of the present invention, rather than to limit the protection scope of the present invention. Equivalent variations or modifications made in accordance with the spiritual essence of the present invention should be encompassed within the protection scope of the present invention.

### Industrial Applicability

The cholesteric liquid crystal composition and the liquid crystal display device containing the same according to the present invention can be applied in the field of liquid crystal.

## Claims

1. A cholesteric liquid crystal composition, **characterized in that**, the cholesteric liquid crystal composition comprises at least one liquid crystal composition A, at least one chiral agent and at least one dye, the liquid crystal composition A comprises at least one compound of general formula I, and at least one compound of general formula II: 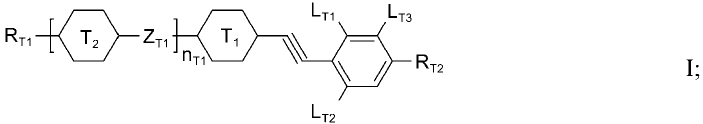 and 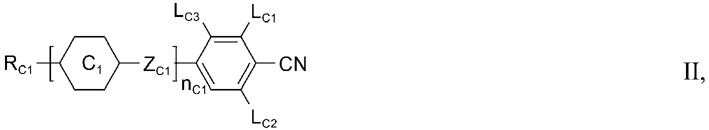 wherein,
R_{T1} and R_{T2} each independently represents -H, C₁₋₁₂ linear alkyl, C₃₋₁₂ branched alkyl, 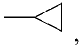 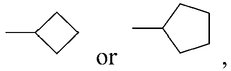 one or more than two nonadjacent -CH₂- in the C₁₋₁₂ linear alkyl and C₃₋₁₂ branched alkyl can each be independently replaced by -CH=CH-, -C=C-, -O-, -CO-, -COO- or -O-CO-;
R_{C1} represents -H, C₁₋₁₂ linear alkyl, C₃₋₁₂ branched alkyl, 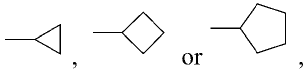 one or more than two nonadjacent -CH₂- in the C₁₋₁₂ linear alkyl and C₃₋₁₂ branched alkyl can each be independently replaced by -CH=CH-, -C=C-, -O-, -CO-, -CO-O- or -O-CO-, and one or more -H in the C₁₋₁₂ linear alkyl and C₃₋₁₂ branched alkyl can each be independently substituted by -F or -Cl;
ring 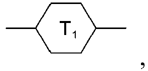 ring 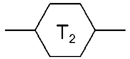 and ring 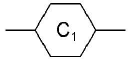 each independently represents 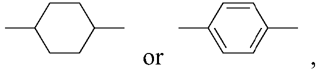 wherein one or more -CH₂- in 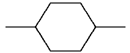 can be replaced by -O-, one or at most two single bonds in the rings can be replaced by double bond, wherein one or more -H in 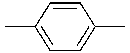 can each be independently substituted by -F, -Cl or C₁₋₃ halogenated or unhalogenated alkyl or alkoxy, one or more -CH= in the rings can be replaced by -N=;
Z_{T1} and Z_{C1} each independently represents single bond, -CO-O-, -O-CO-, -CH₂O-, -OCH₂-, - CH=CH-, -C=C-, -CH₂CH₂-, -CF₂CF₂-, -(CH₂)₄-, -CF₂O or -OCF₂-;
L_{T1} L_{T2}, L_{C1} and L_{C2} each independently represents -H, halo, C₁₋₃ halogenated alkyl or halogenated alkoxy;
L_{T3} and L_{C3} each independently represents -H, C₁₋₃ alkyl or alkoxy;
n_{T1} represents 0, 1 or 2, when n_{T1} = 2, ring 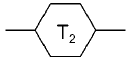 can be the same or different, Z_{T1} can be the same or different; and
n_{C1} represents 0, 1, 2 or 3, when n_{C1} = 2 or 3, ring 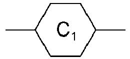 can be the same or different, Z_{C1} can be the same or different.

2. The cholesteric liquid crystal composition according to claim 1, **characterized in that**, the compound of general formula I is selected from a group consisting of the following compounds: 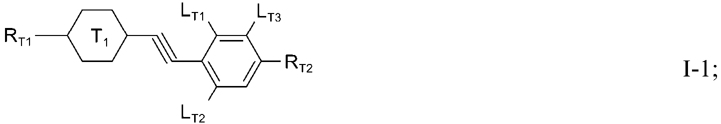 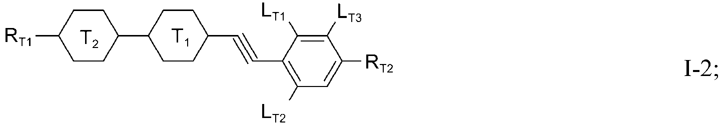 and 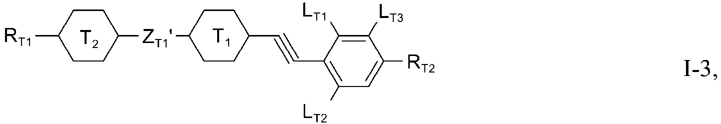
the compound of general formula II is selected from a group consisting of the following compounds: 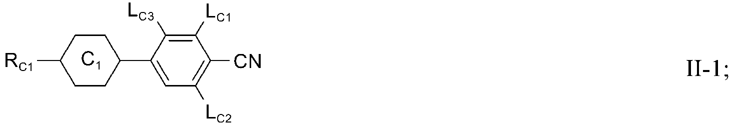 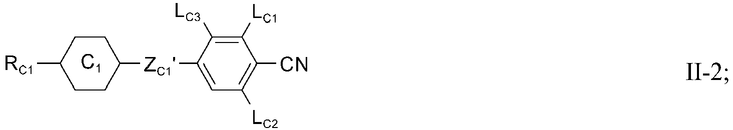 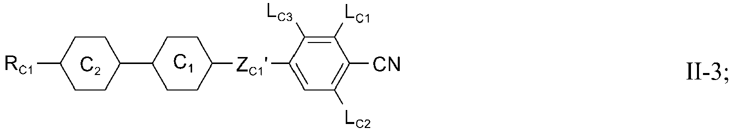 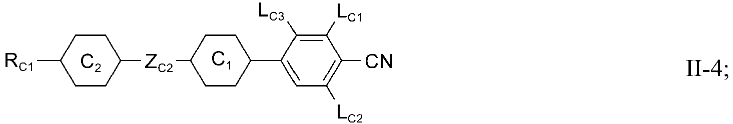 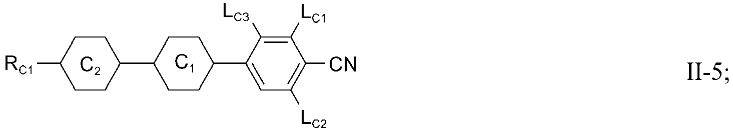 and 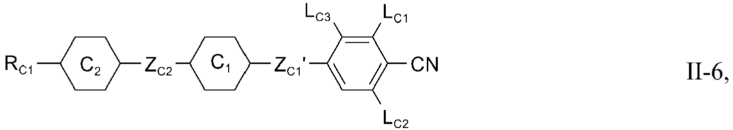
wherein,
Z_{T1}', Z_{C1}' and Z_{C2} each independently represents -CO-O-, -O-CO-, -CH₂O-, -OCH₂-, -CH=CH-, -C=C-, -CH₂CH₂-, -CF₂CF₂- or -(CH₂)₄-;
L_{T1}, L_{T2}, L_{C1} and L_{C2} each independently represents -H, -F, -Cl, -CF₃ or -OCF₃;
L_{T3} and L_{C3} each independently represents -H, -CH₃, -OCH₃, -CH₂CH₃ or -OCH₂CH₃; and
ring 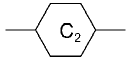 represents 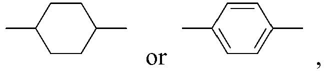 wherein one or more -CH₂- in 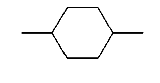 can be replaced by -O-, one or at most two single bonds in the rings can be replaced by double bond, wherein one or more -H in 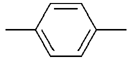 can each be independently substituted by -F, -Cl or C₁₋₃ halogenated or unhalogenated alkyl or alkoxy, one or more -CH= in the rings can be replaced by -N=.

3. The cholesteric liquid crystal composition according to claim 2, **characterized in that**, the compound of general formula I is selected from a group consisting of the following compounds: 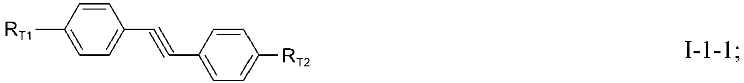 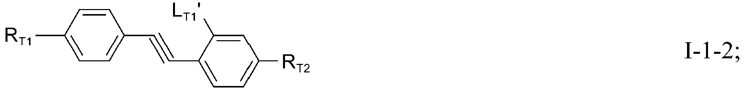 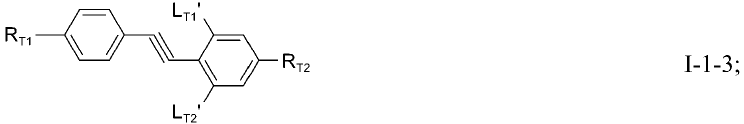 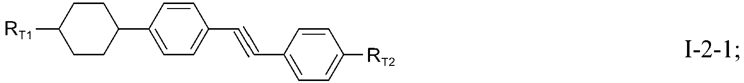 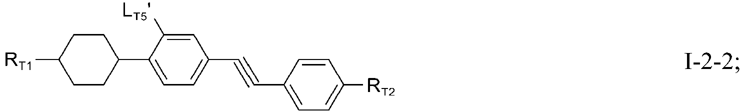 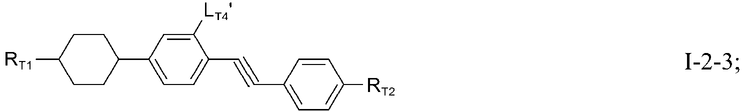 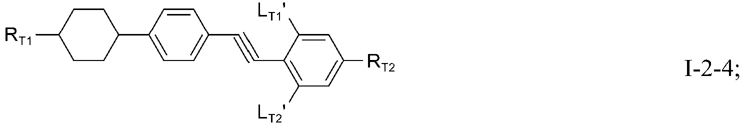 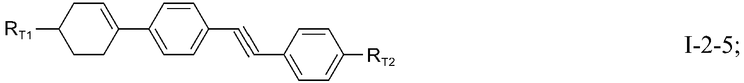 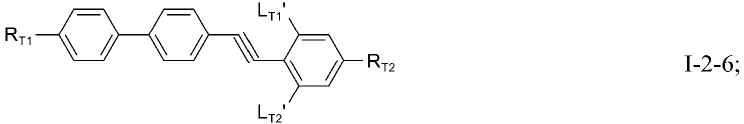 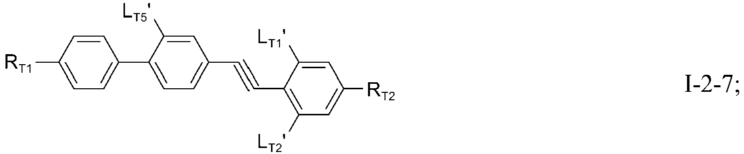 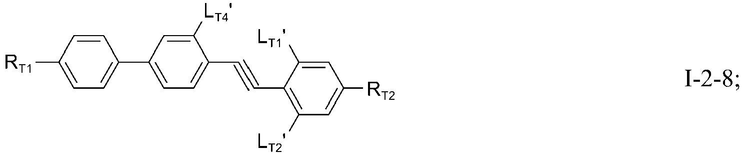 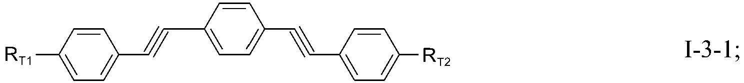 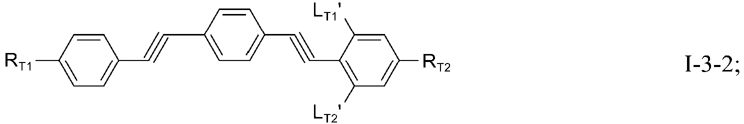 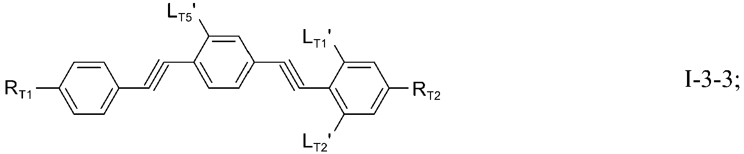 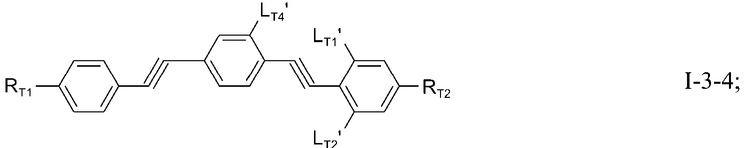 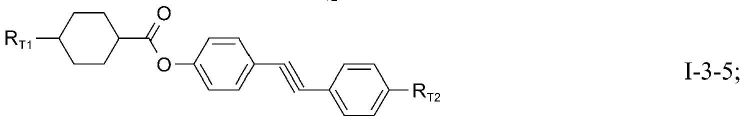 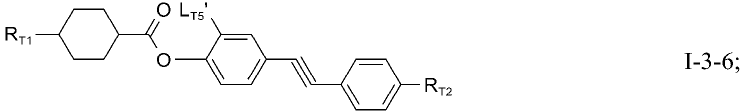 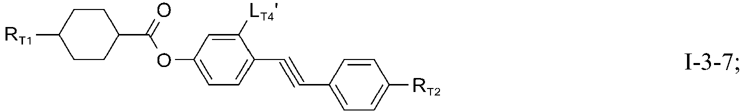 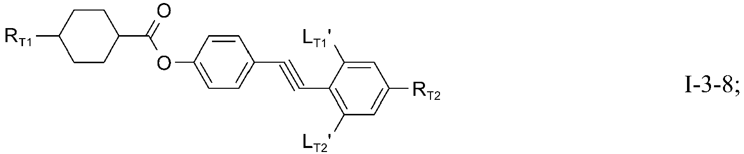 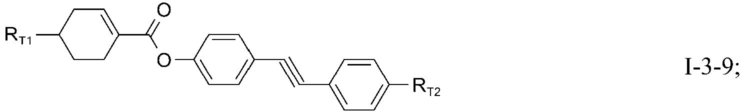 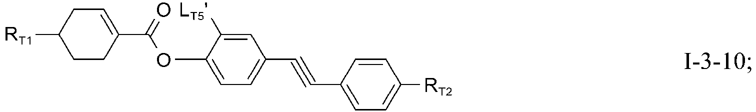 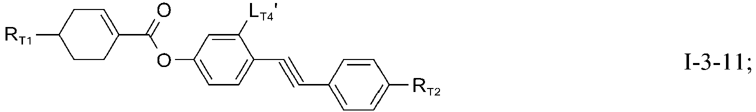 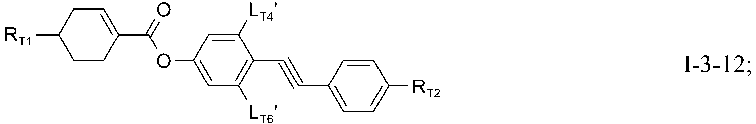 and 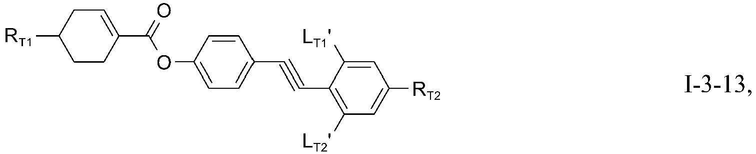
the compound of general formula II is selected from a group consisting of the following compounds: 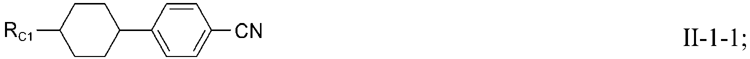 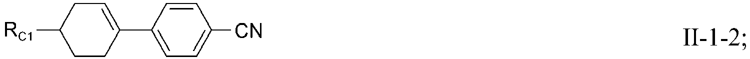 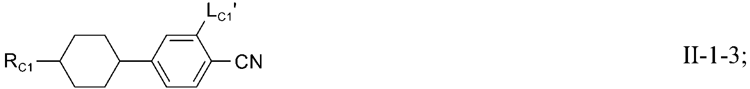 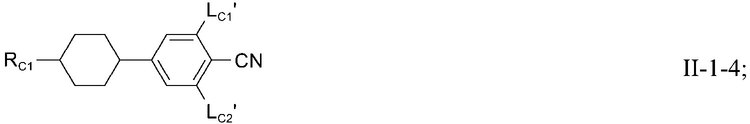 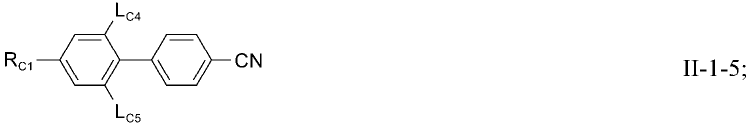 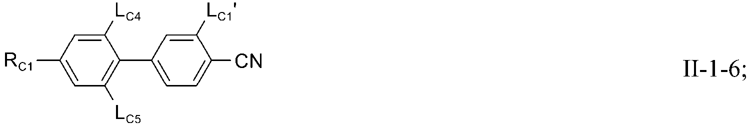 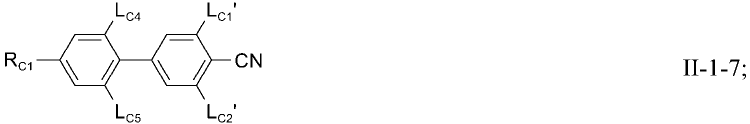 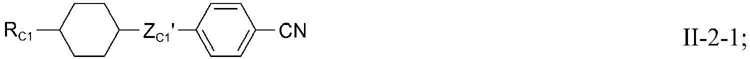 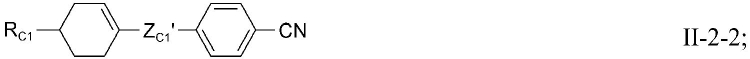 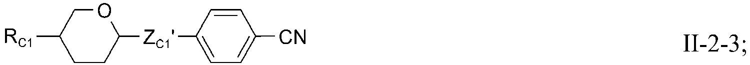 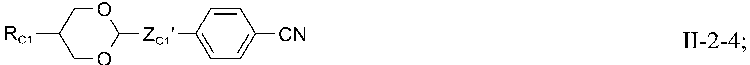 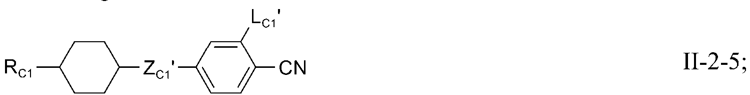 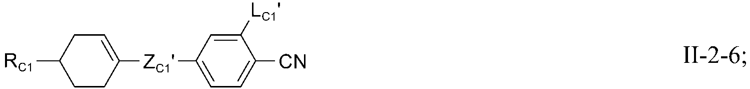 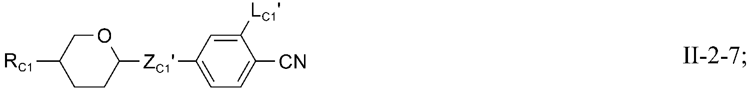 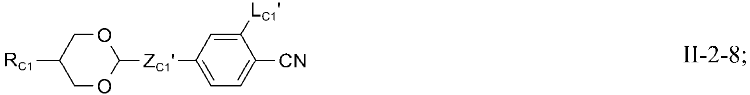 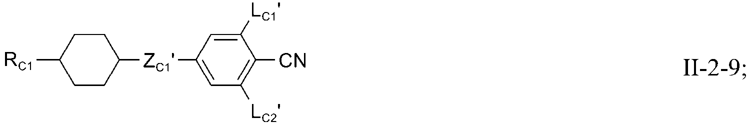 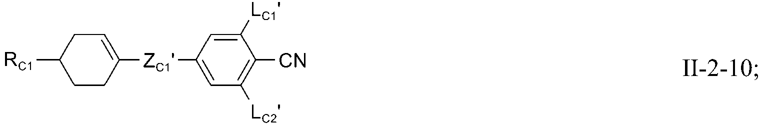 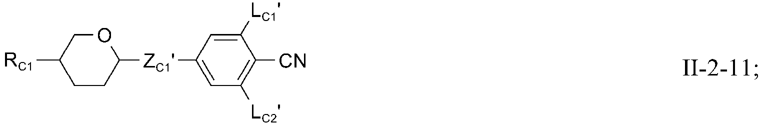 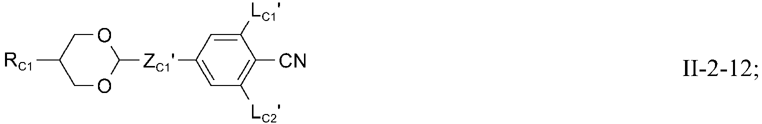 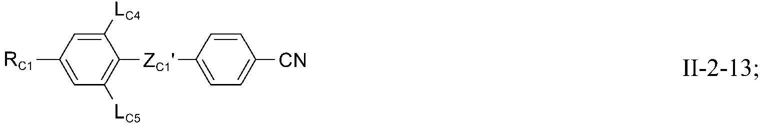 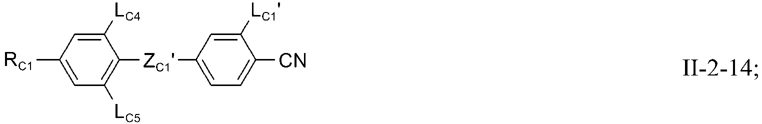 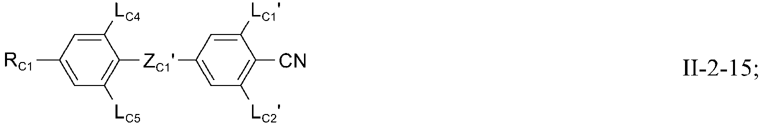 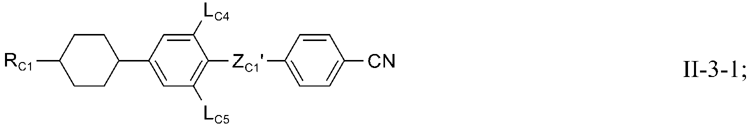 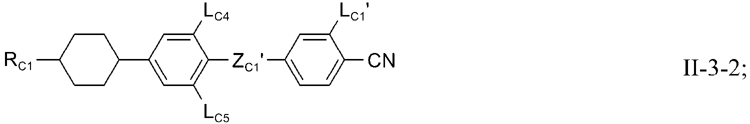 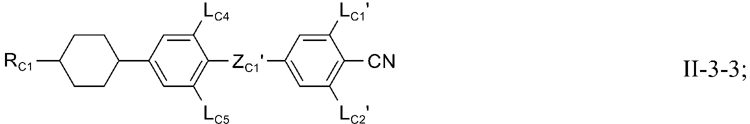 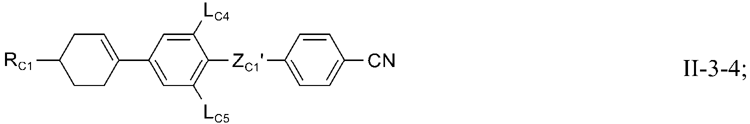 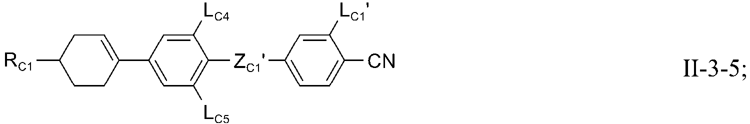 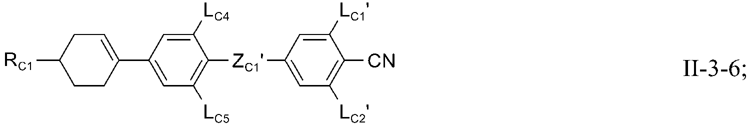 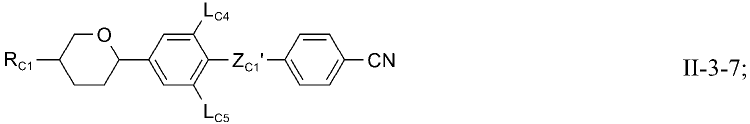 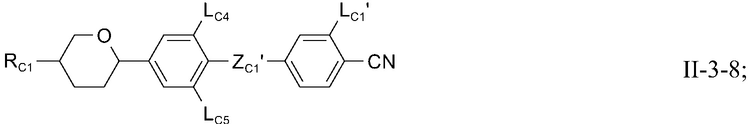 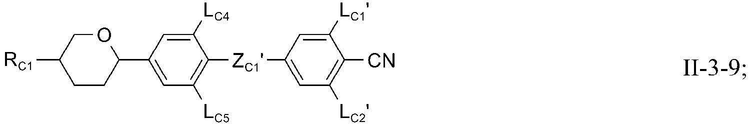 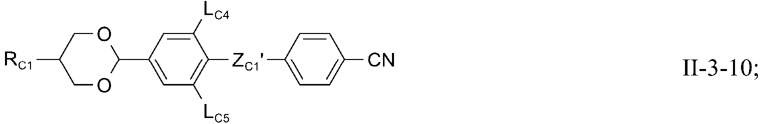 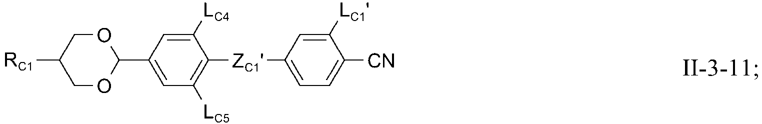 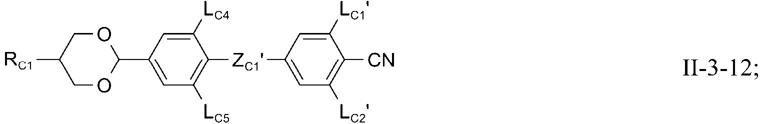 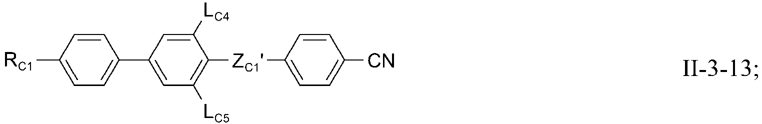 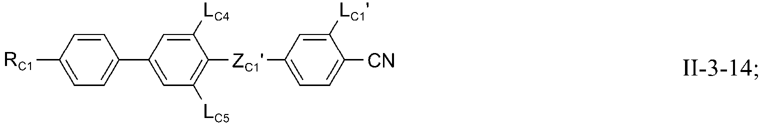 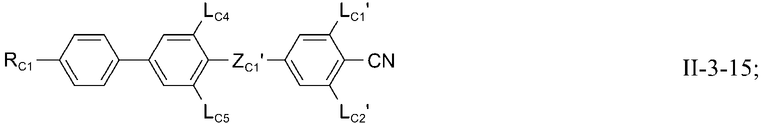 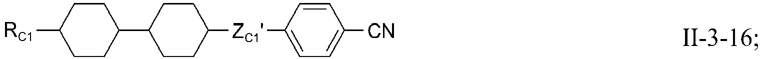 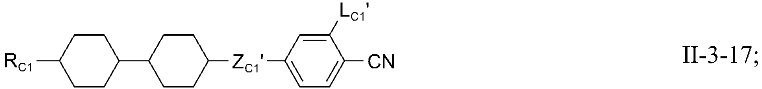 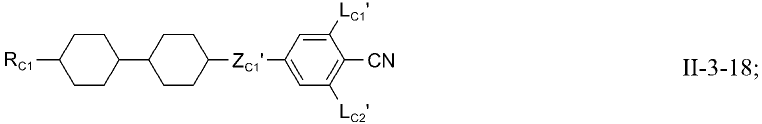 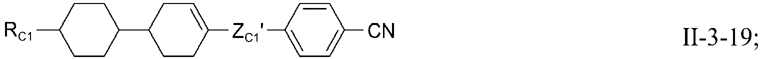 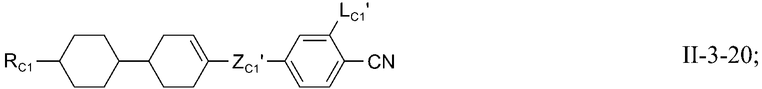 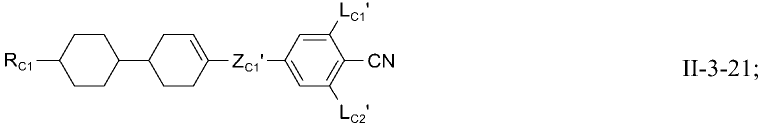 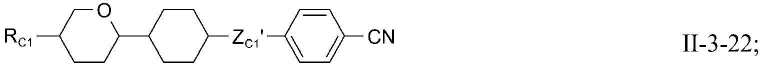 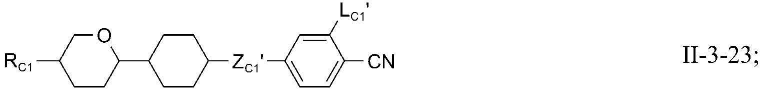 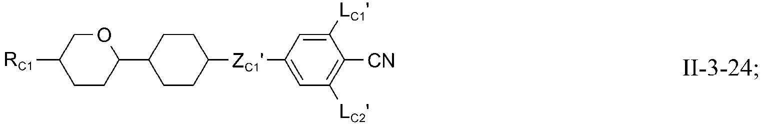 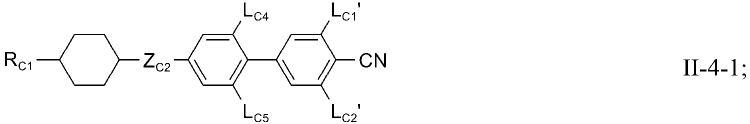 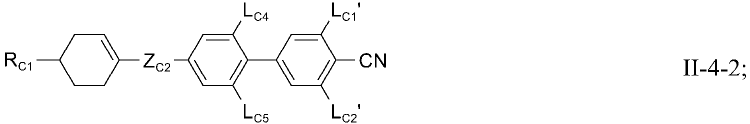 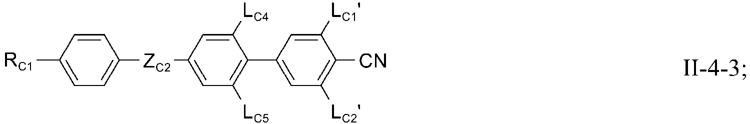 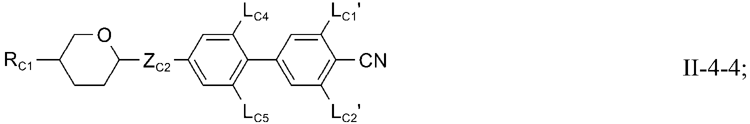 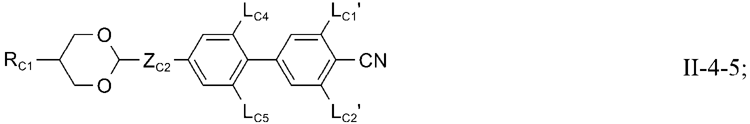 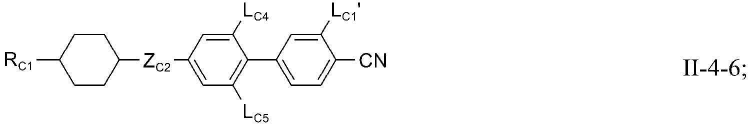 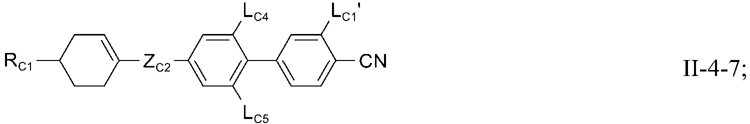 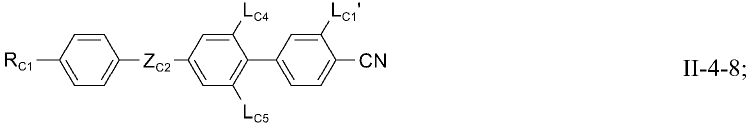 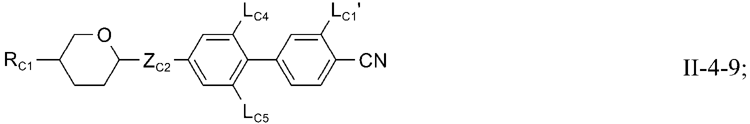 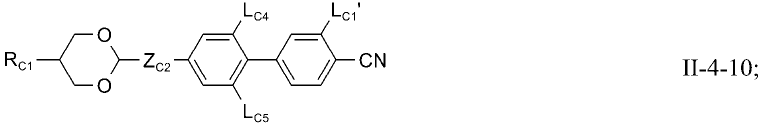 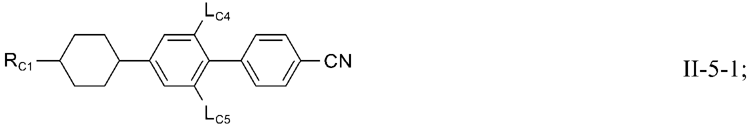 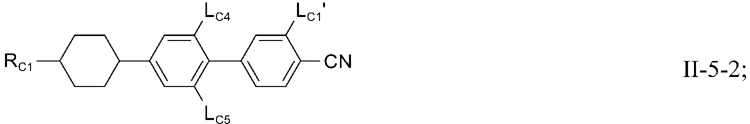 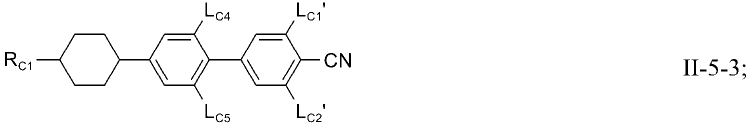 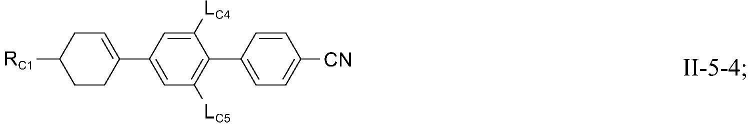 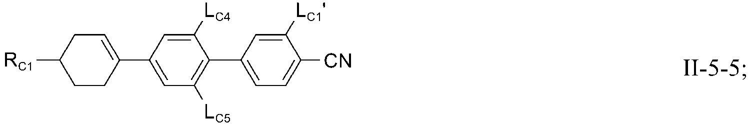 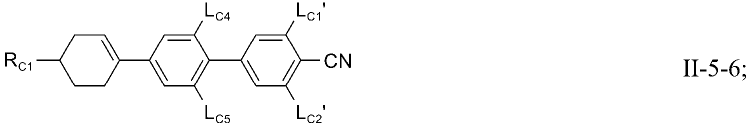 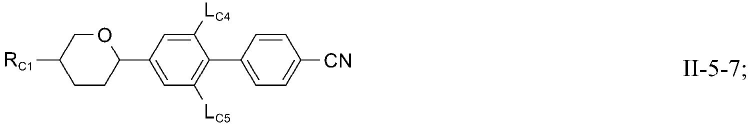 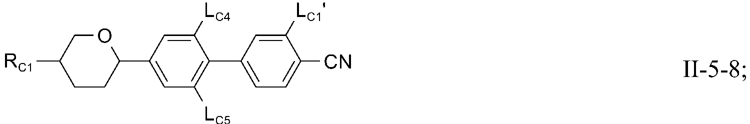 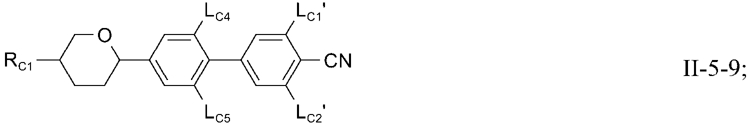 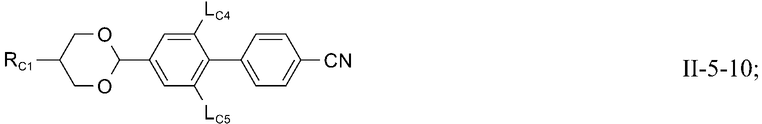 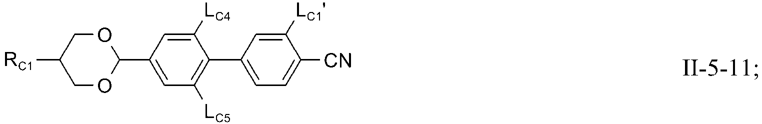 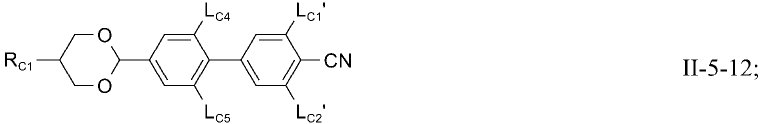 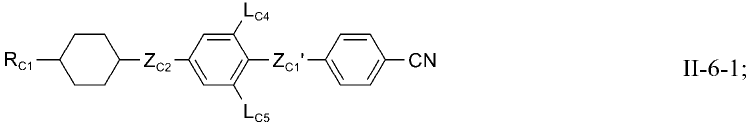 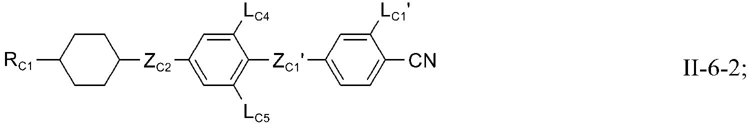 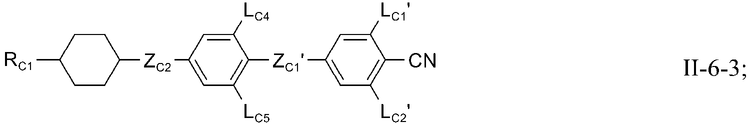 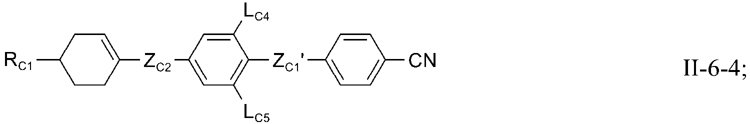 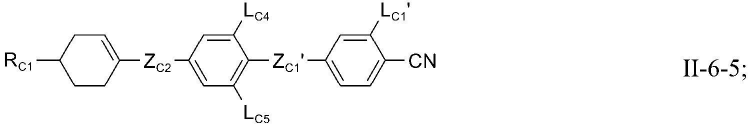 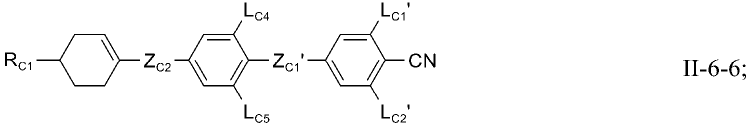 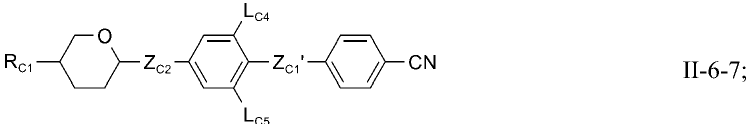 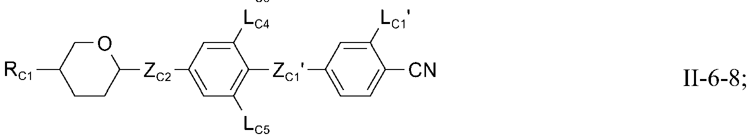 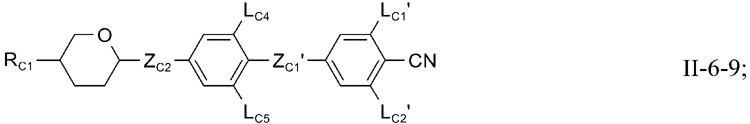 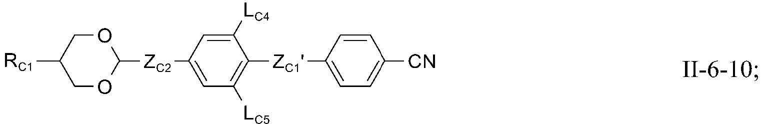 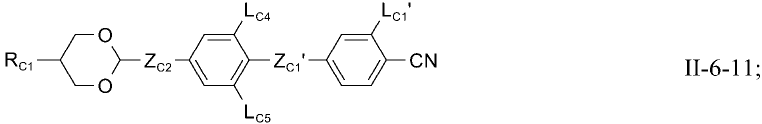 and 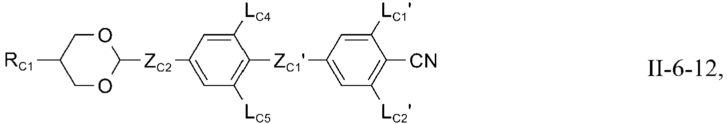
wherein,
L_{T1}', L_{T2}', L_{C1}' and L_{C2}' each independently represents -F, -Cl, -CF₃ or -OCF₃;
L_{T4}', L_{T5}' and L_{T6}' each independently represents -F, -Cl, -CH₃ or -OCH₃; and
L_{C4} and L_{C5} each independently represents -H, -F, -Cl, -CF₃ or -OCF₃.

4. The cholesteric liquid crystal composition according to claim 1, **characterized in that**, the compound of general formula I provides (in percentage by weight) 0.1%-70% of the liquid crystal composition A, the compound of general formula II provides (in percentage by weight) 0.1%-80% of the liquid crystal composition A, the additive amount of the dye provides (in percentage by weight) 0.01%-10% of the cholesteric liquid crystal composition.

5. The cholesteric liquid crystal composition according to claim 1, **characterized in that**, the chiral agent may be any one or a combination of at least two of the following compounds: 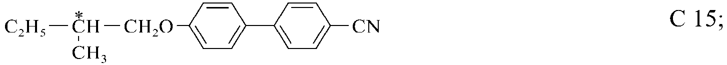 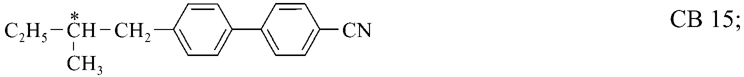 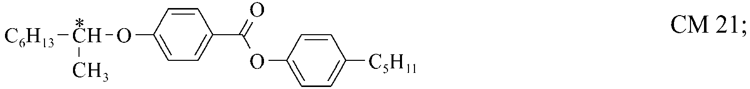 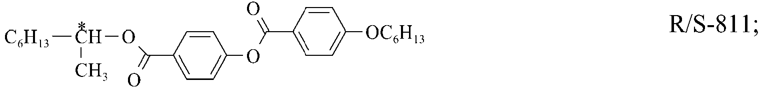 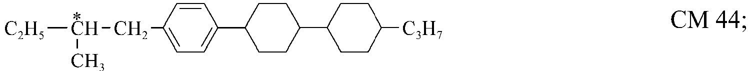 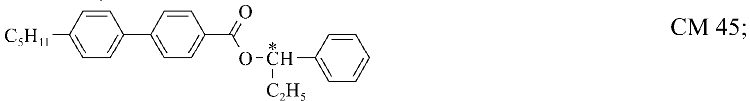 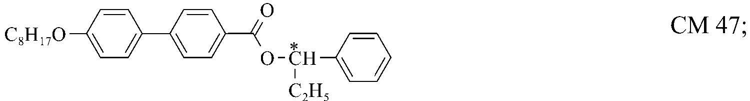 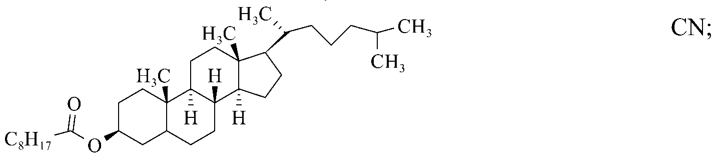 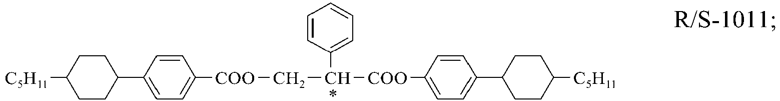 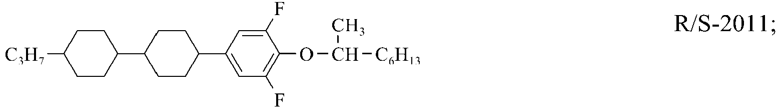 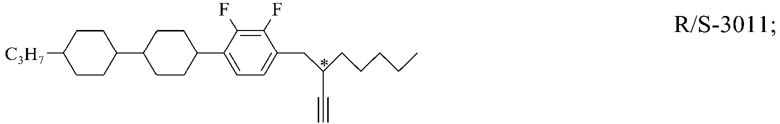 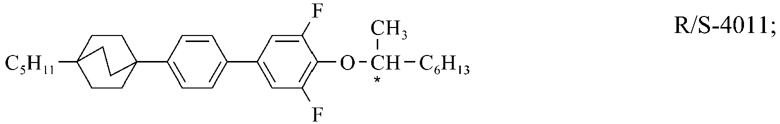 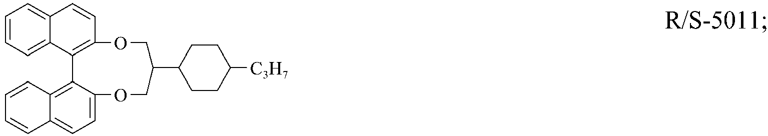 and 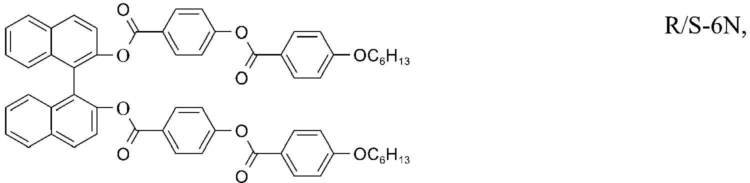 wherein, * represents chiral site.

6. The cholesteric liquid crystal composition according to claim 1, **characterized in that**, the dye is selected from one or a combination of at least two of the following compounds:
| Dye Number | Molecular Structure |
|---|---|
| 1 | 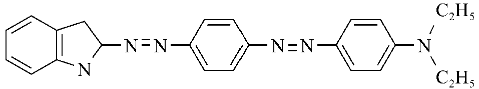 |
| 2 | 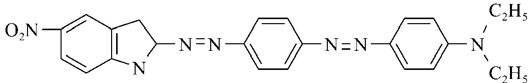 |
| 3 | 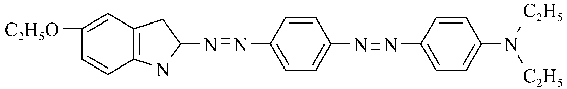 |
| 4 | 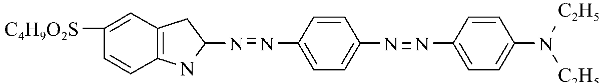 |
| 5 | 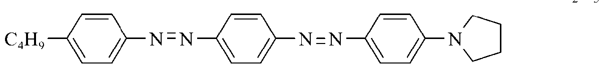 |
| 6 | 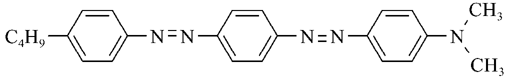 |
| 7 | 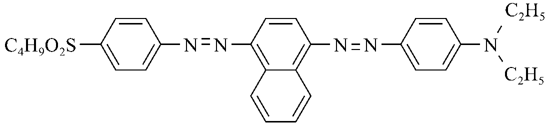 |
| 8 | 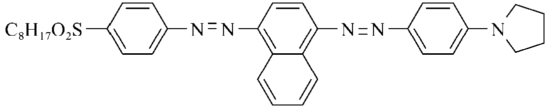 |
| 9 | 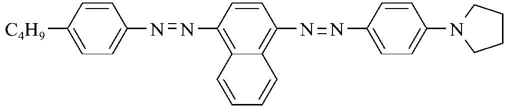 |
| 10 | 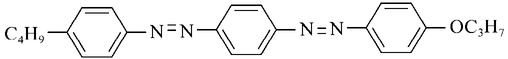 |
| 11 | 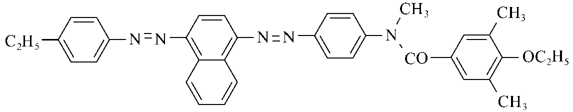 |
| 12 | 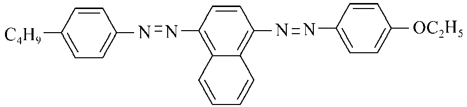 |
| 13 | 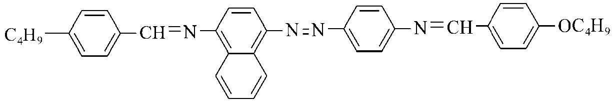 |
| 14 | 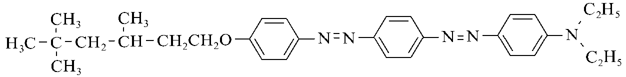 |
| 15 | 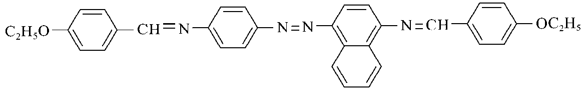 |
| 16 | 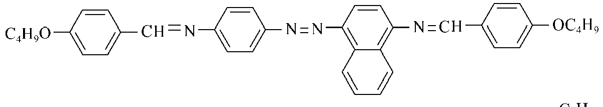 |
| 17 | 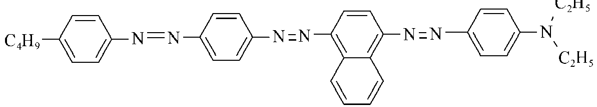 |
| 18 | 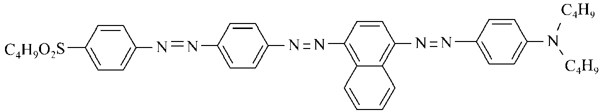 |
| 19 | 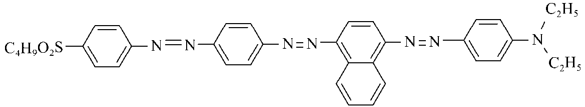 |
| 20 | 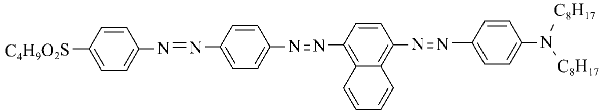 |
| 21 | 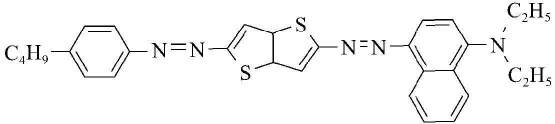 |
| 22 | 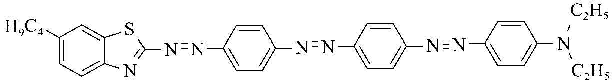 |
| 23 | 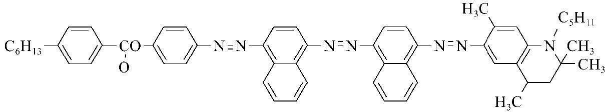 |
| 24 | 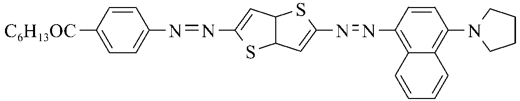 |
| 25 | 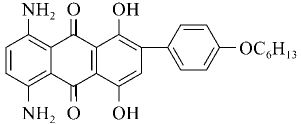 |
| 26 | 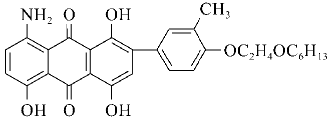 |
| 27 | 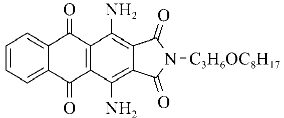 |
| 28 | 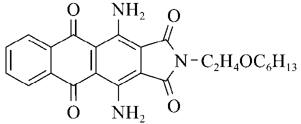 |
| 29 | 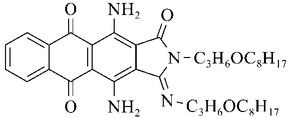 |
| 30 | 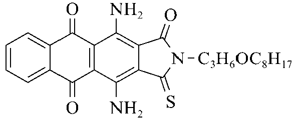 |
| 31 | 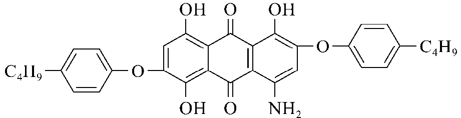 |
| 32 | 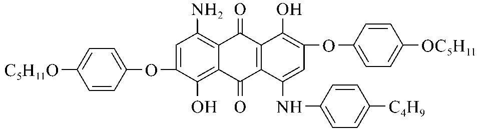 |
| 33 | 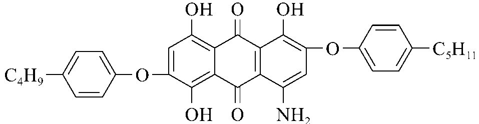 |
| 34 | 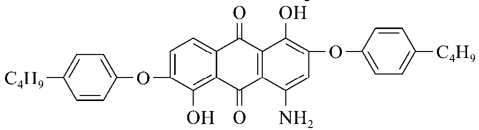 |
| 35 | 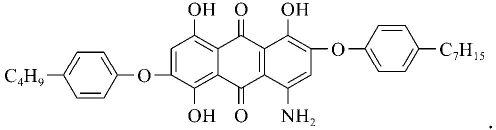 |

7. The cholesteric liquid crystal composition according to claim 1, **characterized in that**, the liquid crystal composition A further comprises at least one compound of general formula M: 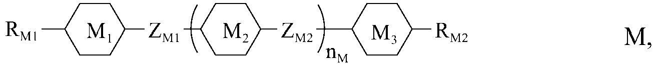 wherein,
R_{M1} and R_{M2} each independently represents C₁₋₁₂ linear alkyl, C₃₋₁₂ branched alkyl, 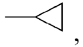 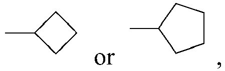 one or more than two nonadjacent -CH₂- in the C₁₋₁₂ linear alkyl and C₃₋₁₂ branched alkyl can each be independently replaced by -CH=CH-, -C=C-, -O-, -CO-, - CO-O- or -O-CO-;
ring 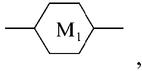 ring 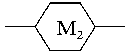 and ring 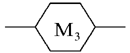 each independently represents 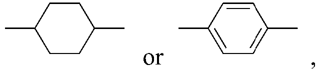 wherein one or more -CH₂- in 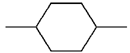 can be replaced by -O-, and one or at most two single bonds in the rings can be replaced by double bond, at most one -H in 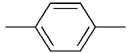 can be substituted by halo;
Z_{M1} and Z_{M2} each independently represents single bond, -CO-O-, -O-CO-, -CH₂O-, -OCH₂-, - CH=CH-, -CH₂CH₂- or -(CH₂)₄-; and
n_{M} represents 0, 1 or 2, wherein when n_{M} = 2, ring 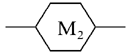 can be the same or different, Z_{M2} can be the same or different.

8. The cholesteric liquid crystal composition according to claim 7, **characterized in that**, the liquid crystal composition A further comprises at least one compound of general formula A-1 and/or general formula A-2: 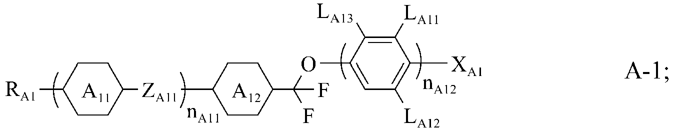 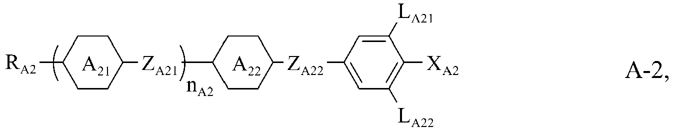 wherein,
R_{A1} and R_{A2} each independently represents C₁₋₁₂ linear alkyl, C₃₋₁₂ branched alkyl, 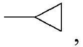 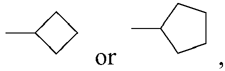 one or more than two nonadjacent -CH₂- in the C₁₋₁₂ linear alkyl and C₃₋₁₂ branched alkyl each is independently replaced by -CH=CH-, -C≡C-, -O-, -CO-, -CO-O- or -O-CO-, and one or more -H in the C₁₋₁₂ linear alkyl and C₃₋₁₂ branched alkyl can each be independently substituted by -F or -Cl;
ring 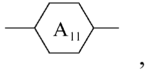 ring 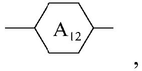 ring 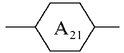 and ring 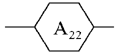 each independently represents 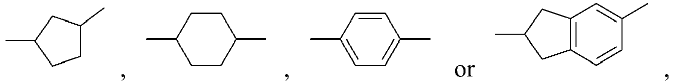 wherein one or more -CH₂- in 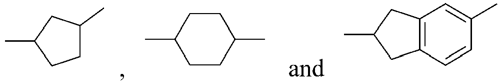 can be replaced by -O-, one or at most two single bonds in the rings can be replaced by double bond, wherein one or more -H in 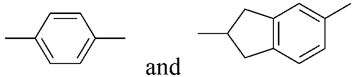 can each be independently substituted by -F, -Cl -or CN, one or more -CH= in the rings can be replaced by -N=;
Z_{A11}, Z_{A21} and Z_{A22} each independently represents single bond, -CH₂CH₂-, -CF₂CF₂-, -CO-O-, -O-CO-, -O-CO-O-, -CH=CH-, -CF=CF-, -CH₂O- or -OCH₂-;
L_{A11}, L_{A12}, L_{A13}, L_{A21} and L_{A22} each independently represents -H, C₁₋₃ alkyl or halo;
X_{A1} and X_{A2} each independently represents halo, C₁₋₅ halogenated alkyl or halogenated alkoxy, C₂₋₅ halogenated alkenyl or halogenated alkenoxy;
n_{A11} represents 0, 1, 2 or 3, when n_{A11} = 2 or 3, ring 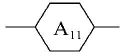 can be the same or different, Z_{A11} can be the same or different;
n_{A12} represents 1 or 2, wherein when n_{A12} = 2, ring 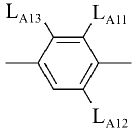 can be the same or different; and
n_{A2} represents 0, 1, 2 or 3, wherein when n_{A2} = 2 or 3, ring 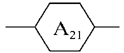 can be the same or different, Z_{A21} can be the same or different.

9. The cholesteric liquid crystal composition according to claim 8, **characterized in that**, the compound of general formula M is selected from a group consisting of the following compounds: 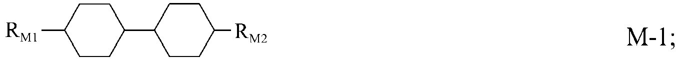 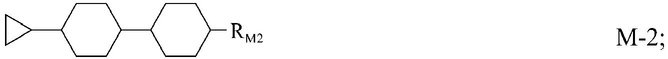 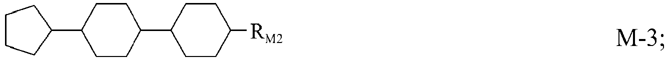 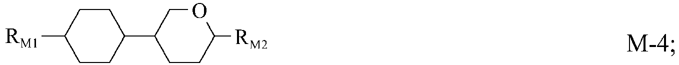 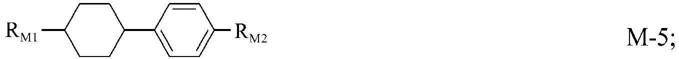 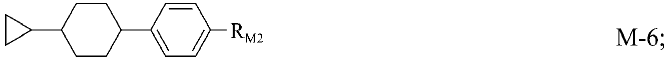 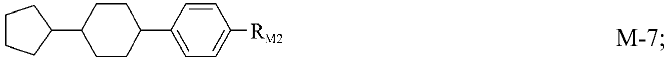 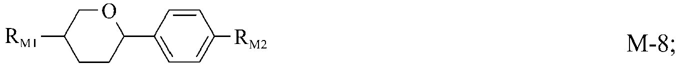 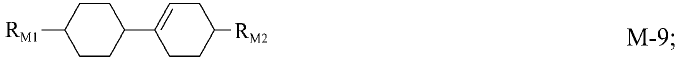 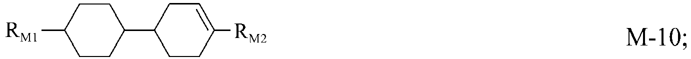 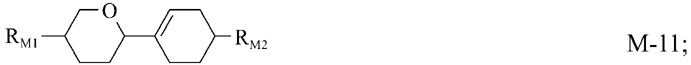 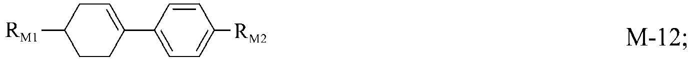 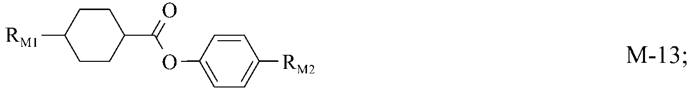 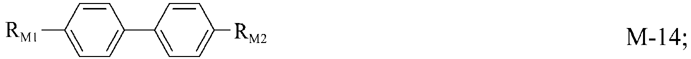 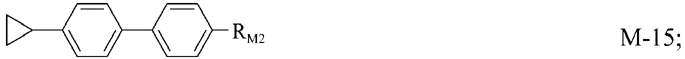 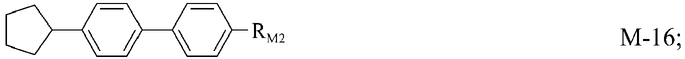 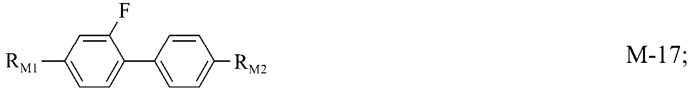 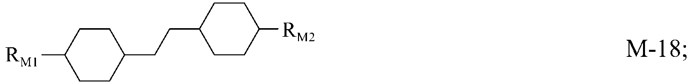 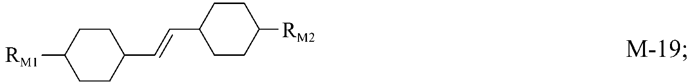 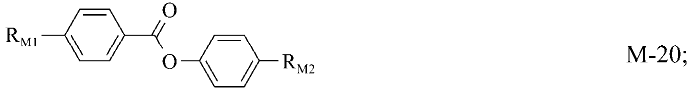 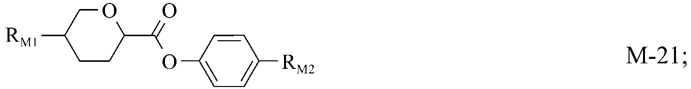 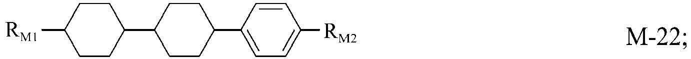 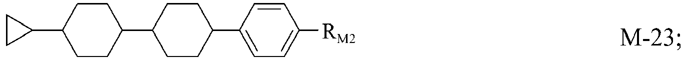 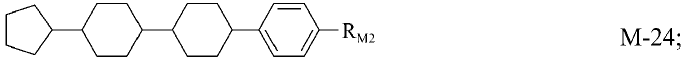 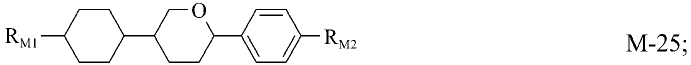 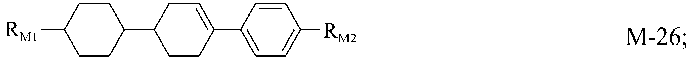 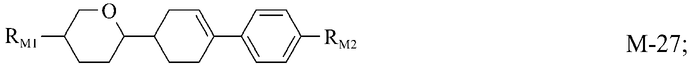 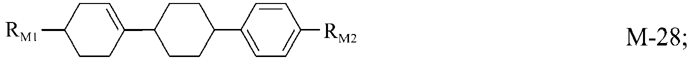 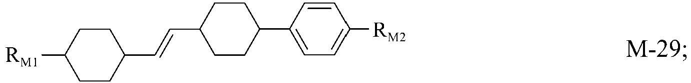 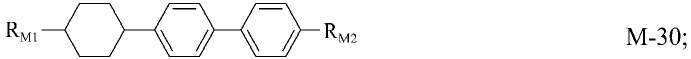 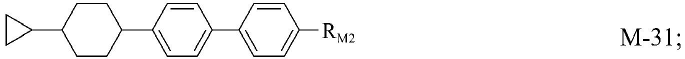 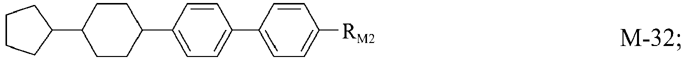 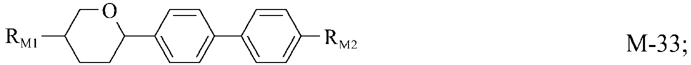 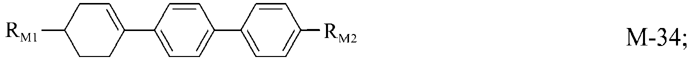 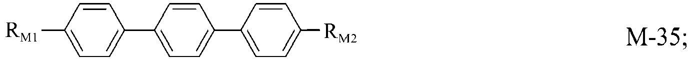 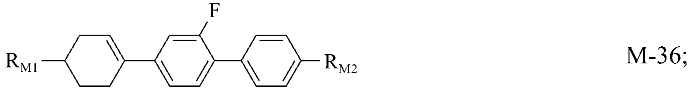 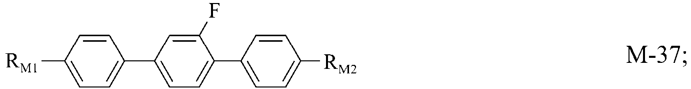 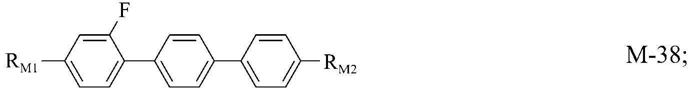 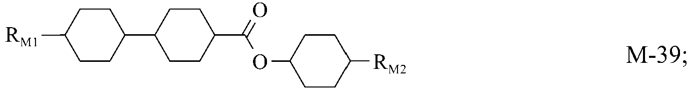 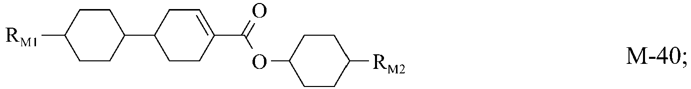 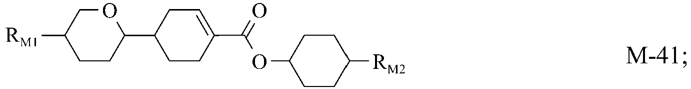 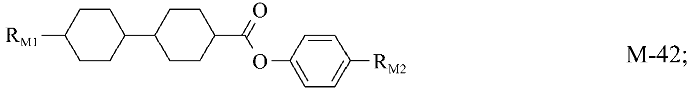 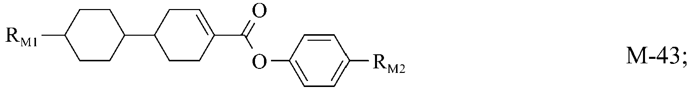 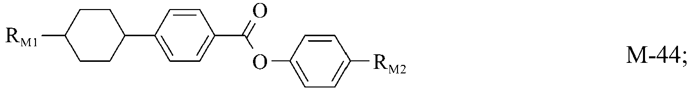 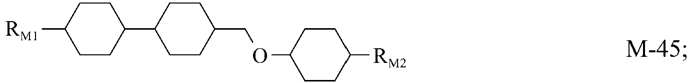 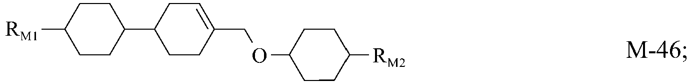 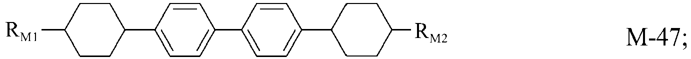 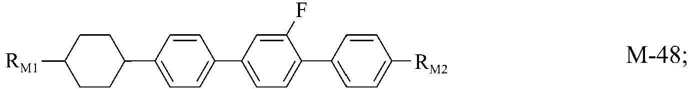 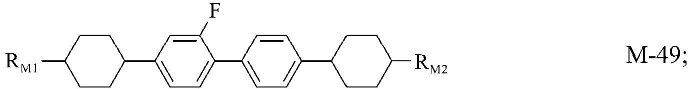 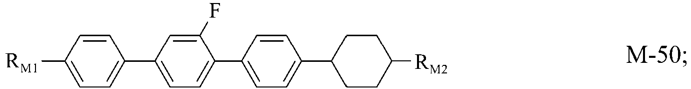 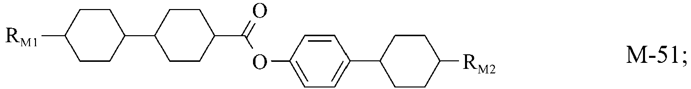 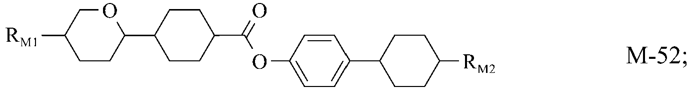 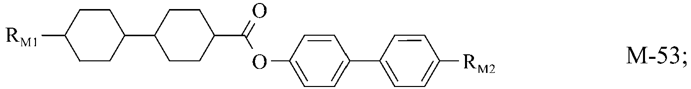 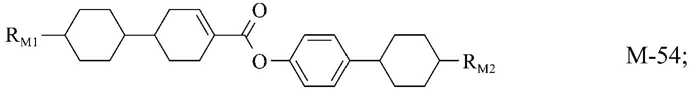 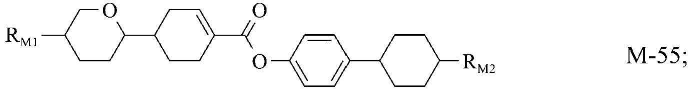 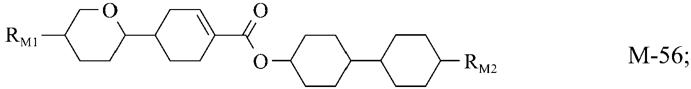 and 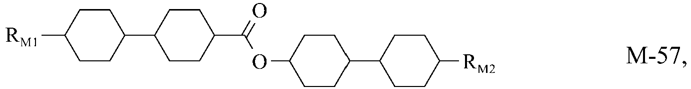
the compound of general formula A-1 is selected from a group consisting of the following compounds: 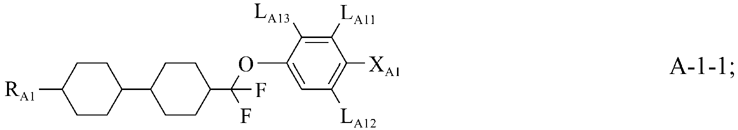 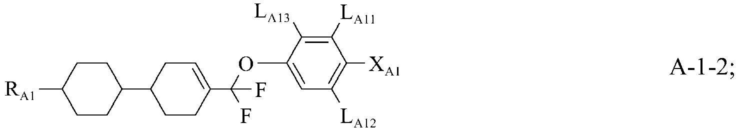 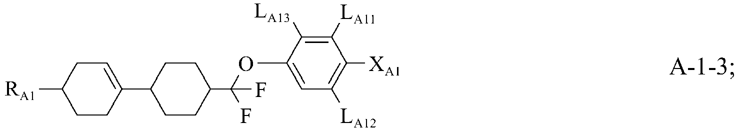 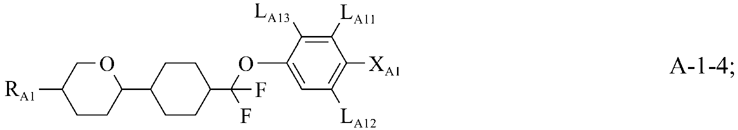 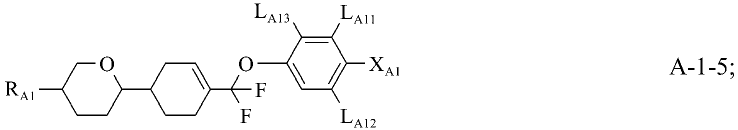 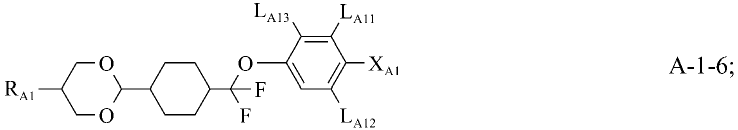 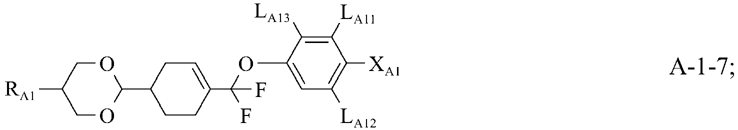 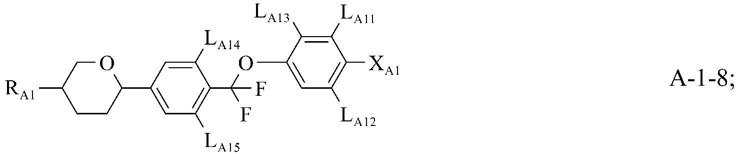 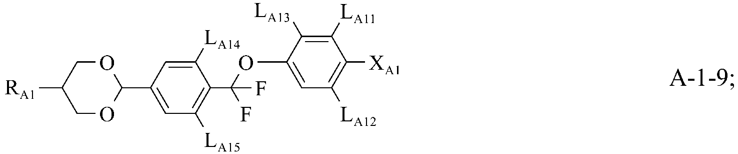 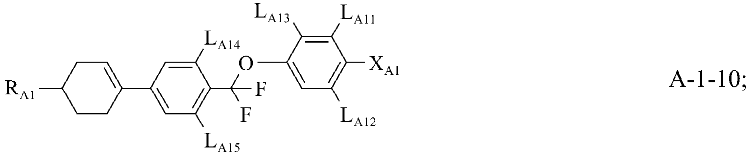 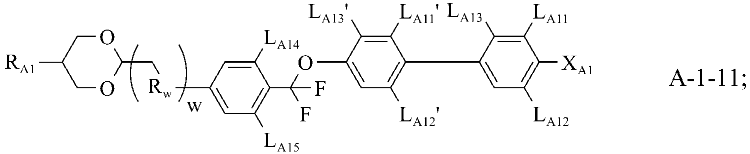 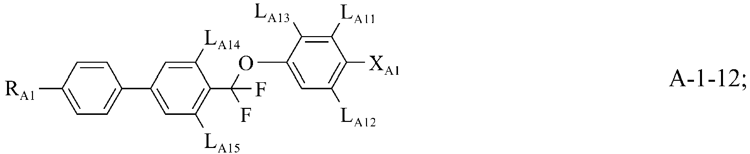 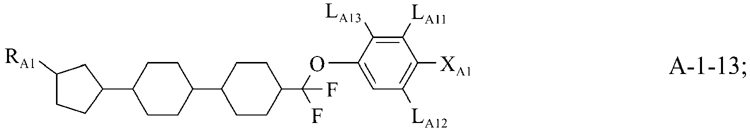 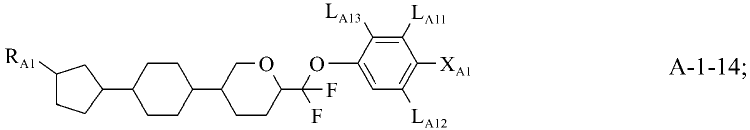 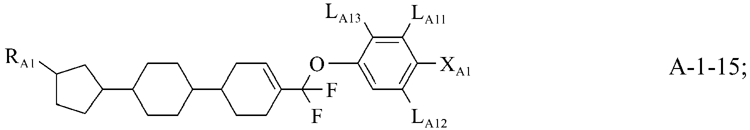 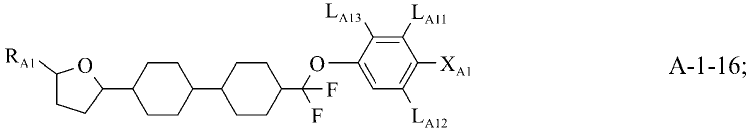 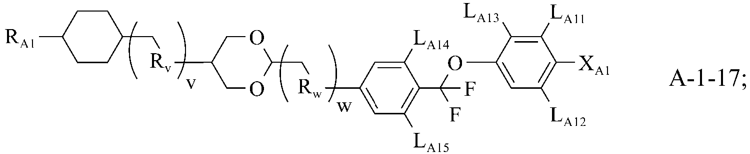 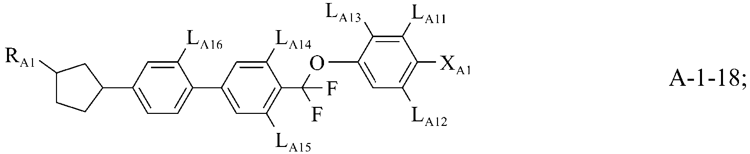 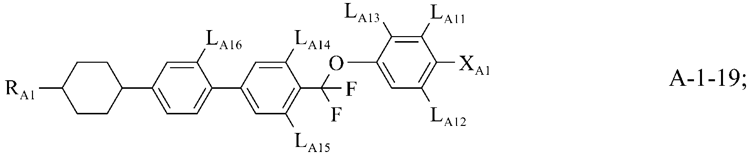 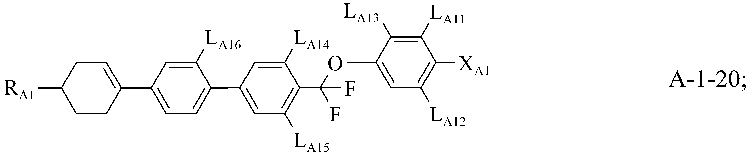 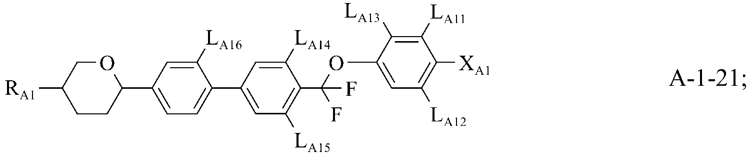 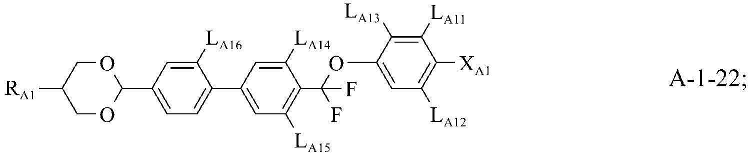 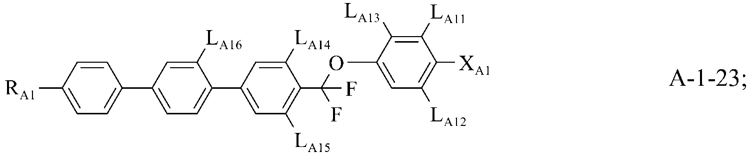 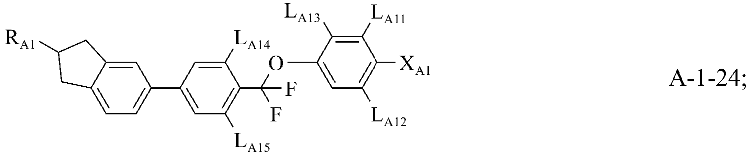 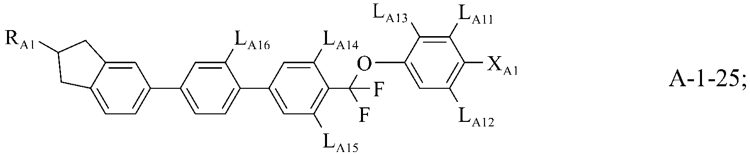 and 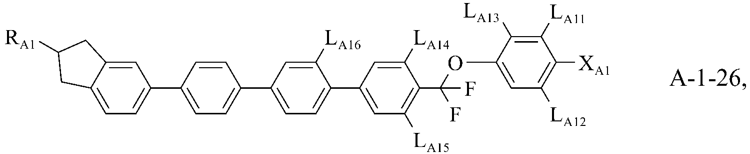
the compound of general formula A-2 is selected from a group consisting of the following compounds: 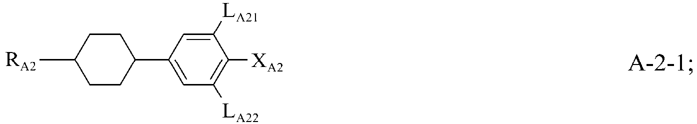 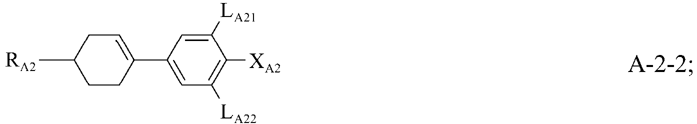 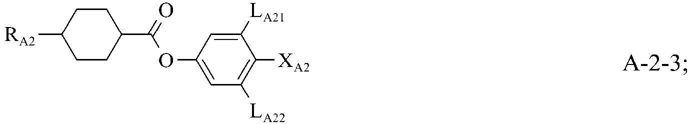 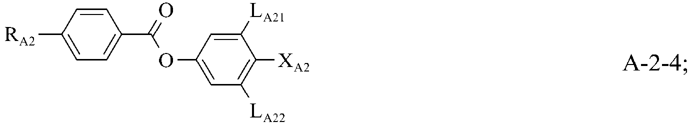 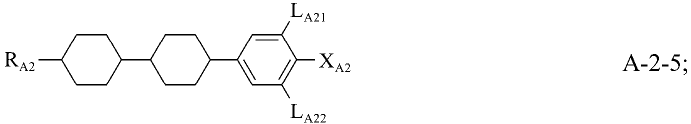 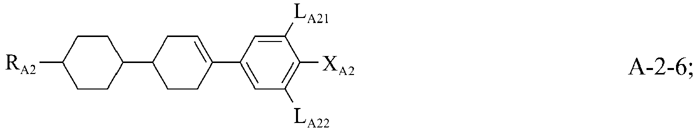 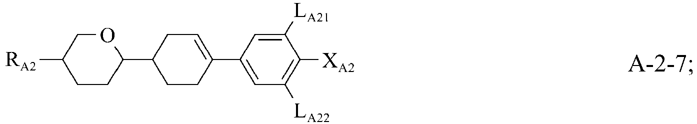 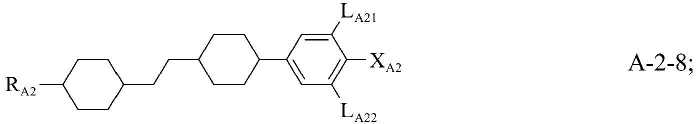 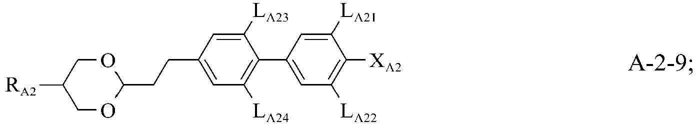 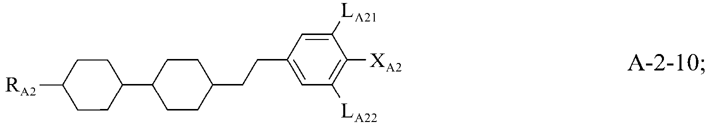 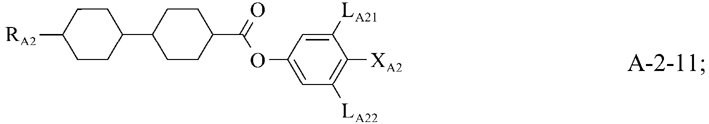 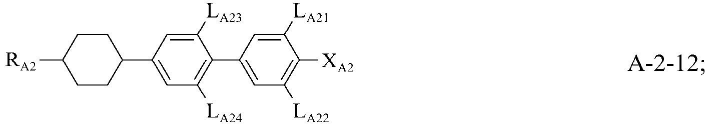 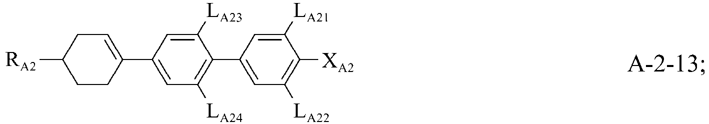 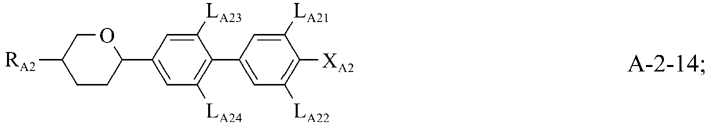 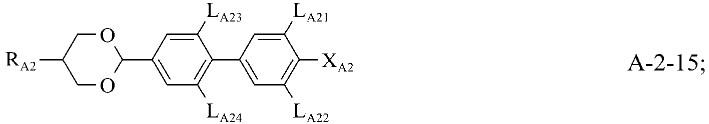 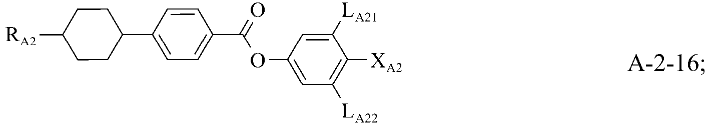 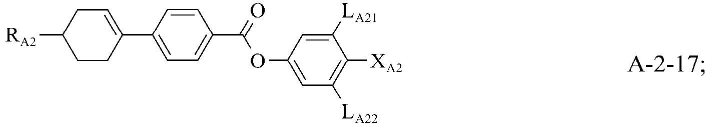 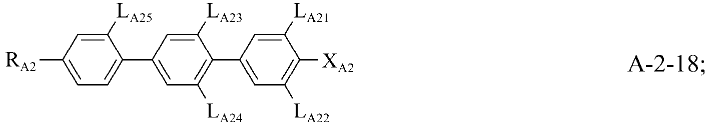 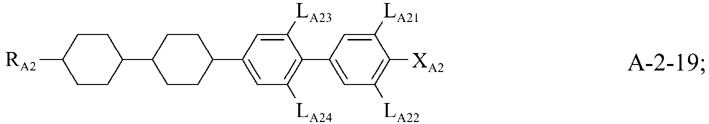 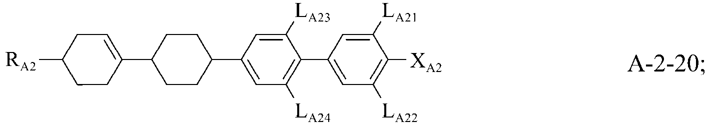 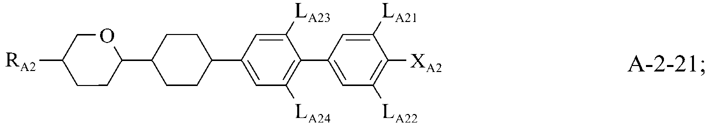 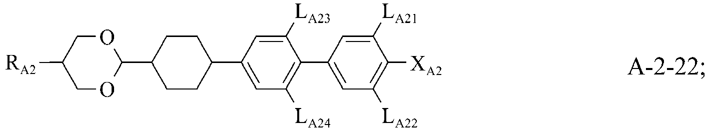 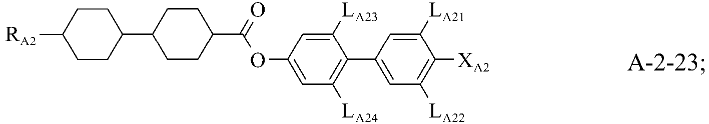 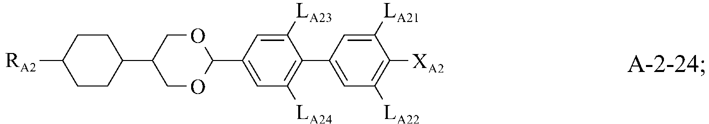 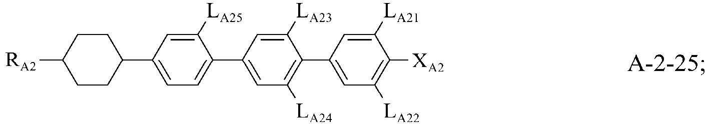 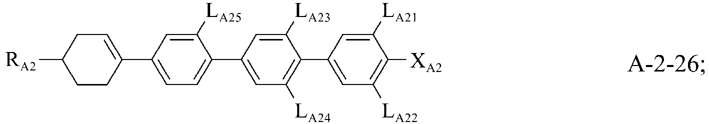 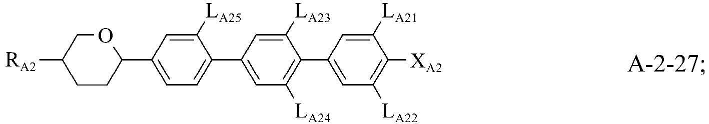 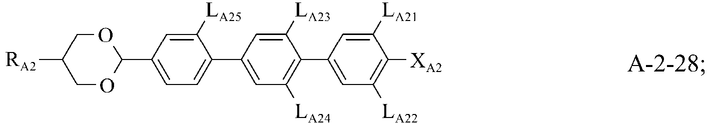 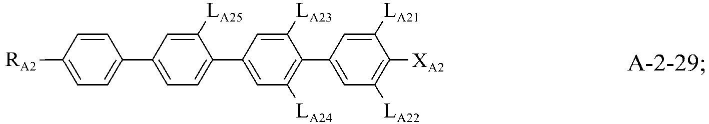 and 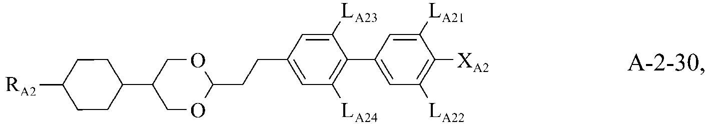
wherein,
R_{M1} and R_{M2} each independently represents C₁₋₁₂ linear alkyl, C₃₋₁₂ branched alkyl, one or more than two nonadjacent -CH₂- in the C₁₋₁₂ linear alkyl and C₃₋₁₂ branched alkyl can each be independently replaced by -CH=CH-, -C≡C-, -O-, -CO-, -CO-O- or -O-CO-;
Rᵥ and R_{w} each independently represents -CH₂- or -O-;
L_{A11}, L_{A12}, L_{A11}', L_{A12}', L_{A14}, L_{A15}, L_{A16}, L_{A21}, L_{A22}, L_{A23}, L_{A24} and L_{A25} each independently represents -H or -F;
L_{A13} and L_{A13}' each independently represents -H or -CH₃;
X_{A1} represents -F, -CF₃ or -OCF₃;
v and w each independently represents 0 or 1; and
X_{A2} represents -F, -CF₃, -OCF₃ or -CH₂CH₂CH=CF₂.

10. A liquid crystal display device comprising the cholesteric liquid crystal composition of any one of claims 1-9.

11. Use of the cholesteric liquid crystal composition of any one of claims 1-9 in a liquid crystal display panel.
